# EUROPEAN PATENT APPLICATION

(11) **EP 1 482 404 A2**
(43) Date of publication of application: **01.12.2004**
(21) Application number: 04252127.8
(22) Date of filing: 08.04.2004
(51) Int. Cl.: G06F 9/40

(54) **Systems, methods, and articles of manufacture for aligning service containers**

(30) Priority: 11.04.2003 US 411157
(71) Applicant: Sun Microsystems, Inc., Santa Clara, California 95054 (US)
(72) Inventor: Radhakrishnan, Rakesh, Ashburn, VA 20147 (US)
(74) Representative: Beresford, Keith Denis Lewis

(57) **Abstract**

Methods and systems consistent with certain aspects related to the present invention provide a process for aligning service containers in a system environment. In one aspect of the invention, the process may include receiving first event data from an application service container providing application services during runtime of a web service and receiving second event data from a system service container providing system services during runtime of the web service. The process may also dynamically align the system and application services such that a predetermined service level associated with the web service is met during runtime based on at least one of the first and second event data.

## Description

### Field of the Invention

This invention relates to open network environments and, more particularly, to methods, systems and articles of manufacture for dynamically aligning service containers distributed across a network fabric.

### Background of the Invention

The advent and growth of the Internet enable businesses to offer services to an increasing number of distributed customers, partners, employees, and other business entities. Businesses continue to harness various technologies associated with distributed systems to develop and provide these services. One type of technology that is gaining popularity are web services. A web service is a system functionality (e.g., an application, a business service, etc.) that is accessible over the Internet, an Intranet, and even an Extranet using standard web-based protocols (e.g., Hyper Text Transfer Protocol (HTTP)) and extensible Markup Language (XML) interfaces and messages. Accordingly, web services are an ideal way for businesses to provide services in heterogeneous environments where a consumer of a web service may be a user operating a desktop, an application program, or even another web service hosted on any number of different platforms.

Although web service technologies allow businesses to publish and retrieve services through the Internet, problems evolve when trying to customize services for a consumer. Accordingly, smart web services are evolving that understand consumer contexts associated with the services. A consumer context refers to information that a web service needs to know about the consumer to provide customized services. For example, consumer contexts may include, consumer identity, consumer trends associated with the service or related services, consumer location, and other types of consumer profile information.

Because businesses may develop a smart web service using proprietary formats, there exits the problem of sharing these contexts with other services provided by other businesses. To address these sharing problems, business are developing open architectures that include interoperable web services that are designed to work with other web services regardless of the type of tool used to design the service and the type of platform that operates the service. These open architectures typically include servers that host application server containers that provide runtime environments for the services operated within the architecture. Application service containers perform various low level processes, such as resource management, transaction management, state management, and security management, allowing application programmers to focus on high level business processes, such as presentation and authentication logic, etc. The application service containers may use context information associated with users and web services to automatically configure and customize web services offered by the system hosting the containers.

While application service containers aid application developers with creating and maintaining web services, service architectures are also moving toward automating service delivery to optimize efficiency, resource utilization, and availability. Accordingly, developers are contemplating architectures that use system service containers that are designed to aid system developers in administrating web service enterprises. System service containers provide system services that reduce the complexities associated with provisioning services, such as resource change management, problem management, operating system level change management, etc. Using system service containers, new age open net architectures allow system administrators to concentrate on higher level issues, such as overall network and/or storage sizing, managing business rules, etc., rather than focusing on installing, uninstalling, reinstalling, software between hardware based on changes in service requirements.

Therefore, there exits multiple frameworks of technologies that allow businesses to provide context based smart web services and automated system service management that dynamically adjust the capabilities of an architecture's resources to efficiently deliver these services to consumers. Individually, these frameworks provide limited benefits to developers and/or consumers alike. Collectively, however, these frameworks may provide a multitude of benefits that will enable businesses to not only offer context based services, but also dynamically manage the resources that provide these services. Unfortunately, conventional architectures do not have the infrastructure or technologies that effectively align these frameworks together to provide these added benefits.

### SUMMARY OF THE INVENTION

Methods and systems consistent with certain aspects related to the present invention provide a container alignment engine that orchestrates the alignment of application and system service containers to provide a distributed environment that automatically manages application and system management services.

In one aspect of the invention, a process is provided for aligning service containers in a system environment. The process may include receiving first event data from an application service container providing application services during runtime of a web service and receiving second event data from a system service container providing system services during runtime of the web service. The process may also dynamically align the system and application services such that a predetermined service level associated with the web service is met during runtime based on at least one of the first and second event data.

In another aspect of the invention, a process is provided for deploying a container alignment environment including service containers distributed across resources in the environment that provides one or more services to a consumer. The deployment process may include defining one or more macro-level service patterns representing predetermined resource configurations in the system environment and defining, based on the defined one or more macro-level patterns, one or more micro-level service patterns representing additional resource configurations within a corresponding macro-level service pattern. Also, the process may involve defining one or more application service metrics associated with an application service container distributed across the resources, and one or more system service metrics associated with a system service container distributed across the resources. In addition to the metrics, the deployment process may also include defining one or more container rules that initiate an action based on a detected event by at least one of the application service container and the system service container, and providing the one or more services to the consumer, such that the one or more container rules are used to maintain a predetermined service level for the one or more services.

Additional aspects of the invention will be set forth in part in the description which follows, and in part will be obvious from the description, or may be learned by practice of the invention.

### BRIEF DESCRIPTION OF THE DRAWINGS

It is to be understood that both the foregoing general description and the following detailed description are exemplary and explanatory only and are not restrictive of the invention, as claimed. The accompanying drawings, which are incorporated in and constitute a part of this specification, illustrate several embodiments of the invention and together with the description, serve to explain the principles of the invention. In the drawings:

Figure 1 is a block diagram of an exemplary system model consistent with certain aspects related to the present invention;

Fig. 2 is a block diagram of another exemplary system model consistent with certain aspects related to the present invention;

Fig. 3 is a block diagram of an exemplary container alignment engine system model consistent with certain aspects related to the present invention;

Fig. 4 is a block diagram of an exemplary system environment consistent with certain aspects related to the present invention;

Fig. 5 is a block diagram of exemplary environments included in the system environment shown in Fig. 4, consistent with certain aspects related to the present invention;

Fig. 6 shows block diagrams of various resource configurations consistent with certain aspects related to the present invention;

Fig. 7 is a block diagram of an exemplary system resource consistent with certain aspects related to the present invention;

Fig. 8 is a flowchart of an exemplary CAE deployment process consistent with certain aspects related to the present invention;

Figs. 9A-9I are block diagrams of exemplary macro-level service patterns consistent with certain aspects related to the present invention;

Fig. 10 shows an exemplary application service container schema consistent with certain aspects related to the present invention;

Fig. 11 shows an exemplary system service container schema consistent with certain aspects related to the present invention;

Fig. 12 is a flowchart of an exemplary CAE process consistent with certain aspects related to the present invention; and

Fig. 13 is a block diagram of an exemplary system security model consistent with certain aspects related to the present invention.

### DETAILED DESCRIPTION

The following description of embodiments of this invention refers to the accompanying drawings. Where appropriate, the same reference numbers in different drawings refer to the same or similar elements.

Methods, systems, and articles of manufacture consistent with certain aspects related to the present invention provide a container alignment engine that orchestrates the alignment of application and service containers in a distributed environment that dynamically provides customized services. Certain aspects related to the present invention are related to open network architectures that provide context based web services to consumers and dynamically manage the resources that provision these services. Although many different types of web service architectures may be implemented using aspects of the present invention, for exemplary purposes, the functionality of the container alignment features of the present invention are described with respect to a web service architecture based on the Sun® Open Net Environment (ONE) and the N1 system architectures of Sun Microsystems, Inc.

### Exemplary Sun ONE Model

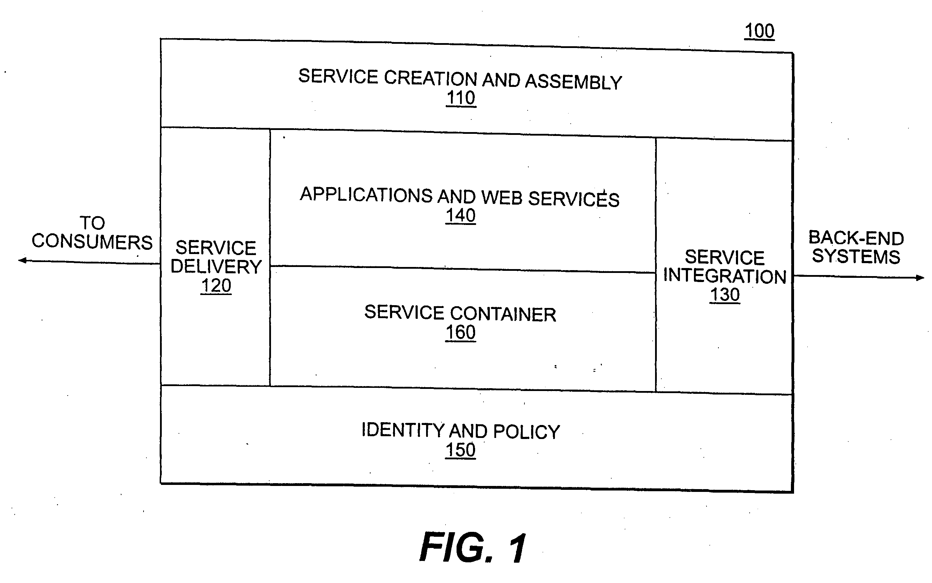

The Sun ONE architecture is based on a highly scalable framework that provides services on demand in heterogeneous environments. Fig. 1 is a block diagram of an exemplary model 100 associated with a Sun ONE web service architecture consistent with certain features related to the present invention. As shown, model 100 includes a service creation and assembly block 110, a service delivery block 120, a service integration block 130, an applications and web services block 140, an identity and policy block 150, and a service container block 160.

Service creation and assembly block 110 includes facilities that create discrete services (e.g. micro services) and assembles them into composite services (e.g., macro services). A micro service may represent a service component that produces data (e.g., result data, content information, logic results, etc.) that is specific to a particular type of service. A macro service may represent a courser-grained service that may include one or more micro services. A macro service uses the one or more micro services, business rules, policies, and/or context information to perform business services for a consumer.

Service delivery block 120 includes facilities that provide basic connection, location, discovery, and communication functions for exchanging information with consumers of the services provided by model 100. Service integration block 130 may include facilities that enable services to access other services, internal or external to model 100, and resources, such as databases, files, directories, and legacy applications. Applications and web services block 140 represents the web services and applications that are deployed on any type of platform within model 100. Identity and policy block 150 includes facilities that manage identity, security, and policy functions in model 100.

Service container block 160 represents a runtime environment for the services (e.g., micro and macro services) and provides data persistence and state management functions. Container block 160 may also include process management facilities that manage service workflow and event processing during service provisioning operations. The types of service containers included in service container block 160 may be based on the type of platform used to host the services in block 140. The platform may reside on an operating system or virtual machine that provides access to hardware, storage, networks, etc. For example, the Sun ONE architecture may use a service container based on the Java® 2 Platform Enterprise Edition (J2EE) platform from Sun Microsystems, Inc.

The J2EE platform allows applications to integrate many different types of client applications, such as desktop applications, XML and Hypertext Markup Language (HTML) applications, etc. Further, J2EE applications may integrate backend systems, such as Relational Database Management Systems (RDBMS), Customer Relations Management (CRM) and Enterprise Resource Planning (ERP) systems, etc. The J2EE platform provides standard Application Programming Interfaces (APIs) for XML information that provide features used by the Sun ONE architecture to provide services on demand. Moreover, the J2EE platform minimizes the complexities associated with developing applications development through redeployable components.

Components represent functional software units, such as code written in the Java programming language provided by Sun Microsystems, Inc., that provide standard functions, include APIs, and are easily developed and deployed for specific business purposes, such as those associated with a macro service. Components are assembled into a J2EE application with related object-oriented classes and files, and may communicate with other components. Further, components are installed in particular containers that are the interface between a component and low-level platform specific functionalities that support the component. Accordingly, before a component is executed, it is assembled into a J2EE application and deployed within a specific container. Exemplary components included in the J2EE platform include client components (e.g., application clients, applets, etc.), web components (e.g., Java Servlet and JavaServer Pages® (JSP) components), and business components (e.g., Enterprise JavaBeans® (EJB) components).

Client components run on a client machine and are used to communicate with web and/or business components that are located in a server machine, such as a J2EE server machine. Servlets in a web component are classes that dynamically process requests and generate responses. JSPs are text-based documents that include static content and some programming code that generates dynamic content. When a JSP is downloaded, a servlet may execute the code in the JSP and generate a corresponding response. Business components include business code (logic) that performs functions associated with particular business domains, such as banking, retail, financing, etc. EJB business components may receive and send data from/to client applications, and accesses and write data from/to an information system tier (e.g., database systems).

There may be different types of containers that are used in a J2EE platform including a web container that manages the execution of JSP and Servlet components (e.g., web components), an EJB container the manages the execution of EJBs for an application (e.g., business components), and an application client container that manages the execution of application client components. Accordingly, containers that support the J2EE components provide standard services, such as web services (e.g., XML registry access, XML data processing, XML, messaging, etc.), communication services (e.g., Remote Method Invocation (RMI) protocols), connection services, and Internet based services. Platforms that conform to the Sun ONE architecture may use J2EE conformant service containers (i.e., an Application Server Containers (ASCs)) that may perform the functions of the service container block 160 in Fig. 1, but also may perform some of the functions associated with service delivery block 120, and service integration block 130.

In one aspect of the invention, an ASC may represent various types of service containers, such as an application service container, a web container, an integration service container, etc., associated with Sun ONE infrastructure architecture solutions including, application servers, portal servers, web servers, integration servers, content management servers, Digital Asset Management (DAM) servers, identity servers, directory servers, etc.

An application server may be configured to manage, develop, and deploy web and application services to consumers. A portal server may be configured to securely deliver information and services to, and receive information from, consumers operating on different platforms. This includes consumers operating wireless devices, desktops, and other machines running different types of operating systems. Web servers may be configured to provide various web-based content and/or information for the services managed by the application server. An integration server is configured to interconnect applications (e.g., legacy and web applications) and services (e.g., smart web services) into a business workflow process to allow the application server to provide a service to a consumer. The integration server may coordinate heterogeneous business applications using business processes that represent how an enterprise is to provide business services to its consumer. The integration server is generally associated with the facilities included in the service integration block 130 of model 100 shown in Fig. 1. The content management server manages the delivery and generation of content that may be used throughout web service enterprise and by various services operating at different platforms. DAM servers are configured to manage the digital rights associated with digital assets, such as music, videos, advertisements, on-line art, etc. An identity server is used by the portal server to enforce access policies and control access to services provided by the enterprise. Further, the identity server may manage access based on roles that are mapped to the polices to configure custom made services for consumers. A directory server may be configured to provide directory services, such as associating attributes with objects to allow efficient access to information maintained in storage, such as Lightweight Directory Access Protocol (LDAP) databases.

An ASC may include virtual pluggable container software units that may be dynamically added, deleted, modified, etc., to automatically provide various application level functionalities. These pluggable units may manage connection pooling, persistence, authentication techniques (e.g., protection of domains within an environment), distributed transactions, messaging, and session and state synchronization functions associated with services and resources that provide the services. Accordingly, an ASC automatically handles the services associated with the above managed functions (e.g., protocol conversion, workflow management, etc.) when service requirements need to be addressed during runtime.

### Exemplary N1 Model

The N1 architecture is based on the perspective that a "system" is not simply a combination of processing, memory, network, and storage resources that operate together to support a single application, but rather is a network of such resources that are managed as a single "system." This perspective allows the N1 architecture to manage a multitude of distributed computers, storage systems, and network hardware to deliver services to consumers by defining a fabric operating environment that encompasses all of these resources. The N1 architecture concentrates on managing the deployment of services by dynamically adjusting resource usage based on Service Level Agreements (SLAs), business goals, etc. An SLA is a construct developed by a user (e.g., system developer) that defines a level of service for a corresponding resource (e.g., computer, processing device, etc.).

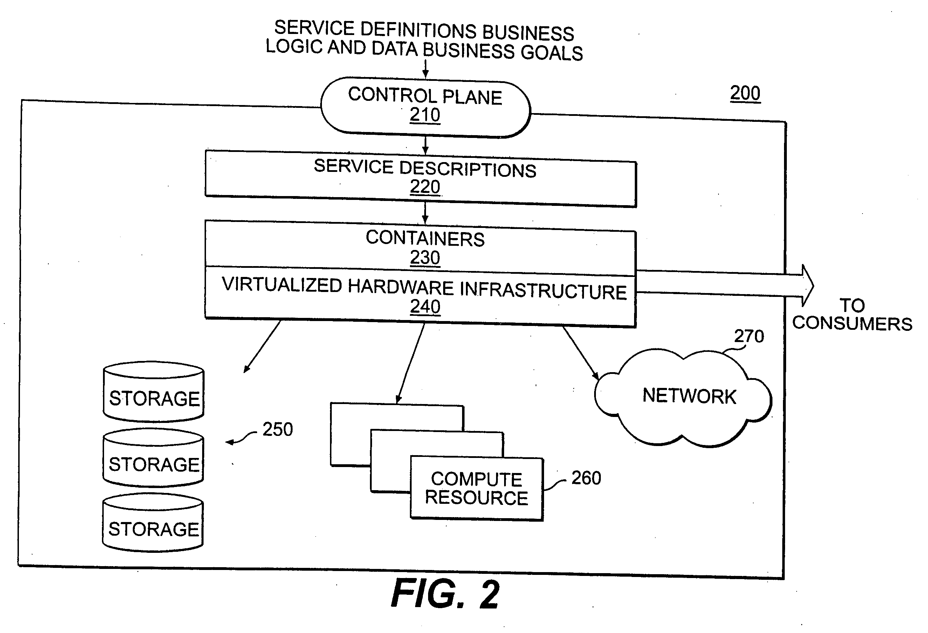

Fig. 2 shows a block diagram of an exemplary N1 architecture model 200 consistent with certain aspects of the invention. As shown, model 200 includes a control plane 210, service descriptions 220, containers 230, virtualized hardware infrastructure 240, virtualized software images representing storages 250, compute resources 260, and network 270.

Control plane 210 is a mechanism that translates business objectives into N1 objects. For example, developers provide service definitions, business logic and data, and/or business goals to control plane 210 for translation into objects that the fabric operating environment uses to dynamically provision services that meet the business goals. Service descriptions 220 describe the infrastructure and processes associated with each service provided by the fabric operating environment. Containers 230 host business logic and may operate in hardware-based containers, such as application servers. The fabric operating environment uses its resources to maintain control over each container 230 such that multiple containers running on a single platform meet corresponding service level agreements. Virtualized hardware infrastructure 240 is an abstraction that specifies pools of computing resources connected through one or more networks, including, for example, computing platforms 260, storage systems 250, and network infrastructure elements 270. Storage systems 250 may be associated with virtualized software images that take the form of a software image repository that includes the business logic and container code associated with containers 230.

The fabric operating environment of the N1 architecture is geared toward dynamically maintaining service levels while providing services for consumers. The fabric provisions and deploys the business logic objects and associated containers onto servers and domains (i.e., defined portions of the fabric operating environment including certain resources that provide one or more services). Further, the fabric may automatically configure data and storage networks, initialize metering and monitoring agents, and secure the virtual hardware infrastructure 240 to run the services. Once the services are running, the fabric uses the metering and monitoring agents to monitor the performance of the services against service level agreements. Based on the monitoring, the fabric may dynamically adjust container parameters to keep selected services running within desired service level ranges. Service descriptions associated with service levels that cannot be met are modified by developers such that the corresponding services are reprovisioned to meet the business goals corresponding to these service levels. Accordingly, the N1 architecture allows the fabric to manage resource allocation across an entire pool of compute and storage resources to dynamically allocate, provision, modify, etc. the resources to meet the service level agreements and ultimately, the corresponding business goals defined by the developers.

In one aspect of the invention, the N1 architecture may host many Sun ONE application infrastructure solutions (i.e., application servers, portal servers, web servers, integration servers, content management servers, DAM servers, identity servers, etc.). Collectively, these solutions provide context based services to consumers.

In another aspect of the invention, the containers used by the N1 may be associated with service containers provided by the Solaris® 9 operating environment from Sun Microsystems, Inc. The Solaris 9 operating environment provides resource controls that support multiple service containers on a single server. In one aspect, the N1 containers include System Service Containers (SSCs) that are configured to handle resource management, bandwidth allocation, version/patch maintenance, operating system level change management, service movements, etc. within the N 1 fabric, etc. Accordingly, SSCs are essentially virtual computers that collaborate the operations of the virtual compute and storage resources in the N1 fabric.

An SSC may be configured to dynamically adjust the resource relationships in the fabric based on changing service level requirements. The SSC offers management functions at the virtual hardware infrastructure level, such as scalability (e.g., resource connection management, data growth rate management, storage and compute resource capacity management, performance characteristics management, etc.), availability (e.g., platform reliability, etc.), manageability (e.g., resource change management, problem management, asset management, network management, etc.), compatibility (e.g., platform support, back-end connectivity to legacy resources, etc.), security (e.g., application-level security, network security, operating system security, database security, etc.), and adaptability (e.g., extensibility of applications, adaptive nature of compute, storage and network resources based on changing demands from service agreements and infrastructure).

An SSC may be configured to operate based on predetermined rules that allow virtual computing systems to be created within an N1 fabric domain (e.g., a defined portion of the fabric including predetermined resources, containers, infrastructure solutions, etc.), and between domains within and/or outside a physical computing system (e.g., a server machine). An SSC may be configured to understand the types of compute and storage resources required to run one or more ASC's and leverage the virtualization of these resources within a network to extend the resources to any node within the N1 fabric.

### Container Alignment Engine

As described, architectures implementing ASC and SSC based technologies may provide high availability of business services and system services. For example, in one aspect of the invention, ASCs hosted on different servers, such as an application server, portal server, identity server, etc. within a fabric operating environment, may provide state, session, and transaction information to a central repository that may or may not be distributed across the nodes of the fabric. The repository may persistently maintain this information for access by any of the ASCs during a failure condition. For example, during failure of two ASCs running a content management engine and DAM engine, respectively, the fabric operating environment may allow alternate ASCs to seamlessly take over the roles of running these engines. Therefore, the fabric provides availability of business services. At the same time, any SSCs supporting the alternate ASCs may determine based on defined SLAs whether to add more resources to support the performance requirements of the SLAs and/or whether to instantiate another SSC/ASC combination on another node to address any degraded performance levels.

One skilled in the art will appreciate that ASCs may act as a congregation point for application/basic services. SSCs may act as the congregation point for system management services. In one aspect of the invention, the orchestrating point for these services is provided by a Container Alignment Engine (CAE). The CAE is a distributed software engine that uses one or more container rules to map the capabilities of the ASCs and SSCs to dynamically manage application and system level functions in a service provisioning environment. This may also be referred to as "aligning" containers. The CAE takes into account the location of services within a fabric operating system to address security, scalability, and resiliency issues associated with resources providing the services.

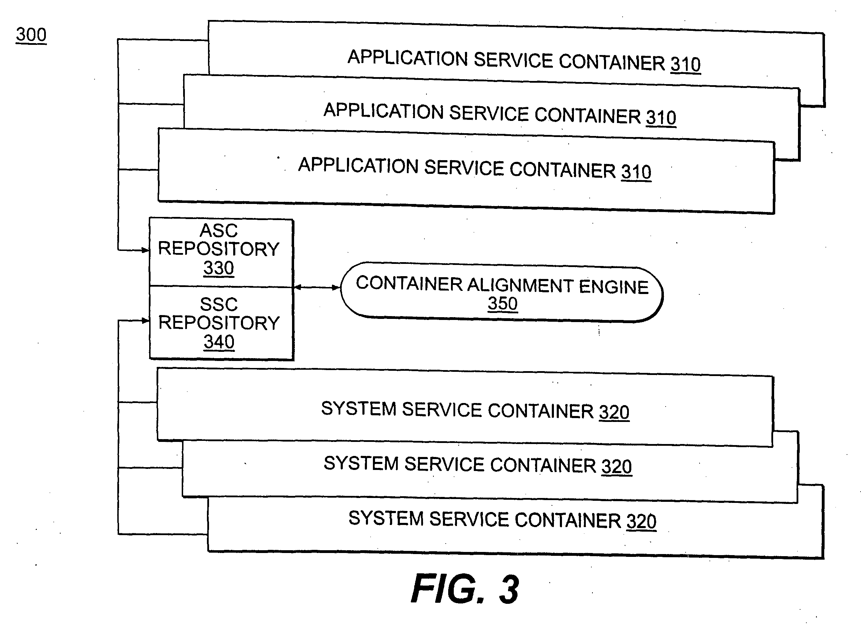

Fig. 3 shows a block diagram of an exemplary CAE environment 300 consistent with certain aspects related to the present invention. As shown, environment 300 includes one or more ASCs 310, one or more SSCs 320, an ASC repository 330, an SSC repository 340, and a CAE 350.

ASCs 310 represent one or more application service containers that are distributed throughout a fabric operating environment on one or more servers, such as application servers, integration servers, identity servers, etc. SSCs 320 represent one or more system service containers that are also distributed throughout the fabric operating environment on one or more servers, such as application servers, integration servers, database servers, etc. In one aspect of the invention, ASC 310, and/or SSC 320, may represent a virtual container that is distributed a/cross multiple servers. For example, ASC 310 may represent a collection of ASCs running on many different types of servers, such as application servers, web servers, integration servers, etc.

ASC repository 330 represents a data store that receives and maintains event data generated and/or provided by ASCs 310. In one aspect of the invention, the event data may be associated with business related metrics corresponding to the performance of one or more running services. The event data may also be metrics associated with Service Level Agreements (SLAs), resource, connect, cluster (more than one computing element), and/or storage attributes associated with resources within the fabric operating environment.

On the other hand, SSC repository 340 represents a data store that receives and maintains event data generated and/or provided by SSCs 320, such as system management metrics associated with one or more resources running one or more services including resource attributes, change management attributes, communication attributes, cluster attributes, and storage attributes. Although Fig. 3 shows ASC and SSC repositories 330, 340 as separate elements, one skilled in the art will appreciate that the repositories may be combined into a single data store repository. Further, repositories 330, 340 may represent distributed repositories associated with each ASC 310 and/or SSC 320.

CAE 350 represents a software engine that may be distributed among several resources in the fabric network operating environment that enforces rules based on the event data stored in ASC and SSC repositories 330 and 340, respectively. The rules may be based on events, triggers, thresholds, container dependencies, time stamp information, etc. CAE 350 aligns one or more ASCs required to run a service, or an application delivering services on demand, with one or more SSCs. Aligning containers may refer to associating one or more ASCs with one or more SSCs such that the services provided by each of these containers may be used by resources, software, and other processes. Accordingly, realigning containers may refer to adjusting the container associations to modify the services, performance, capabilities, etc. of the resources, software, processes, provided by the originally alignment. Further, aligning containers may refer adjusting the association (e.g., the distribution) of one or more types of a container, such as a single SSC, within a system environment. For example, an exemplary SSC 320 may be distributed among four servers that operate with four CPUs each. CAE 250 may realign the exemplary SSC 320 such that it is distributed across eight similar servers, thus increasing processing capabilities from sixteen CPUs to thirty-two.

In one aspect of the invention, CAE 350 may align the ASCs with SSCs based on a set of application infrastructure deployment scenarios (i.e., macro services patterns) that the fabric operating environment may have defined through control plane 210. Following the selection of the macro services patterns, the environment may determine one or more micro services patterns based on the features and capabilities of the application infrastructure solutions (i.e., the various servers implemented in the environment, such as application servers, identity servers, integration servers, web servers, proxy servers, portal servers, directory servers, etc.).

CAE 350 may provide many different scenarios of alignment between the ASCs 310 and SSCs 320 within the fabric operating environment. CAE 350 may align these containers based on the type of sub-environment within the fabric (e.g., domains, etc.). For example, within a particular domain in the fabric, CAE 350 may align one ASC 310 to one SSC 320 (e.g., one integration server container running on one SSC), multiple ASCs 310 to one SSC 320 (e.g., multiple web containers to one SSC), and one ASC 310 to two or more SSCs 320 (e.g., application server cluster to two or more SSCs). For alignment between boxes, (i.e., a physical or virtual-based system hosting one or more resources), CAE 350 may align multiple ASCs 310 to one SSC 320 (e.g., a web server cluster implemented within a SSC), one ASC 310 to multiple SSCs 320 (e.g., multiple databases supported by a clustered SSC), and multiple ASCs 310 to multiple SSCs 320 (e.g., multiple database server containers and LDAP replicas (i.e., backup LDAP servers) on a SSC cluster).

In scenarios of alignment when a network is defined as a box, CAE 350 may align may ASCs 310 to one SSC 320, one ASC 310 to many SSCs 320, and two or more ASCs 310 to two or more SSCs 320. These and other features associated with the operations of the CAE 350 are described below.

### Exemplary CAE System Architectures

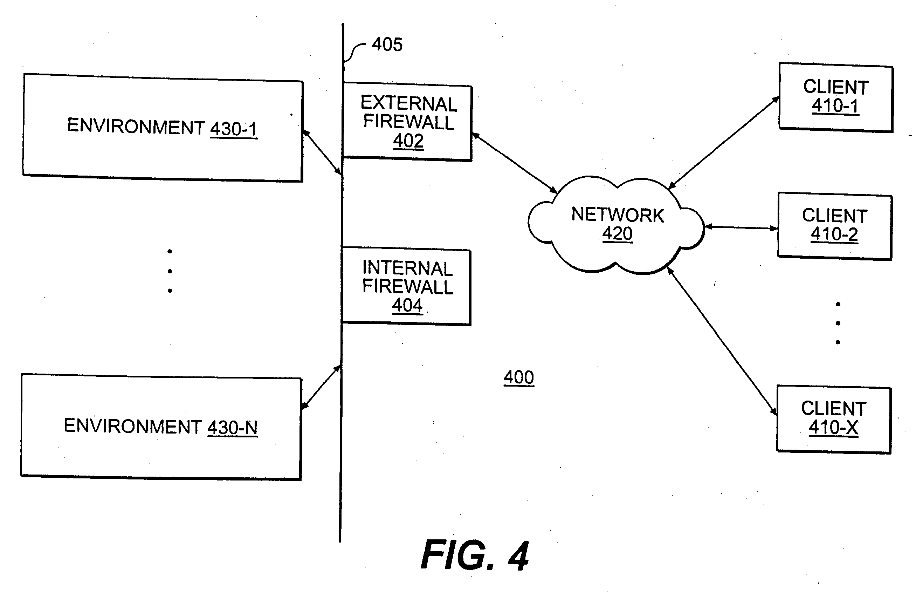

As described, the CAE may be distributed among one or more resources included in a fabric operating environment. Fig. 4 shows an block diagram of an exemplary system environment 400 consistent with certain aspects related to the present invention. As shown, system environment 400 includes a communication link 405, external and internal firewalls 402 and 104, respectively, one or more clients 410-1 to 410-X (X being an integer greater than 1), network 420, and one or more environment 430-1 to 430-N (N being an integer greater than 1).

Communication link 405 may represent a network, such as Local Area Network (LAN), an Extranet, an Intranet, and any other type of network or combination of networks that facilitate the exchange of information to and from certain entities in system environment 400.

External firewall 402 may represent a processing system or software construct that controls access between communication link 405 and network 420. For example, external firewall 402 may be a single computing system, such as a server, or software distributed across several servers, that control access to communication link 405 or network 420 based on one or more security rules, policies, etc. associated with fabric 400. Internal firewall 104 may represent a processing system or software construct that controls access between entities located (virtually or physically) on either side of internal firewall 404. For example, internal firewall 404 may be one or more computing systems (e.g., servers) or software distributed across one or more computing systems, that control access between environment 430-N, environment 430-1, and/or external firewall 402 based on security rules, policies, etc. defined for system environment 400.

Clients 410-1 to 410-X may each represent any type of known computing system that is configured to request and receive information from entities attached to network 420. For example, clients 410-1 to 410-X may represent a desktop computer system, a server system, a Personal Digital Assistant (PDA), a wireless telephone, etc. Clients 410-1 to 410-X may include processing devices and supporting devices that allow a user to request and receive the information from network 420. In one aspect of the invention, clients 410-1 to 410-X may be configured as a J2EE platform client machine that includes client components, such as application clients, a web browser, applets, JavaBeans components, etc. that manage the flow of data between components running on a J2EE server machine. Clients 410-1 to 410-X may be configured as consumers of web services provided by resources included in system environment 400.

Network 420 may represent one or more networks that facilitate the exchange of information between entities included in system environment 400, such as clients 410-1 to 410-X and environments 430-1 to 430-N. For example, network 420 may be the Internet, an Extranet, and Intranet, or any other type of network, or combination of networks, that facilitate the exchange of information through various types of protocols, such as Simple Object Access Protocol (SOAP), Hyper Text Transfer Protocol (HTTP), etc.

Environments 430-1 to 430-N may each represent a collection of system resources that individually, or collectively, process information and provide one or more services to a consumer (e.g., clients 410-1 to 410-X). The system resources may include one or more servers, gateway devices, multiplexer devices, databases, network devices, message queue devices, etc. arranged in various configurations. For example, the system resources may include one or more application infrastructure solutions, such as a certificate server, calendar server, content server, caching server, messaging server, transaction server, application server, web server, integration server (Business-to-Business (B2B) and/or Enterprise Application Integration (EAI)), web proxy server, database server, reporting server, directory server, security server, mail server, mobile application server, portal server, SOAP server, DAM server, etc.

One or more environments 430-1 may be positioned between external firewall 402 and internal firewall 404. Also, one or more environments (e.g., environment 430-N) may be positioned behind internal firewall 404. Accordingly, the flow of information between environments 430-1 to 430N may be controlled by internal firewall 404, while the flow of information between environments 430-1 to 430-N and entities connected to network 420 are controlled by external firewall 402.

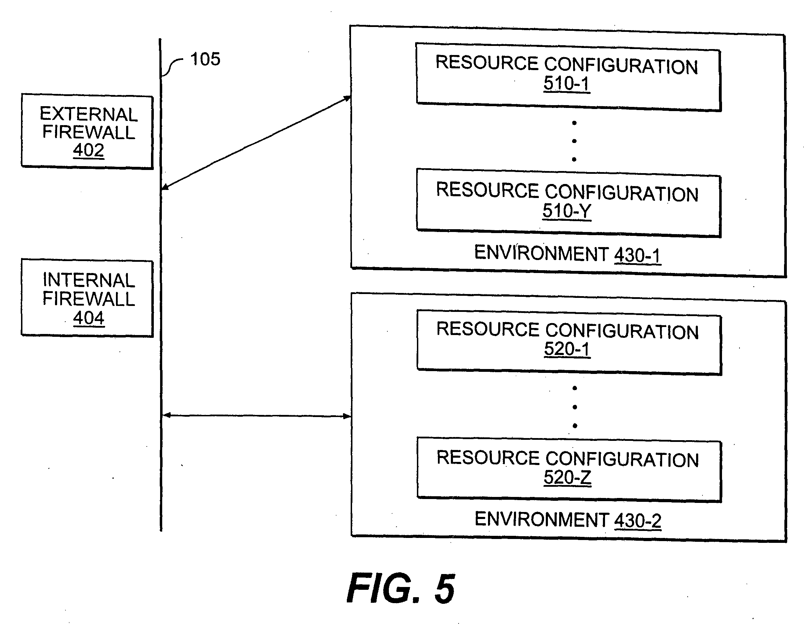

Fig. 5 shows a block diagram of exemplary environments 430-1 to 430-N consistent with certain embodiment related to the present invention. As shown, environment 430-1 is positioned between external and internal firewalls 402 and 404, respectively, and environment 430-2 is positioned behind internal firewall 404. Exemplary environments 430-1 and 430-2 may each include one or more resources configurations consistent with various aspects related to the invention. For example, environment 430-1 may include one or more resource configurations 510-1 to 510-Y (Y being an integer greater than 1) and environment 430-2 may include one or more resource configurations 520-1 to 520-Z (Z being an integer greater than 1). A resource configuration is configuration of resources (e.g., servers, databases, network devices, etc.).

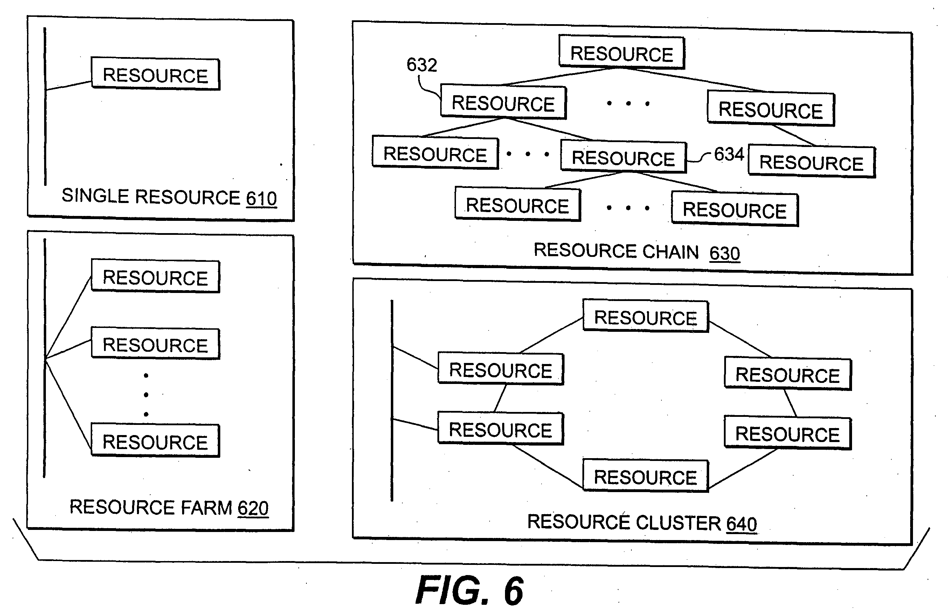

The types of resource configurations 510 and 520 included in environments 430-1 and 430-2 may vary. Fig. 6 shows some exemplary resource configurations that may be implemented by environments 430-1 and 430-2. As shown, the resource configurations included in environments 430-1 and 430-2 may represent a single resource 610, a resource farm 620, a resource chain 630 and/or a resource cluster 640.

While single resource configuration 610 includes a single resource, a resource farm 620 represents a plurality of similar (or different) resources that individually, or collectively, provide functions and/or services consistent with certain aspects related to the present invention. A resource chain 630 may be a configuration of similar (or different) resources that have a virtual and/or physical hierarchy arrangement. For instance, an upper level resource (e.g., resource 632) may control or manage access and/or processing of information to and from a lower level resource in its respective chain (e.g., resource 634). A resource cluster 640 may be an arrangement of similar (or different) resources in a virtual or physical loop.

The resources included in the resource configurations may be similar or different types of resources (e.g., servers, databases, etc.). For example, one or more resources included in a resource configuration may represent a master or primary resource while one or more other resources included in the same configuration may represent back-up, slave, or redundant resources to the master or primary resource. Further, one skilled in the art will appreciate that environments 410-1 to 410-2 are not limited to the resource configurations shown in Fig. 6 and that different combination and other types of configurations may be implemented without departing from the scope of the present invention.

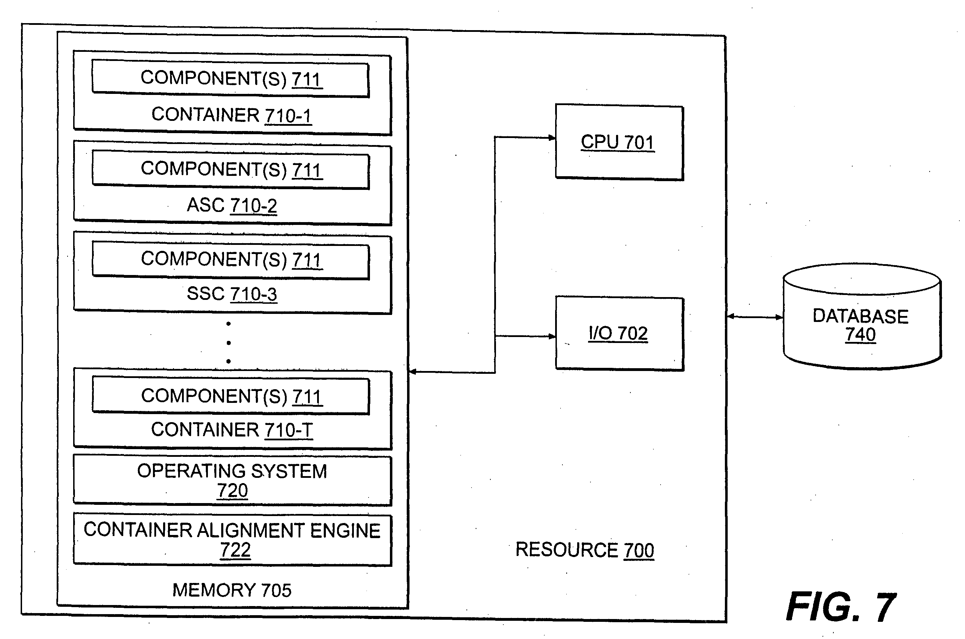

As described, the resources included in environments 430-1 to 430-N may include different types of resources, such as the application infrastructure solutions described above. For example, a resource may be an application server, calendar server, content server, caching server, messaging server, transaction server, application server, web server, B2B server, EAI server, web proxy server, database server, reporting server, directory server, security server, mail server, mobile application server, portal server, CORBA server, SOAP server, and a media server. In one aspect of the invention, some of the resources include a server configured as a J2EE platform server implemented in an open network architecture, such as the Sun One and/or N1 architectures described above. Fig. 7 shows an exemplary server resource 700 consistent with certain aspects related to the present invention. As shown, resource 700 includes a CPU 701, Input/Output (I/O) device, 702, and memory device 705.

CPU 701 may be one or more known processing devices configured to access, manipulate, and/or execute data and/or software stored in memory 705. I/O device 702 may be one or more interface devices configured to facilitate the exchange of data between software and/or hardware entities included in, or external to, resource 700. Memory 705 may be one or more memory devices that store data and software used by CPU 701 to perform one or more functions particular to the type of resource 700. For example, in one aspect of the invention, memory 705 may include one or more containers 710-1 to 710-T (T being an integer greater than 1), operating system software 720, and CAE 722.

Containers 710-1 to 710-T may represent various types of software based containers, such as J2EE compliant containers (e.g., web containers, business containers, etc.). Each container 710-1 to 710-T may include one or more components 711 that may be various types of components associated with the type of container 710-1 to 710-T hosting the components 711, such as web components, business components, etc. In one aspect of the invention, memory 705 may include an ASC 710-2 and SSC 710-3 similar to the ASCs and SSCs described above with respect to the Sun ONE and N1 architectures. ASC 710-2 and SSC 710-3 may provide event data to repository 740 during runtime when resource 700 and/or system environment 400 is delivering one or more services to one or more consumers (e.g., clients 410-1 to 410-X). Repository 740 may represent one or more databases that is accessible by one or more of the resources included in a single environment (e.g., environment 410-1) or multiple environments (e.g., environments 410-1 and 410-2).

Operating system software 720 represents any type of operating system code associated with the type of platform hosting resource 700. In one aspect of the invention, operating system software 720 includes programming code based on the Solaris 9 operating system provided by Sun Microsystems, Inc, although any type of operating system that provides functionalities similar to those related to certain aspects of the invention may be implemented, such as providing service containers for managing services in system environment 400.

### Deploying a CAE Environment

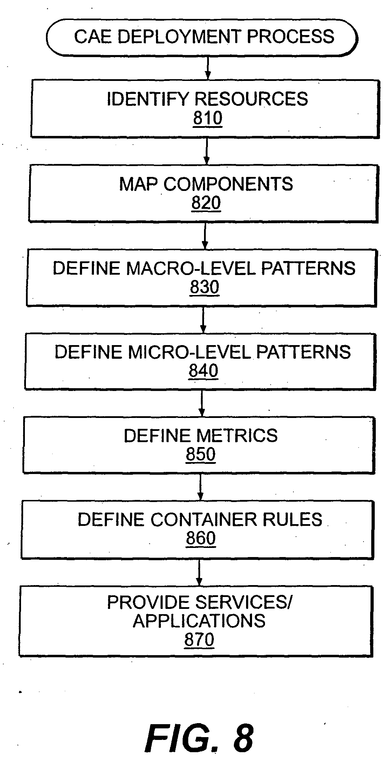

As previously mentioned, a container alignment engine (CAE) consistent with aspects of the present invention may be distributed among one or more resources included in system environment 400. Accordingly, CAE 722 may represent a distributed portion of the alignment engine running in exemplary resource 700. CAE 722 may operate concurrently with other CAEs 722 running in other resources 700 to align ASCs 710-2 with SSCs 710-3 within system 400 to provide one or more context-based services to consumers. Further, CAE 722 may apply one or more container rules based on the event data stored in repository 740 to dynamically tune the enterprise of resources providing these services (e.g., adjust the performance of network environment 400). Fig. 8 is a flowchart of an exemplary CAE deployment process consistent with certain aspects related to the present invention. It should be noted that CAE 722, as described herein, may represent one or more of the CAEs 722 running in the one or more resources within environments 430-1 to 430-N.

As shown, system environment 400 may be configured to deploy a CAE environment by identifying the types of software and hardware components that make up the resources in system environment 400 (Step 810). For example, a user (e.g., system developer, service developer, etc.) or a software-based process (e.g., expert system, CAE 722, etc.) may generate a data structure (e.g., a file, data array, etc.) of known resources included in system environment 400 that provide services consistent with certain aspects related to the present invention. In one configuration, the user may determine the types of resources required to provide each service offered by system environment 400 based on one or more SLAs and/or service descriptions provided to one or more control planes (e.g., control pane 210) associated with system environment 400. For instance, the user may determine that a multi-media/mobile web service may be built on various types of resources, such as a web server, portal server, application server, content management server, DAM server, a SOAP server, a database server, a Business-to-Business (B2B) server, an EAI server, a directory server, identity server, and a mobile application/Wireless Access Protocol (WAP) server. Other types of resources may be identified for other types of services, such as a certificate server, calendar server, a caching server, a messaging server, a transaction server, a web proxy server, a reporting server, a security server, and a mail server.

Further, the CAE deployment process may include mapping one or more components each identified resource uses to build the services offered by system environment 400 (Step 820). For example, a user or a software process (e.g., CAE 722) may map a certificate server to signature components, an application server (e.g., a Sun ONE application server) to EJB components, and a directory server (e.g., a Sun ONE directory server) to Java Naming and Directory Interface (JDNI) components. The mapped information may be stored in a database as template information used by the CAE deployment process to define one or more service patterns.

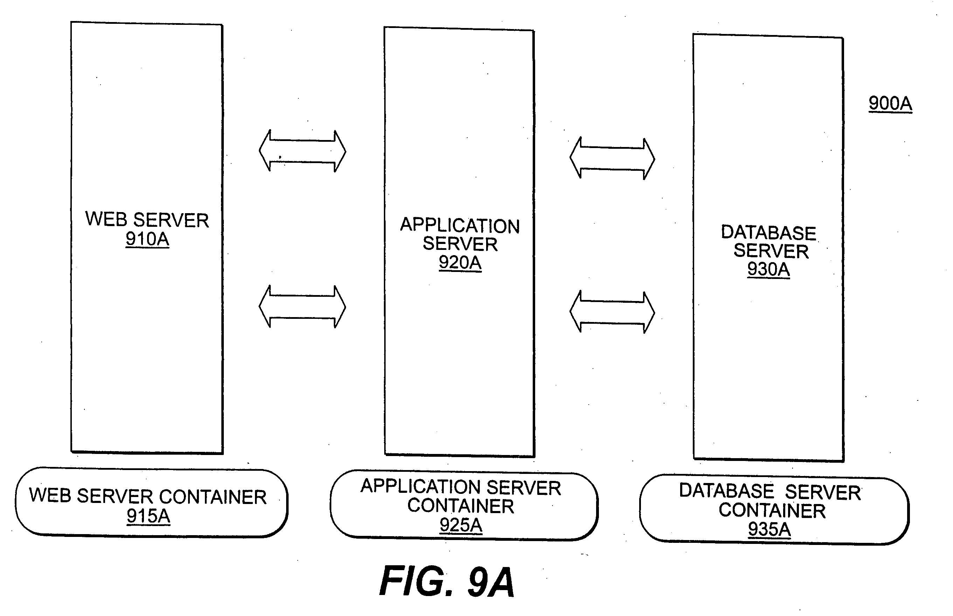

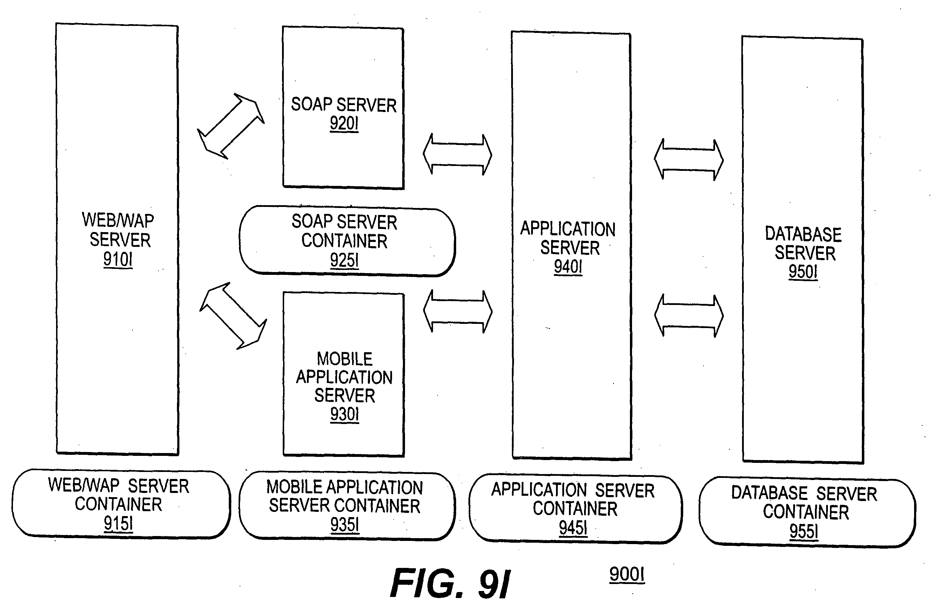

For example, based on the identified resources and mapped components, the CAE deployment process allow a user or a software-based process (e.g., CAE 722) to define one or more macro level service patterns (Step 830). A macro level service pattern represents a configuration of computing devices (e.g., resources) that may be defined by a user, such as a service developer, system administrator. Alternatively, a macro level service pattern may be defined by an automated process, such as an expert system, that uses a knowledge database of known resource configurations to maximize the performance of the resources under certain operating conditions. Figs. 9A-9I are block diagrams of nine exemplary macro-level service patterns that may be created for various types of web services and/or applications provided by system environment 400.

Fig. 9A shows an exemplary macro-level service pattern 900A associated with a web application in a three-tier system including a web server 910A, application server 920A, and a database server 930A. Each server is associated with a corresponding service container 915A, 925A, and 935A, and corresponding mapped components. For example, the components deployed in exemplary service pattern 900A include JSP, Servlets, EJB, JDBC, and Message Driven Beans (MDB) components.

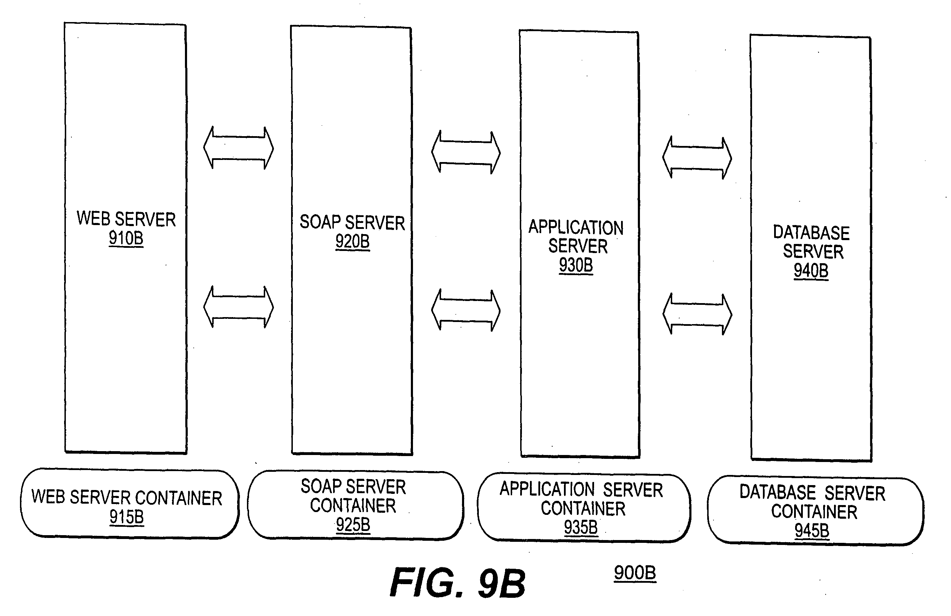

Fig. 9B shows an exemplary macro-level service pattern 900B associated with a web service in a multi-tier system including a web server 910B, SOAP server 920B, application server 930B, and a database server 940B. Each server is associated with a corresponding service container 915B, 925B, 935B, and 945B, and corresponding mapped components. For example, the components deployed in exemplary service pattern 900B include JSP, Servlets, SOAP, XML, EJB, JB, JDBC, and MDB components.

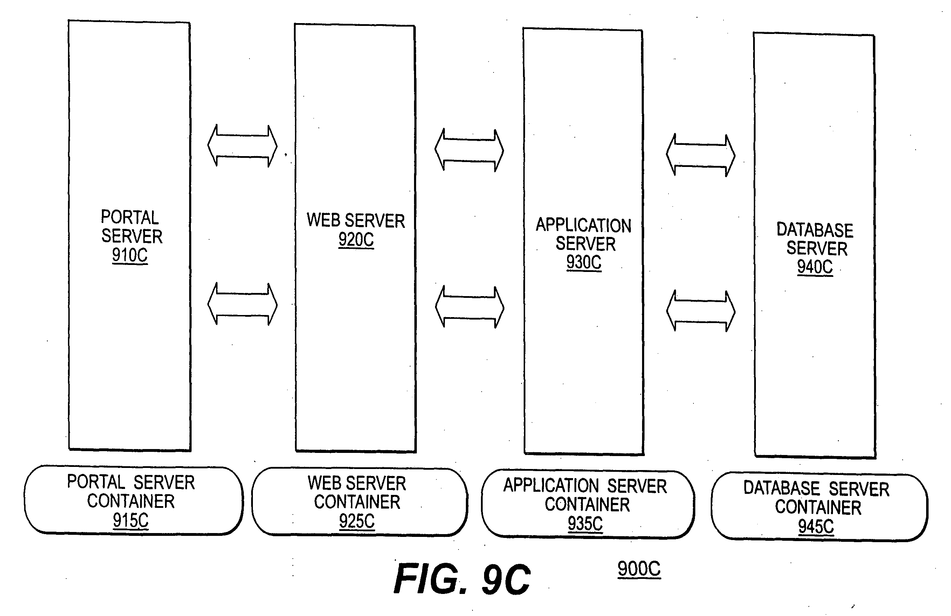

Fig. 9C shows an exemplary macro-level service pattern 900C associated with a web application via a portal server in a multi-tier system including a portal server 910C, web server 920C, application server 930C, and a database server 940C. Each server is associated with a corresponding service container 915C, 925C, 935C, and 945C, and corresponding mapped components. For example, the components deployed in exemplary service pattern 900C include portlets (e.g., components configured to process portal operations with consumers), netlets (components configured to process network transactions), JSP, Servlets, EJB, JB, JDBC, and MDB components.

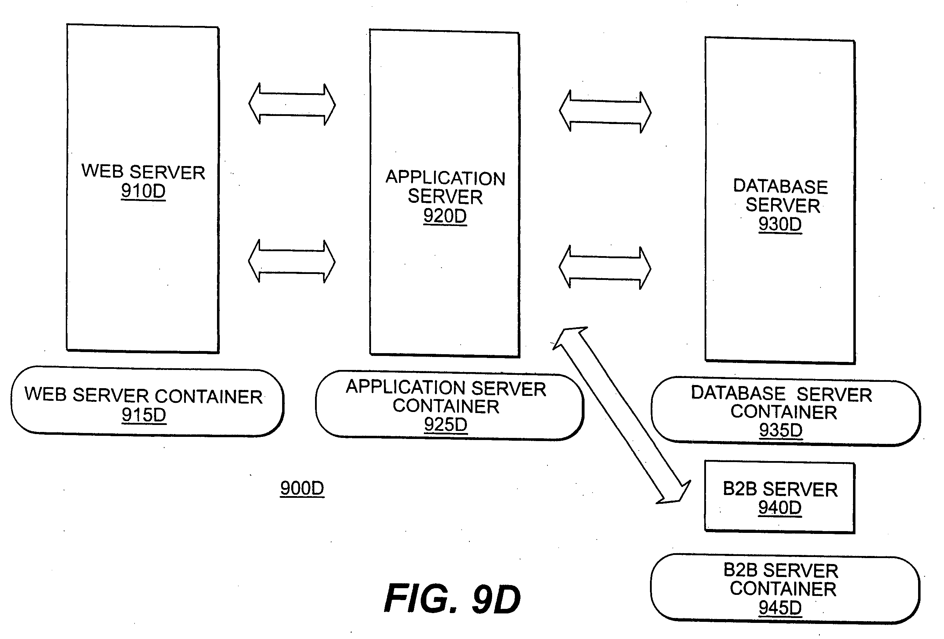

Fig. 9D shows an exemplary macro-level service pattern 900D associated with a web application with a B2B pattern in a multi-tier system including a web server 910D, application server 920D, database server 930D, and a B2B server 940D. Each server is associated with a corresponding service container 915D, 925D, 935D, and 945D, and corresponding mapped components. For example, the components deployed in exemplary service pattern 900D include JSP, Servlets, XML, Java Message Service (JMS), Java Transaction Service (JTS), Java Cryptography Architecture (JCA), EJB, JB, and JDBC, components.

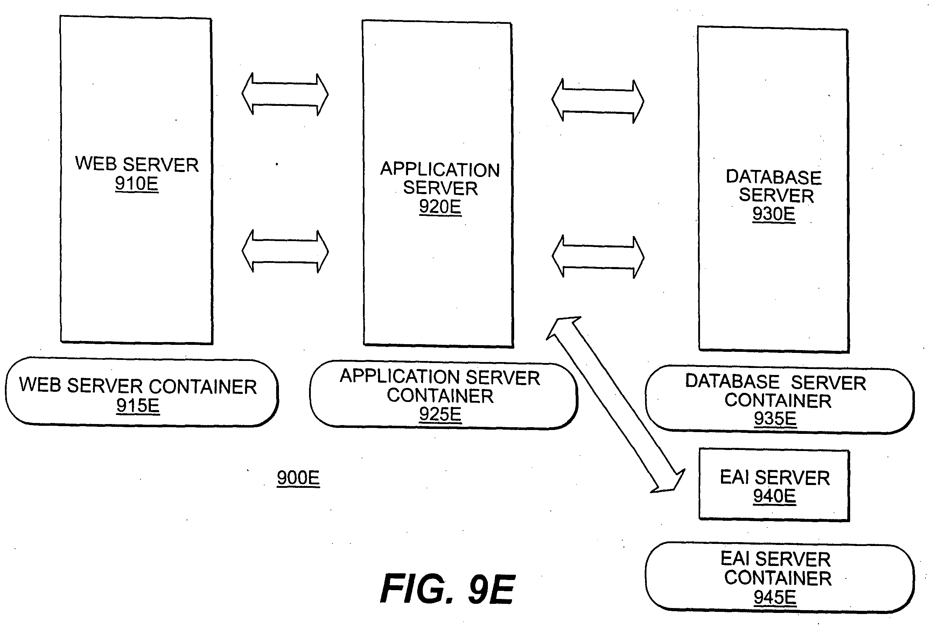

Fig. 9E shows an exemplary macro-level service pattern 900E associated with a web application with an EAI pattern in a multi-tier system including a web server 910E, application server 920E, database server 930E, and an EAI server 940E. Each server is associated with a corresponding service container 915E, 925E, 935E, and 945E, and corresponding mapped components. For example, the components deployed in exemplary service pattern 900E include JSP, Servlets, EJB, JB, MDB, JMS, JTS, JCA, ERP adapters, and MDB components.

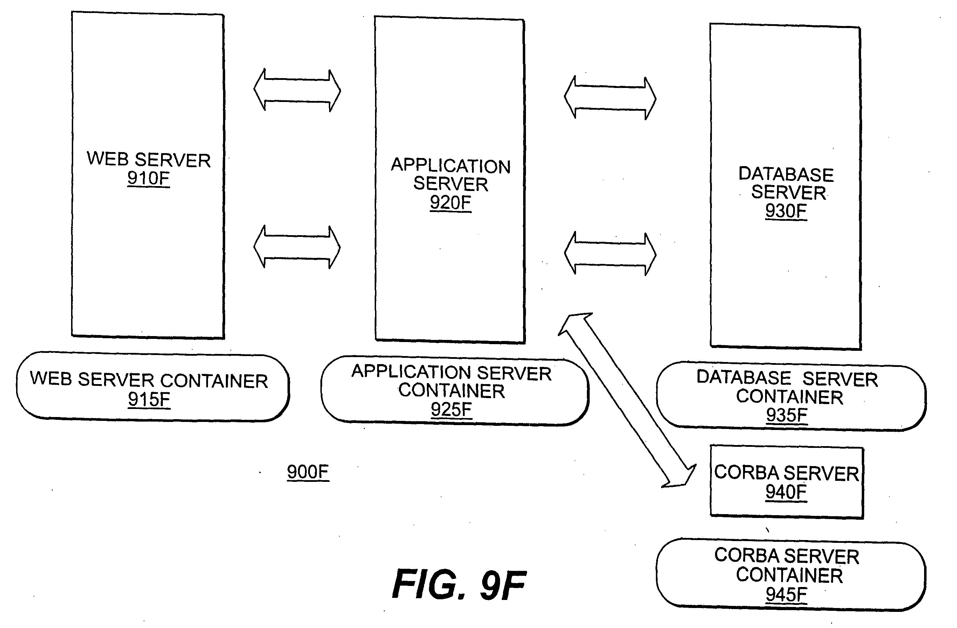

Fig. 9F shows an exemplary macro-level service pattern 900F associated with a web application with a CORBA server pattern in a multi-tier system including a web server 910F, application server 920F, database server 930F, and a CORBA server 940F. Each server is associated with a corresponding service container 915F, 925F, 935F, and 945F, and corresponding mapped components. For example, the components deployed in exemplary service pattern 900F include JSP, Servlets, EJB, JB, MDB, JavaIDL, ORB, and JDBC components.

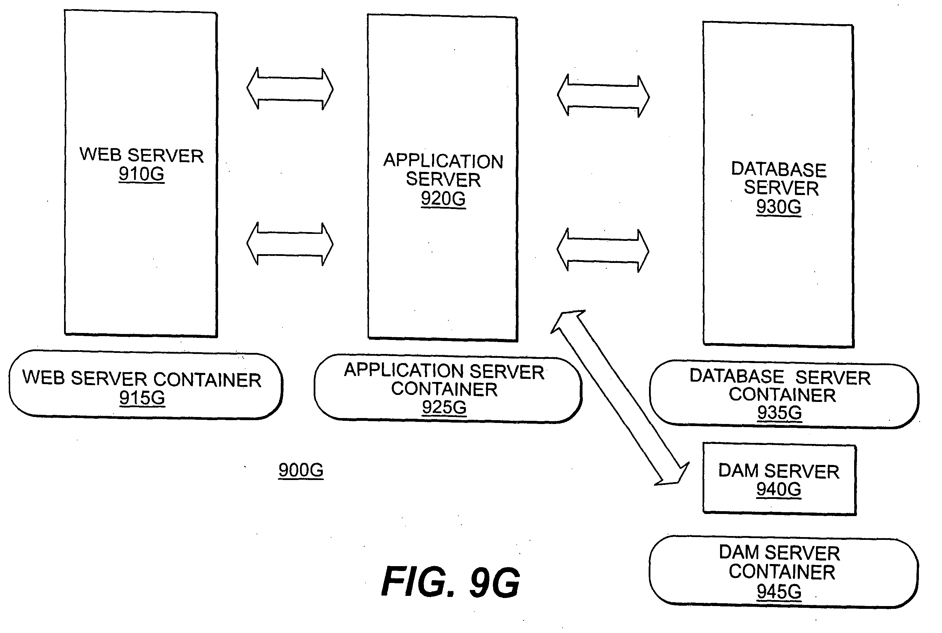

Fig. 9G shows an exemplary macro-level service pattern 900G associated with a web media/application pattern in a multi-tier system including a web server 910G, application server 920G, database server 930G, and a DAM server 940G. Each server is associated with a corresponding service container 915G, 925G, 935G, and 945G, and corresponding mapped components. For example, the components deployed in exemplary service pattern 900G include JSP, Servlets, EJB, JB, MDB, JDBC, and Java Media extension components.

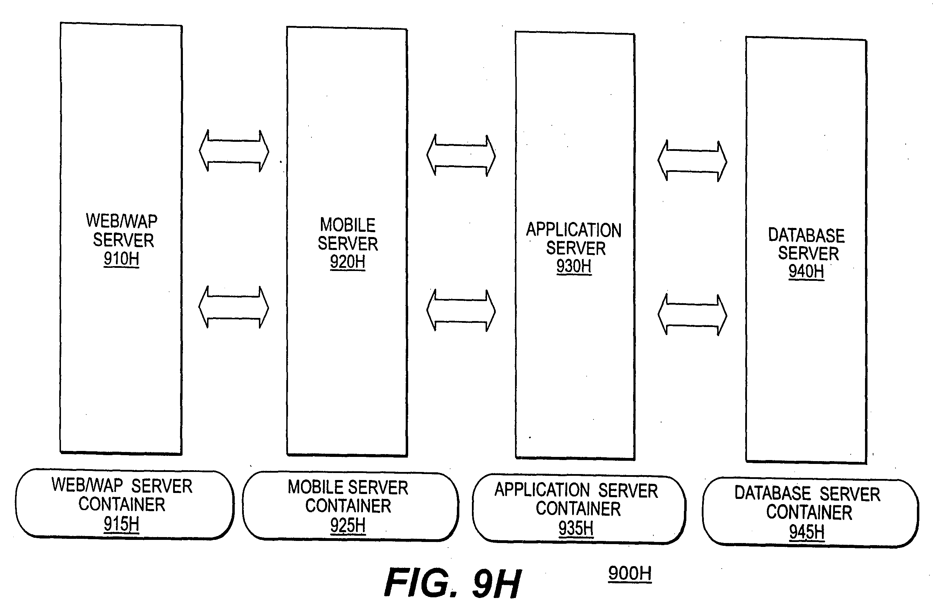

Fig. 9H shows an exemplary macro-level service pattern 900H associated with a mobile web application in a multi-tier system including a web/WAP server 910H, mobile server 920H, application server 930H, and a database server 940H. Each server is associated with a corresponding service container 915H, 925H, 935H, and 945H, and corresponding mapped components. For example, the components deployed in exemplary service pattern 900H include JSP, Servlets, midlets, applets, EJB, JB, MDB, and JDBC components.

Fig. 9I shows an exemplary macro-level service pattern 900I associated with a mobile/web service pattern in a multi-tier system including a web/WAP server 910I, a SOAP server 920I, a mobile application server 930I, application server 940I, and a database server 950I. Each server is associated with a corresponding service container 915I, 925I, 935I. 945I, and 955I, and corresponding mapped components. For example, the components deployed in exemplary service pattern 900F include JSP, Servlets, SOAP, XML, midlet, applet, JSP tags, EJB, JB, MDB and JDBC components.

In one aspect of the invention, the CAE deployment process may also allow a user or a software process (e.g., CAE 722) to automatically determine micro-level service patterns that correspond to particular macro-level service patterns Fig. 8, (Step 840). A micro-level service pattern may represent a further refinement of the configurations included in the macro-level service patterns. Accordingly, the micro-level service patterns may provide system environment 400 another level of configuration granularity to provide services and/or applications to one or more consumers. For example, micro-level service patterns may be associated with scalability, availability, and security capabilities of system environment 400. In one aspect of the invention, the scaling patterns identified in Appendix A, "Scaling J2EE Technology Applications Based on Application Infrastructure Techniques," by Rakesh Radhakrishnan, 2001, may be considered micro-level service patterns consistent with certain aspects related to the present invention. As shown in Appendix A, various scaling techniques may be applied to various macro-level service patterns based on the type of resources used to provide certain types of services and/or applications.

Further, the availability patterns identified in Appendix B, "Maximizing uptime for J2EE Applications Based on Application Infrastructure HA Techniques," may be considered micro-level service patterns consistent with certain aspects related to the present invention. As shown in Appendix B, various availability techniques may be applied to various macro-level service patterns based on the type of resources that provide certain type of services and/or applications.

Also, the security patterns identified in Appendix C, "Securing J2EE based Web Applications and Web Services Based on Application Infrastructure Security Techniques," may be considered micro-level service patterns consistent with certain aspects related to the present invention. As shown in Appendix C, various security techniques may be applied to various macro-level service patterns based on the type of resources that provide certain type of services and/or applications.

The macro and micro-level service patterns may be stored as templates in a database and used by CAE 722 to dynamically provision services and/or applications to consumers.

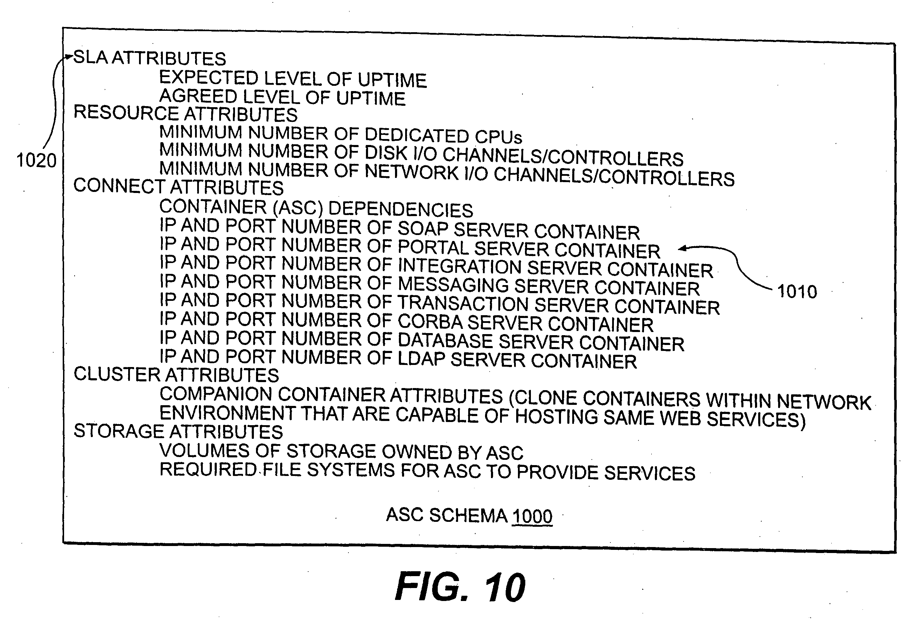

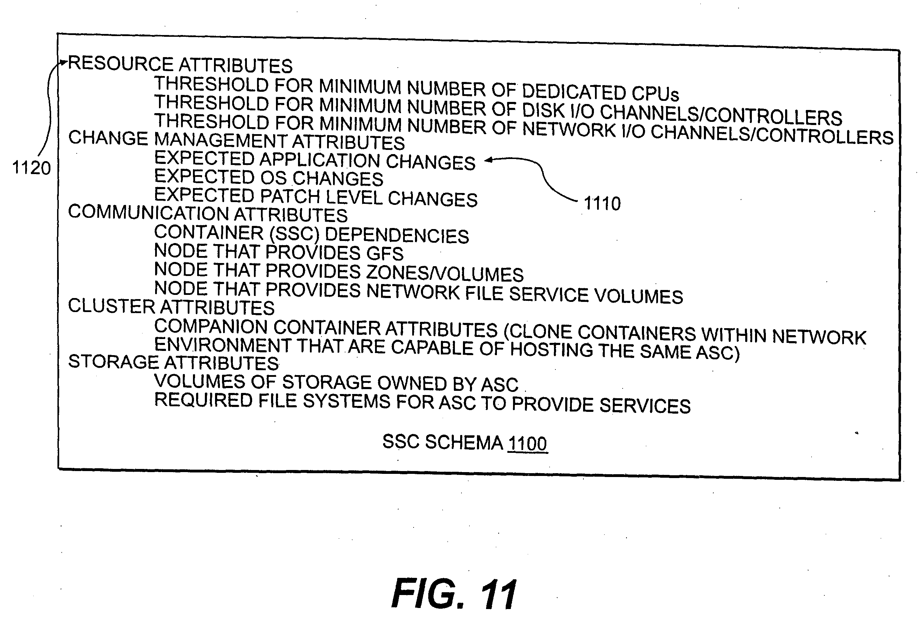

The CAE deployment process may include defining one or more container metrics associated with each web service (Step 850). A container metric may be an attribute associated with various characteristics of a service provided by system environment 400. For example, container metrics may be associated with SLA attributes, resource attributes, connect attributes, cluster attributes, and/or storage attributes of a service. In one aspect of the invention, container metrics may be defined in schemas associated with ASC 710-2 and SSC 710-3 for each service deployed in environment 400. For example, a service description may include a sub-tree with an ASC schema that includes one or more attributes associated with the service. Fig. 10 shows an exemplary ASC schema 1000 that includes a plurality of metrics 1010 for various attributes 1020 of the service. Each ASC schema may have its own identifiers associated with ASC 710-2 of a resource. Further, each ASC schema may have a matching SSC schema that include related attributes corresponding to system characteristics of system environment 400. Fig. 11 shows an exemplary SSC schema 1100 including a plurality of metrics 1110 for various attributes 1120 related to ASC attributes 1020.

The CAE deployment process may also include defining one or more container rules that are used by CAE 722 to dynamically adjust various resource characteristics to maintain or meet the response time, uptime, and security levels defined in a service's SLA (Step 860). In one aspect of the invention, a user (e.g., system developer) or a software based process (e.g., expert system) may define the container rules based on events, triggers, threshold levels, container dependencies, temporal information, etc. For example, a container rule may determine whether a particular event (e.g., a compute resource fails) occurs and initiates a corresponding action based on the determination, such as replacing the failed compute resource with an alternate or backup resource. Another exemplary container rule may determine whether a number of CPUs running in a resource providing a service is above a threshold value (e.g., maximum 4 CPUs to provide a service). If the threshold is exceeded, the exemplary rule may define an appropriate action, such as implementing another resource or resources to reduce the number of CPUs used by the resource providing the service. The defined container rules may be stored in a database, such as database 740.

Once the appropriate rules, service patterns, metrics, etc. are defined and stored, system environment 400 may deploy and begin running the web services and/or applications based on requests from one or more consumers (Step 870).

### Providing Services and/or Applications in a CAE Environment

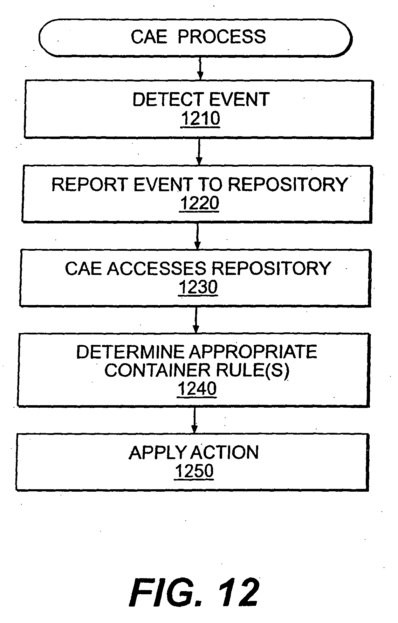

During runtime, CAE 722 may access the rules database to dynamically adjust the administrative and/or performance characteristics of system environment 400 by leveraging SSC 710-3. Fig. 12 shows a flowchart of an exemplary CAE process consistent with certain aspects related to the present invention.

During runtime, system environment 400 may provide one or more web services and/or applications to one or more consumers, such as clients 110-1 to 110-X. Although a consumer may represent any entity that requests and uses a service and/or application, for purposes of explaining the CAE process, client 110-1 represents a consumer. Accordingly, client 110-1 may request a service from a service provider (e.g., one or more resources 700) located in environment 430-1 to 430-N through network 420.

As the provider runs the service, ASC 710-2 may monitor application level metrics associated with the service. For example, ASC 710-2 may be configured to monitor a number of active user sessions for a service for a predetermined period of time, such as a holiday season (e.g., December 20 through January 10). During the designated time period, ASC 710-2 may generate event data associated with the monitored metrics and store the event data in repository 330 (e.g., database 740) using known database calls, such as Java Naming Directory Interface (JNDI) calls. At the same time, prior to, or subsequent to, ASC 710-2 reporting event data to repository 330, SSC 710-3 may also monitor system level metrics associated with the service. SSC 710-3 may also generate and provide event data associated with the monitored metrics in repository 340 (e.g., database 740). For example, during the above exemplary service monitored by ASC 710-2, SSC 710-3 may monitor system attributes associated with the one or more resources 700 that provide the service. For instance, SSC 710-3 may determine whether a minimum amount of storage space is compromised during execution of the service. Event data associated with the monitored storage metric may be created and provided to repository 340.

Accordingly, during runtime of the service, ASC 710-2 and/or SSC 710-3 may detect an event based on preprogrammed thresholds, event identifiers, time stamp information, etc. (Step 1210). Based on the detected events, ASC 710-2 and 710-3 may generate and provide corresponding event data to database 740, which in this example, acts as a central repository for both ASC 710-2 and SSC 710-3 (Step 1220).

Periodically, or on demand (e.g., whenever CAE 722 detects an update in repository 740), CAE 722 may access repository 740 to collect the stored event data provided by ASC 710-2 and/or SSC 710-3 (Step 1230). CAE 722 may also access the storage device that includes the container rules defined in Step 860 of Fig. 8. Based on the collected event data, CAE 722 may apply one or more corresponding container rules to determine an appropriate action or actions (Step 1240). Once the action, or actions are determined, CAE 722 may apply the action to dynamically enforce application and system service container scaling, availability, and/or security techniques (Step 1250).

In one aspect of the invention, CAE 722 may use container rules that are based on one or more deployment scenarios, such as those previously described, to align one or more SSCs 710-3 to one or more ASCs 710-2. For instance, following the above example regarding the active sessions monitored during the holiday season of December 20 to January 10, CAE 722 may locate a container rule that applies an action when ASC 710-2 detects when the number of active sessions over a predetermined period of time (e.g., 12 hour period during the date range of December 20 to January 10) exceeds a predetermined threshold level. The exemplary action may be to redefine an SSC 710-3 that is supporting the ASC 710-2 hosting the service such that it includes more processing capabilities provided by other resources 700. For example, the exemplary SSC 710-3 may originally be running as a 12 CPU/96 GB server with limited I/O capabilities. Based on the exemplary container rule, CAE 722 may change the exemplary SSC 710-3 to a 400CPU/3.2 TB server with high I/O throughput to storage resources to run one or more ASCs 710-2 of a database server resource.

In another example, suppose ASC 710-2 is configured to provide security services in environment 400, such as hosting a billing system service with secure data maintained in a database resource. The billing service is expected to behave in a certain way defined in the ASC's schema. During runtime, ASC 710-2 may monitor and detect an anomaly with the service's behavior (e.g., an illegal read or write operation from an unauthorized source, a storage resource failure, etc.). Based on the detected anomaly, ASC 710-2 may generate event data indicating the detected anomaly and report it to repository 330. CAE 722 may read this event data and based on this data and event data provided by SSC 710-3, may direct SSC 710-3 to perform an appropriate action, such as terminate the use of that ASC 710-2.

Accordingly, CAE 722 is configured to continuously align the container techniques associated with ASC 710-2 and SSC 710-3 to meet any defined and/or changed business goals, SLAs, and ASC and SSC requirements associated with a particular service, application and/or system environment 400.

### Defining and/or Updating Container Rules and Metrics

As described, CAE 722 may apply one or more container rules to dynamically align and/or realign ASC 710-2 and SSC 710-3 during runtime. In one aspect of the invention, the container rules may be updated, deleted, added, etc. during runtime such that CAE 722 may apply these rules for maintaining the scalability, availability, and security techniques associated with ASC 710-2 and SSC 710-3. In this aspect of the invention, a system environment 400 that may include a CAE manager (not shown) that may be any type of known computing system, such as a desktop computer, a server system, etc. The CAE manager may include interface software and hardware that allows a user, or software process, to define, modify, and delete container rules that are deployed in system environment 400 through CAE 722 and repositories 330, 340. Further, the user or software process may define ASC and SSC types, attributes, and metrics using the CAE manager. For example, to change or define a container rule, the user may program the rule and publish it in a directory using the CAE manager. Following publication, resources in system environment 400 that host CAE 722 may perform a refresh operation to update any container rules in their associated repositories. Accordingly, CAE 700 may then use the updated rule in the next alignment process that occurs based on an appropriate trigger or event that initiates the rule.

### Container Based Security

The distributed nature of system environment 400 may present locality issues associated with the resources included in the environment. Accordingly, certain aspects of the present invention allow SSC 710-3 to be configured as a distributed firewall with firewall capabilities that ensure locality principals associated with the resources are maintained. For example, SSC 710-3 may perform firewall processes that allow it to act as external and/or internal firewalls 402 and 404, respectively. Therefore, as CAE 722 initiates adjustments to the alignment between SSC 710-3 and ASC 710-2, SSC 710-3 may also maintain security requirements associated with resource and/or service assignments to certain domains defined in system environment 400 due to the distributed nature of SSC 710-3 in each resource 700.

In one aspect of the invention, SSC 710-3 may consider the types of services hosted by ASC 710-2 and configure a virtual security domain to ensure data and/or service access is controlled. For example, consider a scenario where ASC 710-2 hosts five types of services, Network Access Services (NAS), Network Identity Services (NIS), Network Portal Services (NPS), Network Computing Service (NCS), and Network Data Services (NDS).

NAS may host application infrastructure components that act as touch points to external clients from network 420 and may require dedicated nodes with certain hardware dependencies. For example, NAS may include web proxies (e.g., reverse proxies for web containers included in NCS). Also, NAS may include portal gateways (e.g., portlet and netlet components that enable secure communications over Secured Sockets Layer (SSL) between clients 410-1 to 410-X to a portal server within NPS. Further, NAS may include WAP gateways (e.g., proxies that allow access to a WAP server within NPS or NCS), external message transfer agents (e.g., a mail proxy/relay that allows secure access to internal message transfer agent servers). Also, NAS may include LDAP proxies and UDDI pointers that are a directory access router that acts as a pointer to internal LDAP servers and private/public UDDI registers. NAS may also include other types of access control resources, such as SOAP handlers (e.g., a handler that allows secure access to SOAP enabled services) and CORBA gateways (e.g., proxies that allow secure access to an internal ORB server).

NIS may include an identity server which is a policy server that manages role based access to services. NIS may also include a directory server that stores user data, context data, certificates, etc., and a LDAP integration server which maintains a virtual directory of meta data. Further NIS may include a LDAP replica servers that are redundant LDAP servers that host certain LDAP data, and a LDAP access router that is an intelligent directory router that routes access to LDAP data based on load, data, schemas, etc. Also, NIS may include a CMS server that is a PKI based certificate server that validates identity of users, devices, networks, and servers.

NPS may include a portal platform server that aggregates content, personalizes profiles of users that allows for customization and personalization of services for a consumer, such as clients 410-1 to 410-X. Also, NPS may include a caching server that is a network server that caches frequently requested content by the portal server to the network dedicated for portal services. Further, NPS may include a content management server that allows for multiple content administrators to manage the content offered by the portal server.

NCS may include a web server that hosts the web container with Servlets and JSPs. Also, NCS may include a WAP server that hosts a container with Wireless Markup Language (WML) components and a transcoding server that translates presentation logic based on JSP tags for one or more devices in environment 400. Further, NCS may include a mobile application server that hosts a process that hosts web applications, and an application server that hosts a container with EJB and JB components. NCS may also include integration servers that hosts EAI and/or B2B components, such as SOAP objects, JMS, and JTS components. Additionally, NCS may include a database server that provides access to one or more databases.

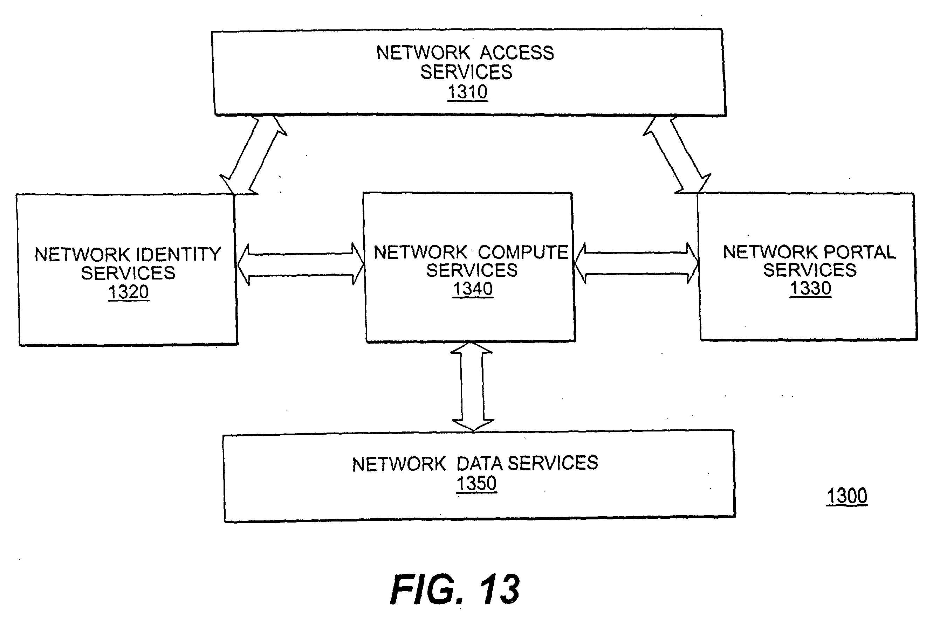

In one aspect of the invention, SSC 710-3 may control ASC hosted services based on a predetermined service access configuration. Fig. 13 shows an block diagram of an exemplary secure service configuration 1300 consistent with certain embodiments related to the present invention. As shown, configuration 1300 includes an access construct that ensures services located within NAS 1310 are allowed access to services within NIS 1320 and connects to access services within NPS 1330. Further, services within NAS 1310 are not permitted services residing in NCS 1340 or NDS 1350. Also, services within NDS 1350 can only be accessed by services within NCS 1340.

Accordingly, certain aspects of the present invention enable environment 400 to implement a multi-layered security scheme, such that a top layer of services deployed as network access services may secure access to external entities by ensuring devices, services, and/or connections from network 420 may only gain authenticated access to the servers within NAS. A lower layer of services deployed as a NIS may apply various security techniques associated with consumer access control, such as authentication, authorization, virus checking, Spam control, intrusion detection, certificate and identity validations, etc. Below the NIS layer, may be a layer of services deployed as network application /web services where the actual services are located (e.g., applications, data stores, etc.). This layer control access using role based interfaces that limit the inter-service communications and consumer interactions.

In another aspect of the invention, another multi-layered security scheme may be employed in environment 400 that controls access for consumers, such as clients 410-1 to 410-X. In this aspect of the invention, environment 400 may implement a top virtual application layer that includes security techniques that establishes secure network connections with clients 410-1 to 410-X. A lower application infrastructure layer that is configured with processes that deploys of a reverse proxy web server or portal gateway server in a secure environment based on the consumer accesses in the virtual application layer. The reverse proxy web server and portal gateway may be located in a network infrastructure layer implemented below the application infrastructure layer.

### Conclusion

As described, systems, methods, and articles of manufacture consistent with certain aspects related to the present invention enable a CAE to dynamically align ASC and SSC techniques to ensure availability, scalability, and security requirements are maintained at a level associated with predetermined business goals and/or service descriptions/agreements. Although certain aspects of the present invention are described herein as being associated with a J2EE compliant platform, one skilled in the art will appreciate that other types of configurations are applicable without departing from the scope of the present invention.

The foregoing description of implementations of the invention has been presented for purposes of illustration and description. It is not exhaustive and does not limit the invention to the precise form disclosed. Modifications and variations are possible in light of the above teachings or may be acquired from practicing of the invention. Additional modifications and variations of the invention may be, for example, the described implementation includes software but the present invention may be implemented as a combination of hardware and software or in hardware alone. The invention may be implemented with both object-oriented and non-object-oriented programming systems. For instance, instead of software based on the Java programming language, other types of languages may be implemented by methods, systems, and articles of manufacture consistent with certain aspect of the invention.

Additionally, the processes described above with respect to Figs. 8 and 12 are not limited to the sequences illustrated in these figures. One skilled in the art will appreciate that variations to the sequence of steps included in these processes may vary without departing from the scope of the invention. Further, additional steps may be included in these processes to provide features consistent with aspects of the invention.

Additionally, although aspects of the present invention are described as being stored in memory, one skilled in the art will appreciate that these aspects can also be stored on other types of computer-readable media, such as secondary storage devices, like hard disks, floppy disks, or CD-ROM; a carrier wave from the Internet or other propagation medium; or other forms of RAM or ROM. The scope of the invention is defined by the claims and their equivalents.

### Annex A

### Scaling J2EE™ Technology Applications Based on Application Infrastructure Techniques

### By Rakesh Radhakrishnan

### Introduction

In any computing environment, especially in dot-coms, scaling applications to support millions of users, thousands of concurrent users, expanding data and high volumes of transactions is a must. Java™ technology, both a programming language and a technology platform, addresses this issue via many techniques.

The platform-independent nature of Java technology offers enormous value to application developers and users: vendors do not have to develop their products for multiple OS platforms, and users can access and run the applications from nearly any type of device on any type of network.

This flexibility is made possible by the byte-code generation technique of the Java Virtual Machine. All Java code is compiled to byte code at run-time prior to execution by the virtual machine (VM) built for a specific platform. The VM recognizes the flavor of OS and the CPU architecture on which the code has to be run. This functionality, which makes platform independence possible, acts as a double -edged sword: on one end it offers the benefit of "Write Once, Run Anywhere[tm]," and on the other, it hinders performance due to the overhead associated with an additional layer, which we refer to as the "virtual platform layer."

### Leveraging the Extensible Nature of Java Technology

Business services, such as an employee portal or an online electronic store, that are built on Java technologies such as JavaServer Pages (JSP), Servlets, and Enterprise JavaBeans (EJB), are expected to leverage the extensions made to the application infrastructure and to act as a more scalable application, primarily due to the multi-tiered nature of the infrastructure.

For example, if an application such as an employee portal is suffering from bottlenecks associated with the employees' Java mail client, the natural approach is to redesign and extend the basic infrastructure service. If the online catalog that provides detailed product literature for an online store (Servlet/JSP) is acting as the bottleneck, the Web and Web proxy server's architecture can be extended.

Scaling a J2EE technology-based application can be achieved by scaling the application infrastructure, assuming the application is multi-tiered and built on top of these infrastructure services.

A typical application based on J2EE technology has the following components:
Servlets and JSPs on the Web server
EJB components served by the application server
SQLJ (embedded SQL statements in Java code) running on the database servers Authentication/authorization running on the LDAP server
J2EE components signed and certified by the certificate server
XML-based inter-application integration components running on EAI/B2B integration servers Java Message Service (JMS) (if asynchronous transactions are executed by the application, indicating a messaging server is in use such as Tibco)
Synchronous application transactions (which are run on a transaction server such as Tuxedo)

### Overview of J2EE Application Infrastructure

The basic infrastructure services in a typical dot-com environment and their respective J2EE components include:

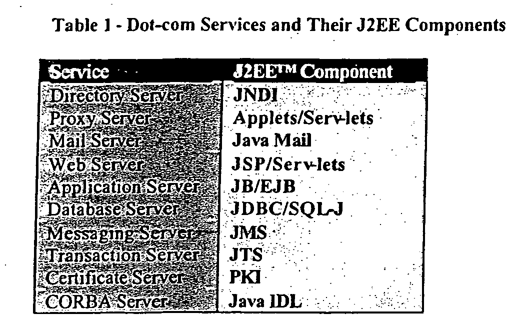

Not all dot-com environments have implementations of all these basic services; often they consist of just a few of them. The methods associated with scaling these services are shown in Table 2.

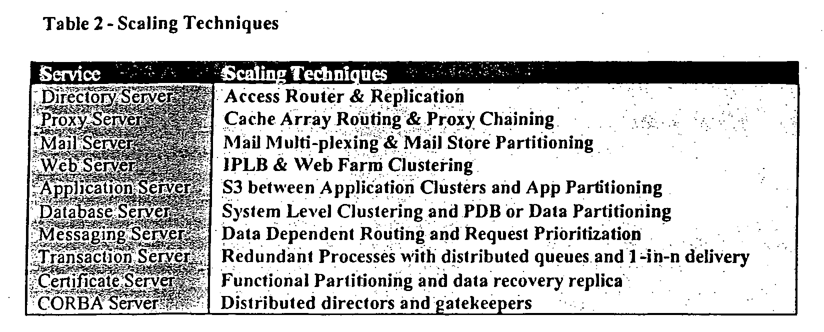

Caching or traffic servers can scale the entire application environment by storing frequently requested information at the edges of a network. By caching information locally, traffic servers minimize the amount of "upstream" bandwidth required to service end-user requests for information. This approach reduces both the amount of traffic on the network and the time it takes end-users to retrieve information.

In the following sections we take an in-depth look at each of these scaling techniques.

### Scaling Techniques

### Directory Server - Access Router and Replication (e.g., iPlanet Directory Server)

The directory access router enables the directory infrastructure to be highly scalable as well as available through automatic fail-over and fail-back. It also provides the capability to configure intelligent load balancing across multiple directory servers and replicas in multiple geographic locations.

Figure 1 shows a typical implementation of an LDAP server in an enterprise.

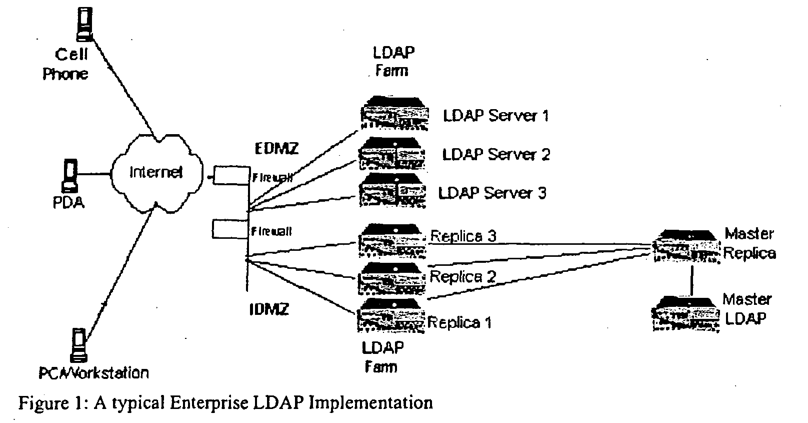

In some cases, a set of proxy-server farms residing in the external DMZ (EDMZ) look up the LDAP database in the internal DMZ (IDMZ) for authentication purposes. However, if the LDAP schema is implemented where there are multiple directory stores in multiple locations, LDAP data must be synchronized. This often happens when two or more enterprises have just merged or one has been acquired.

Prior to the directory access router (LDAP gateway), the directory server scaled by using directory replication. Multiple replicas essentially acted as cached (read-only) LDAP data within an enterprise's network. This was based on one LDAP database, maintained by the directory master (with write permission). The master replica handled the actual data propagation to multiple replicas. This scheme offloaded the workload associated with LDAP data propagation to the master replica and allowed redundancy for the master LDAP server.

### Access Routing

Now, with the second and advanced technique of LDAP access routing, the LDAP servers can actually scale between multiple networks as well as multiple LDAP schemas. Mapping different LDAP client attributes to different directory server attributes is also dynamically accomplished by this LDAP gateway. Figure 2 illustrates using LDAP gateways for scaling.

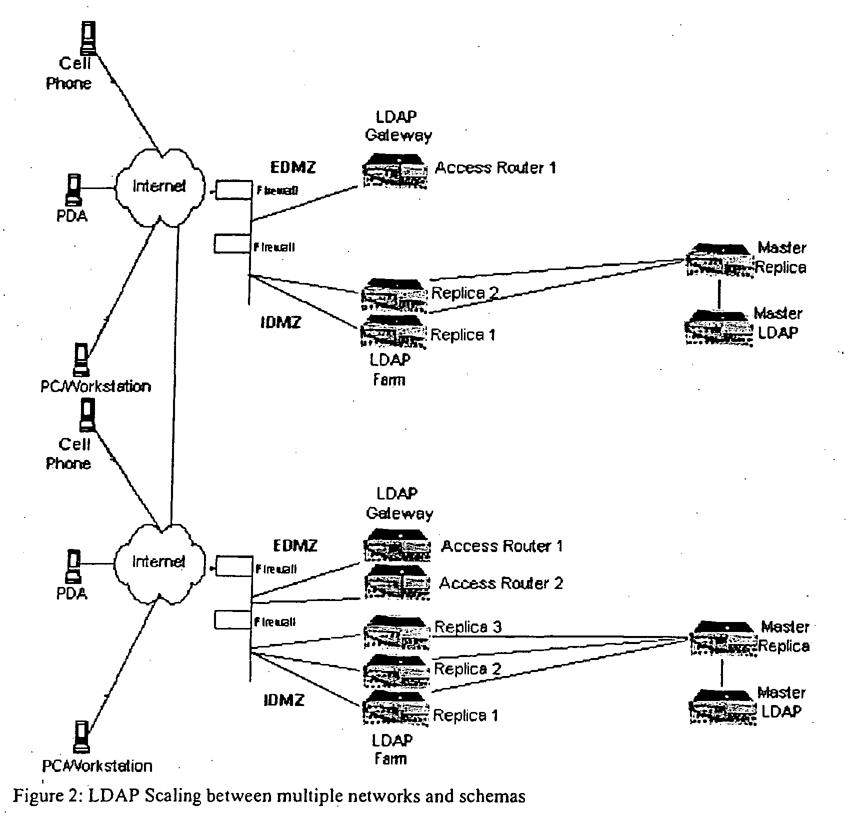

If both user information and the client attributes associated with the client device are stored in network 1, the LDAP gateway in network 2 will forward the connection automatically to the LDAP gateway in network 1, which in turn will access the appropriate LDAP data from the LDAP replicas.

The LDAP gateway approach to scaling is especially useful when LDAP data is distributed across multiple networks and different schemas (enterprise mergers). Additionally, fail-over and fail-back is achieved between LDAP replicas on the same network or across multiple networks when the access router is implemented.

### Proxy Server - Cache Array Routing and Proxy Chaining (e.g., iPlanet Proxy Server)

There are many reasons for using proxy servers:
- Efficient caching
- Limiting access to and from
- URL filtering
- Tunneling

Proxy servers are typically deployed on four-way systems located in the EDMZ. The proxy-server farm caches the most frequently accessed static Web content delivered by the Web server farm located at the IDMZ.

Just as directory access routers are also called "LDAP gateways," the proxy servers are also generally referred to as "HTTP gateways."

There are primarily two techniques associated with scaling a proxy implementation:
Proxy chaining when scaling logically between multiple proxy servers
Cache array routing technique -- scaling physically between multiple proxy server machines

### Proxy Chaining

Through proxy chaining, hierarchical caches are built to improve performance on internal networks.

These hierarchical caches can be implemented within a proxy server or in a proxy farm implemented within the EDMZ. This is "logical" as opposed to "physical" because of the organized layout of the cached content. The cached data is hierarchically located within or between multiple proxy systems. A proxy hierarchy is shown in Figure 3.

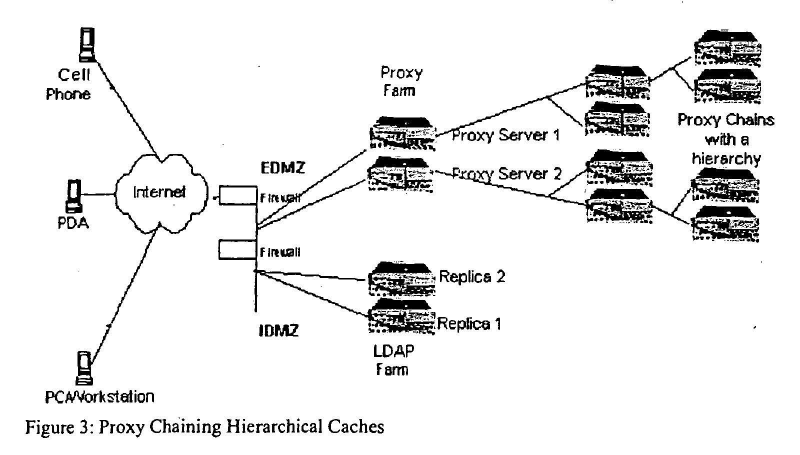

### Cache Array Routing

On the other hand, Cache Array Routing Protocol (CARP) techniques use a deterministic algorithm for dividing client requests among multiple proxies. The cache content is not logically organized and can be distributed between multiple proxies. If a proxy does not hold the content requested by a client, instead of predicting the proxy most likely to contain the cached content, it uses a deterministic algorithm to choose another proxy.

When using this technique alone without proxy chaining, typically the proxy farm is vertically scaled within a four-way system and horizontally scaled from 2 to 12 systems. A typical cache array routing implementation is shown in Figure 4.

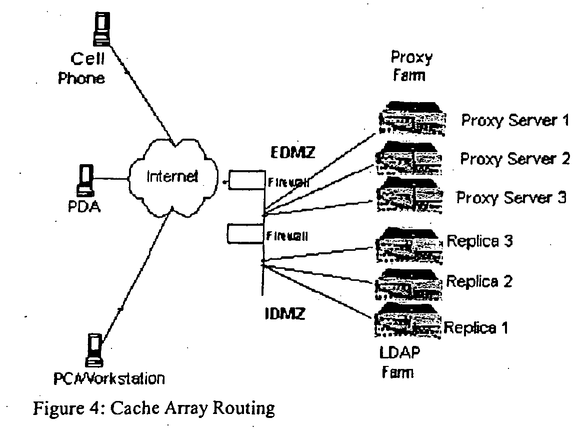

In many dot-com enterprises, because the proxies boost performance for the entire site with cached content, both these techniques can be combined and adopted to offer efficient proxy scaling. The cached content may include static HTML pages, applets, documents, images, and so on.

### Mail Server - Mail Multiplexing and Mail Store Partitioning (e.g., iPlanet Mail Server)

Generally, the architecture in many mail implementations is logically and physically a single tier. This presents enormous challenges for scaling the mail system. A very simple implementation of a mail server can include a single physical machine residing in the internal DMZ (IDMZ) running SMTP, IMAP and POP. An internal DNS system resolves connections to the mail system after a connection is received from an external DNS server for that domain.

### Single Tier with Proxies

Even in a simple mail implementation, scaling vertically within the box has limitations, and the server will simply stop accepting new connections when system resources are completely consumed by connected users.

Figure 5 shows mail gateway/proxies implemented in the external DMZ (EDMZ) to protect the main mail server in the EDMZ from overload -- like LDAP gateways for the directory server.

In this case, there is a certain amount of horizontal scaling achieved. The mail system in the internal network is also the mail store that typically has storage attached (directly or over the network).

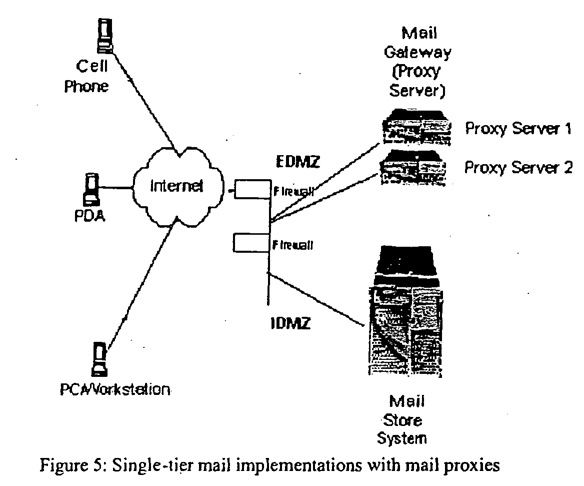

### Mail Multi-plexer

If the mail environment is at peak capacity and requires scaling even further, it is possible to implement amail multi-plexer between the gateway and the mail system that handles the routing of the mail requests based on mail/data partitioning between two or more mail stores. This configuration is shown in Figure 6. In certain cases, the mail-multi-plexer can route traffic based on protocol, IMAP, POP or HTTP.

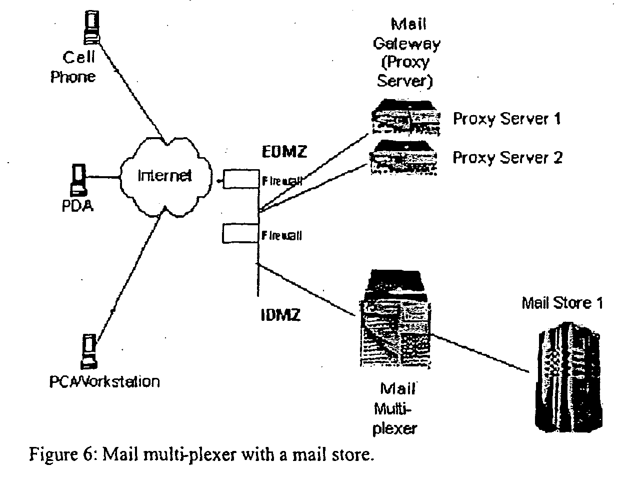

### Mail Multi-plexer with Mail Store

To the extent possible, the mail store is vertically scaled within a physical server. Data partitioning - a horizontal scaling technique -- is typically adopted as the last resort/technique to scale, as shown in Figure 7.

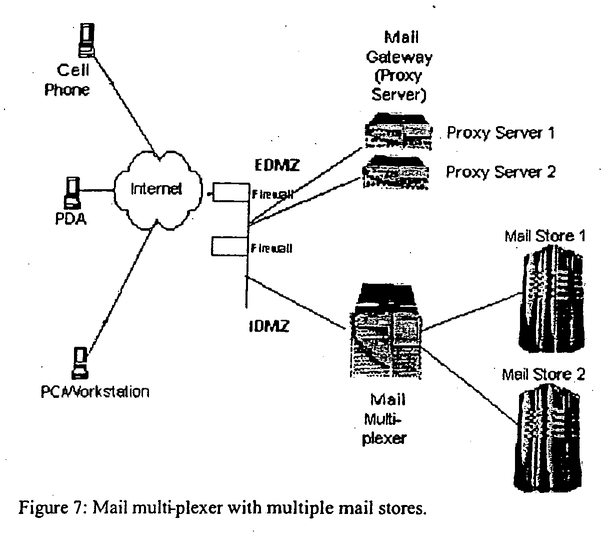

### Web Server - IPLB and Web Farm Clustering (e.g., iPlanet Web Server)

The proxy server farm handles client connections after appropriate name resolution and authentication/authorization. If the requested content is available locally within the proxy farm cache, the proxy server serves it. If the request requires certain logic (presentation or business) execution, or if the content is not available locally, the Web server is contacted.

Typically a large dot-com Web server implementation has the following characteristics:
- It incorporates horizontal scaling techniques for Web servers.
- The Web servers are usually based on multithreaded and multi-process architecture.
- The servers support multiple CPUs to scale vertically.
- Typically these systems are deployed on multiple-CPU servers.

There are two techniques primarily associated with Web server horizontal scaling between multiple systems:
- IPLB (IP-based load balancing)
- Web server clustering

### IP-based Load Balancing (IPLB)

IPLB is the simple approach, where a level 4 switch routes HTTP connections between multiple Web servers based on a simple load-balancing algorithm (round-robin, uptime, etc.). In this approach, we assume that all Web servers in a farm are configured exactly the same way with exactly the same content. There is usually no communication between these Web servers; the IPLB switch detects new nodes added to a farm and balances HTTP load across the new systems. This approach is shown in Figure 8.

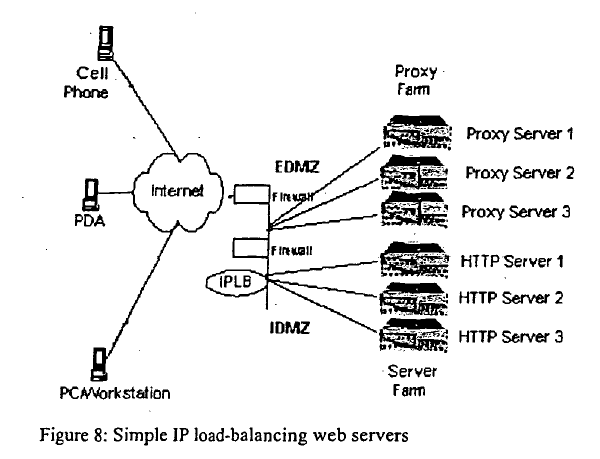

### Web Server Clustering

Unlike IPLB, Web server clustering is more complex. With the IPLB technique, each Web server runs its own admin server. With clustering, a group of Web servers are managed and administered from a single server. All Web servers in the cluster share the same configuration files. The master server (the one that runs the admin server) manages the other Web servers in the cluster in a master/slave relationship. A simple cluster is shown in Figure 9.

The master server automatically starts failed processes, handles fail-over and manages all initial connections, routing them only to those available slaves in the Web server farm. The master server also maintains connection information about the application servers the cluster can access to execute logic.

In this approach, the load-balancing capability is offloaded from an external IPLB switch to the application code, so these techniques are mutually exclusive -- you would not use both IPLB and clustering together.

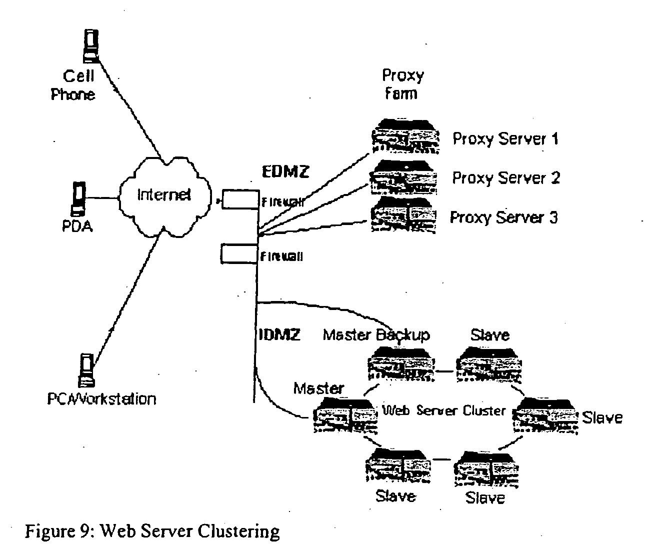

### Application Server - State/Session Synchronization (S3) Between Clusters and Application Partitioning (e.g., iPlanet Application Server, ATG Dynamo)

Application servers play a very significant role in today's dot-com environment. Application server platforms based on J2EE technology offer application-level scalability by distributing application components across multiple tiers and between multiple application servers (components based on technologies such as EJB[tm], JSP[tm], Servlets, RMI Objects, and so on). Typically these application servers are multiprocess and multithreaded. They are expected to scale vertically anywhere between 4 to 8 CPUs. Application servers are typically deployed on such systems as Sun Enterprise 420s, 4500s, 5500s, 6500s or an E10000 domain.

Two techniques are commonly used for horizontal scaling:
- Application partitioning
- Application-level clustering

### Application Partitioning

Application partitioning is the easier approach of the two, but not the most efficient. Using this technique, the scaling is achieved by locating a certain set of application logic on one server and another set of application logic on another. For example: The electronic bill payment and presentment logic could be supported by one platform, while the customer self-service application is supported by another, with the e-store logic possibly supported by the third platform. Based on user profiles and the state of the connection, the Web server connects to and invokes logic from the appropriate app server as requested by the client. This simple configuration is shown in Figure 10.

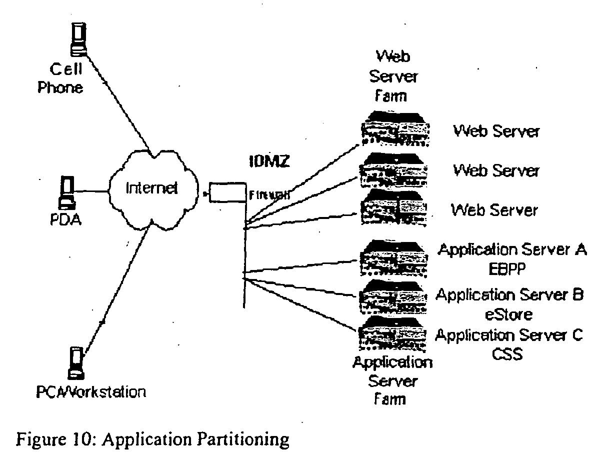

### Application-level Clustering

The alternate technique is not mutually exclusive. In many cases the two are combined. This approach, referred to as application-level clustering, has application components (EJB, JSP, Servlet, RMI objects) distributed redundantly between multiple application servers.

The state and session of each client connection is maintained by the primary application server, which accepts all user connections initially, and then balances load between the remaining backup and alternate application servers. The backup will act as the primary in case the primary fails. The state and session information is constantly synchronized. This technique is shown in Figure 11.

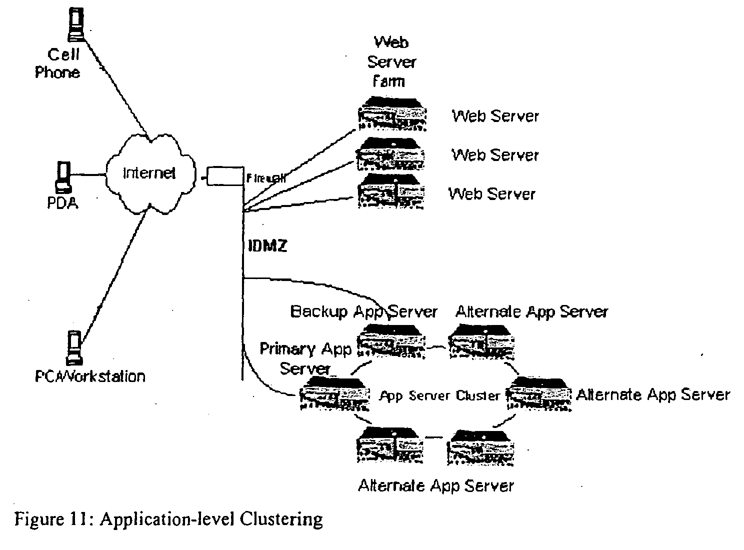

### Combining the Two

If these two techniques are combined, application-level clustering is maintained for each application partition. Containers in the app servers offer multithreading, load balancing, connection pooling, database caching and automatic fail-over for code. A implementation combining both techniques is illustrated in Figure 12.

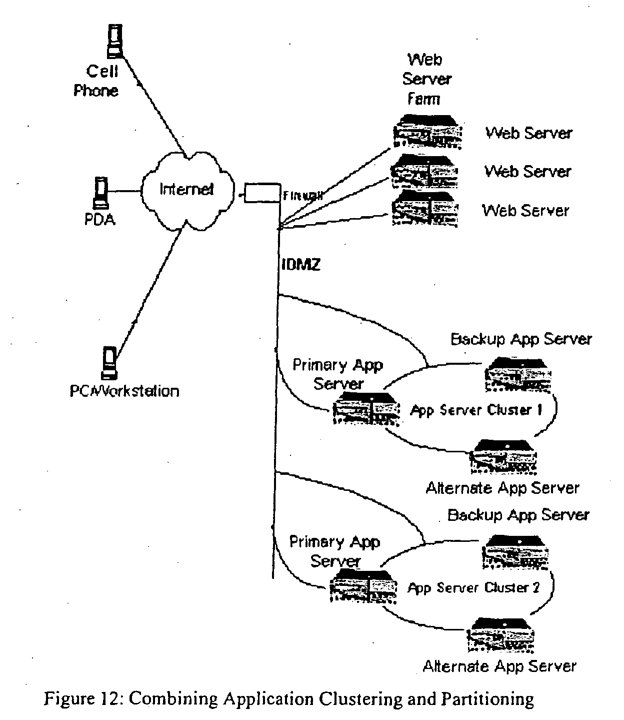

### Database Server - System Level Clustering and Parallel Databases (e.g., Oracle 8i)

The ideal approach to scaling the database management system is vertical (scaling the DB system between CPUs within a server). If horizontal techniques are used with data partitioning and distributed transactions, database synchronization typically becomes a significant issue.

Most DBMS (relational and object-relational) can scale vertically within a box due to the multi-process and multi-threaded architecture of these systems. Figure 13 illustrates a typical single-node configuration.

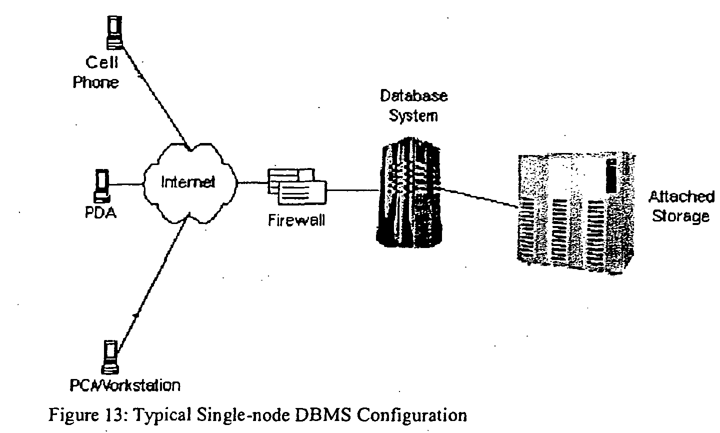

Some of the best TPC-C benchmarks are accomplished on single-node configurations that support several hundred thousand transactions per minute.

In cases where the vertical scalability is not sufficient, horizontal scalability can be achieved via system-level clustering and parallel databases (when two or more nodes are submitting transactions to the same database), as shown in Figure 14.

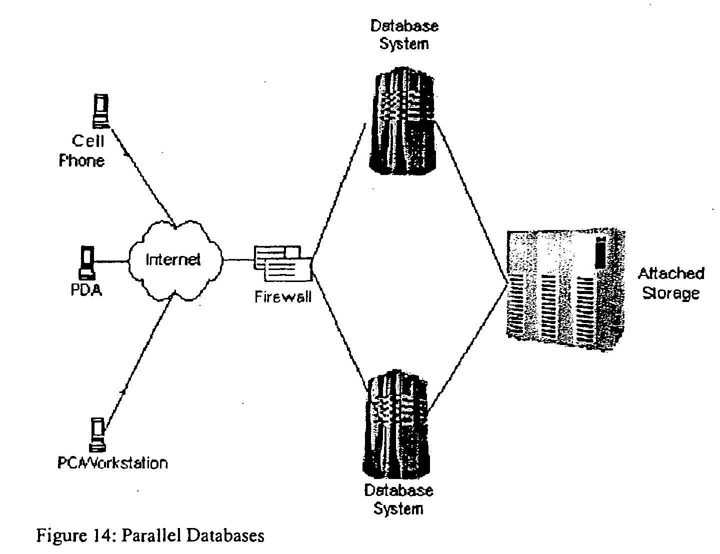

Scaling can extend further based on the I/O characteristics of the database. If the database is more read- than write-intensive, it is easier to introduce a 4-node cluster, with 3 read nodes and 1 write node on a SAN (storage area network) topology, as shown in Figure 15.

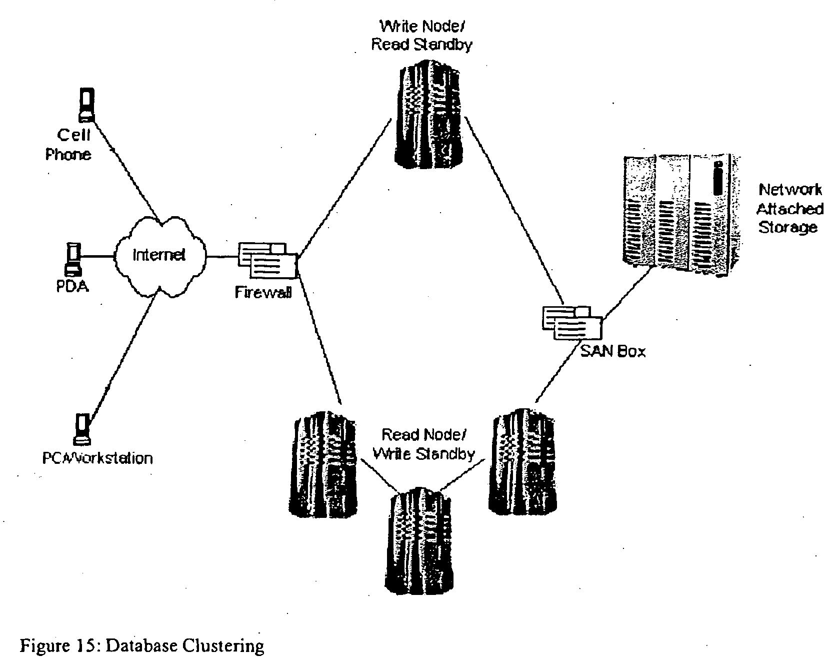

This approach to scaling is appropriate for read-intensive databases; if the database is write-intensive or equally balanced, more nodes should be added to handle writes. Distributed lock manager (DLM) plays an intricate role in such configurations. DLM ensures data integrity when two are more nodes are submitting transactions to the same database.

It's also possible to accomplish database system scaling via data partitioning. In data partitioning, the data is sliced into manageable pieces (for example, based on geography, alphabetic groups, etc.). This partitioned data is then managed by its own dedicated database management system.

### Messaging Server - Redundant Processes and Distributed Queues (e.g., Tibco)

Messaging servers based on Java[tm] Message Service technology (JMS) are capable of sending and receiving messages to and from Java and non-Java applications (within the same message domain) on any platform via both publish/subscribe and request/reply models. These systems are mission-critical because they form the foundation of message-based Enterprise Application Integration (EAI) - integration between multiple applications deployed within a single enterprise's network.

Messaging systems typically utilize a distributed architecture to eliminate bottlenecks and single points of failure. Applications require reliable message relaying, certified and transactional, as appropriate for each message exchange. Messaging can be synchronous or asynchronous, locally delivered or sent via a WAN or the Internet. Generally speaking, messages are self-describing and platform-independent. Scaling the messaging platform relies on redundant processes and distributed queues. When messages are sent from one application to another, two or more redundant messaging processes receive the message, and distributed queues are built up at the same time. This configuration is shown in Figure 16.

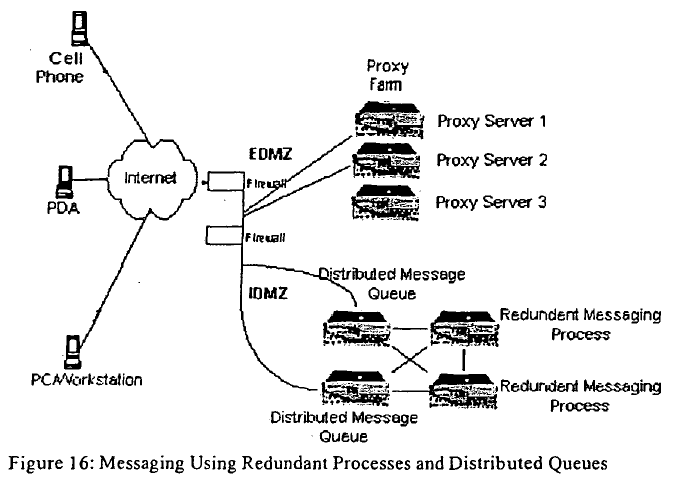

To ensure that the message is not applied twice to the receiving application, there is a one-in-n delivery algorithm built into the messaging platform. Essentially this ensures that one successful attempt is propagated to all redundant processes. JMS-based systems optionally support distributed transactions based on Java Transaction Service (JTS).

### Transaction Server - Data-dependent Routing and Request Prioritization (e.g., BEA Tuxedo)

Transaction servers enable applications and application servers to control the scope and duration of transactions and coordinate transaction completion across transaction managers. At a low level, JTS complies with Object Management Group's (OMG) OTS 1.1 (object transaction server) specifications and in certain cases meet XA compliance. While JMS is used for integrating loosely coupled applications, JTS is for tightly-coupled applications.

The scalability of the transaction servers is built into these systems based on techniques such as data-dependent routing and request prioritization.

### Data-dependent Routing

Data-dependent routing is a technique in which a transaction-service request is mapped to a specific server group (physical and/or logical) based on a value contained in a designated field within the data buffer. Transaction-server groups are mapped to specific resource manager/database instances, and a transaction request is routed to that specific service/resource manager combination.

Here's an example. A bank database may be horizontally partitioned by account number, with different ranges of accounts stored in separate, dedicated database instances. Instead of coding the specific partitioning information into the application code for accessing the accounts, you can use the JTS-based transaction manager data-dependent routing. In effect, the transaction manager looks at the specified data value, consults routing information stored in a tool such as a bulletin board, and dispatches the request to a database instance operating on the correct data partition, as shown in Figure 17.

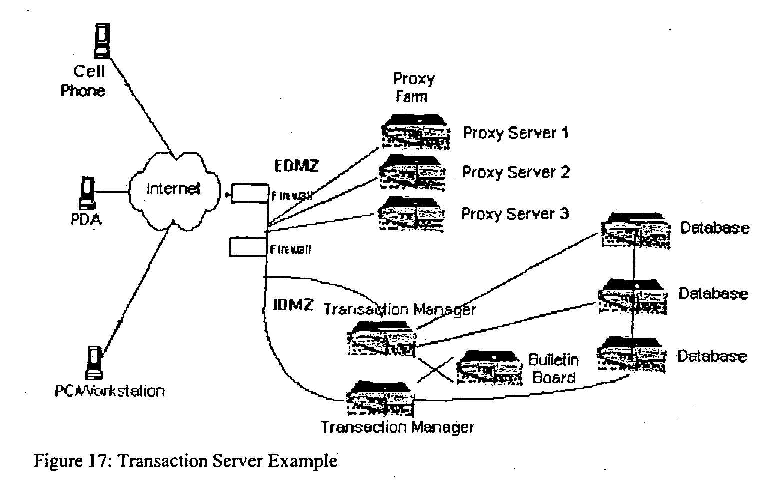

If changes are made to the database partitioning (migrating a partition to a new server, or changing the distribution of accounts across existing partition instances), one needs only to change the transaction manager data-routing information. The application code is isolated from this issue. From this standpoint, the transaction service offers tremendous value as middleware between applications, application servers and different data stores.

### Request Prioritization

Request prioritization is another core capability offered by JTS-based transaction managers/servers. Transaction-service requests often require a higher priority than others. For example, in an airline reservation system, an airline seat cancellation has a higher priority than a seat reservation: for most airlines, canceled seats must be rebooked as soon as possible. Transaction-request prioritization occurs at the service-queue level as illustrated in Figure 17. The transaction services offered by the JTS-based transaction server are scalable and do not impact the performance of high-priority transactions via this technique.

### Certificate Server - Functional Partitioning and Workload Distribution (e.g., iPlanet™ Certificate Server)

Certificate servers are critical for applications based on J2EE and XML technologies, especially in the financial space. Component-level security is achieved through digital signatures of Java[tm] and XML components. Application-level security and intrusion detection can be achieved via certified components. These techniques ensure that transaction integrity is maintained.

Typically the certificate authority for J2EE technology-based applications is outsourced to well-known certificate authorities (CAs) such as Verisign, Entrust, Identrus, and so on. In those unique cases where the CA is hosted locally, the certificate management server (CMS) can be scaled through a simple and successful approach of functional partitioning and workload distribution.

The CMS can be functionally partitioned into a RM (registration manager), a CM (certificate manager) and a DM (data store/data recovery manager) - as shown in Figure 18.

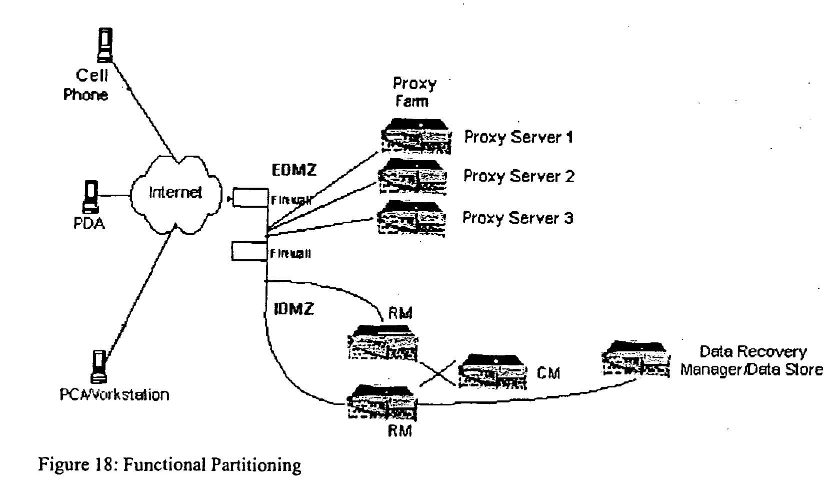

The data manager can further be extended into DM-master and DM-replica. Through this approach, if the master data store fails, the replica takes over as the master, and vice versa. You can also configure the RM to take over the role of the CM when the CM fails, and vice versa. Figure 19 shows the addition of a second DM.

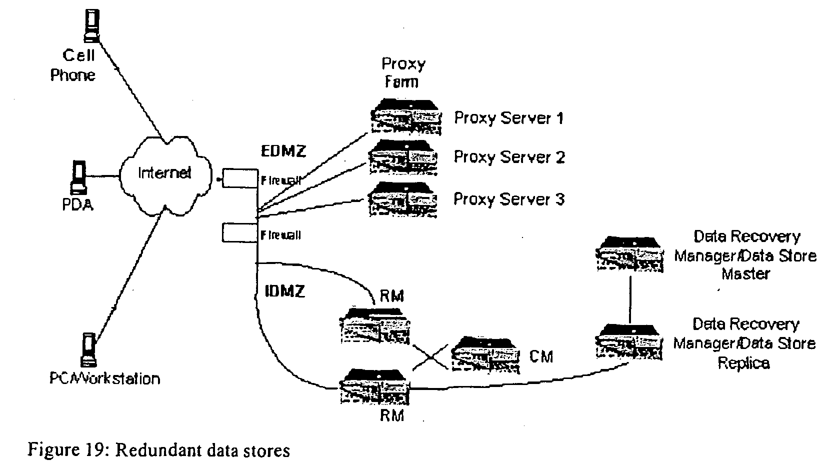

### CORBA Server - Load Balancing and Gatekeeper (e.g., VisiBroker or Iona Orbix)

CORBA (Common Object Request Broker Architecture) servers, such as Inprise's VisiBroker or Iona's Orbix, are required in dot-com environments where applications based on J2EE technology must communicate and interact with non-Java applications (like those built on C++). Enabling this communication in the J2EE technology-based framework requires Java IDL. You can also use RMI over IIOP (Internet Inter-ORB Protocol). (For more information on this topic, see the Java IDL FAQ on Sun's Java technology Web site.)

Java IDL adds CORBA capability to the Java platform, ensuring standards-based interoperability and connectivity with applications not based on Java technology. Utilizing the industry standard OMG IDL (Object Management Group Interface Definition Language) and IIOP defined by the Object Management Group, Java IDL makes it possible for distributed Web-enabled Java applications to transparently invoke operations on remote network services built with other programming languages.

There are two primary techniques associated with scaling CORBA servers: load balancing across multiple CORBA servers and using a gatekeeper.

### Load-balancing CORBA Servers

You may find yourself faced with building a dot-com environment based on J2EE technology where there are frequent inter-application interface calls via a CORBA server. In such scenarios the load on the CORBA server may be heavy, and thus the CORBA server could be a potential bottleneck in the environment. Distributed directory services can dynamically keep track of objects installed and/or active in the ORB (Object Request Broker). Server objects register with intelligent agents at startup. Client applications seeking to communicate with a server object of a particular type obtain an object reference from these intelligent agents, and then they re-use the object reference to communicate directly with an instance of the server object. Typically there is an object activation/deactivation daemon, which runs on each machine that hosts server objects. It cooperates with the intelligent agents to ensure that server objects are activated on demand and are shut down when they are no longer needed. Through this technique you can achieve load balancing within and across multiple CORBA servers.

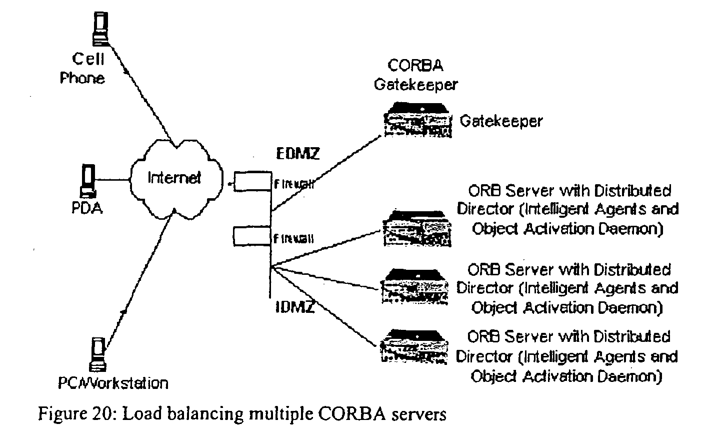

### Gatekeeper

The gatekeeper is the second technique associated with scaling CORBA servers. For this technique to be effective, client applications must be able to access server objects independent of their physical locations. Also known as location transparency, this is a fundamental principle of component-based distributed computing.

With an ORB gatekeeper, applications meet the requirement of location transparency. The ORB gatekeeper's role is to establish itself as a proxy object for all incoming requests from client applications. Should the server object not be available on the application host, the gatekeeper automatically creates a proxy object, thus coordinating access to all server objects that would otherwise be unreachable.

Additionally, the gatekeeper can route IDL traffic between multiple ORB servers dedicated to individual applications built on specific programming languages (such as, Java, C and C++).
This technique is shown in Figure 21.

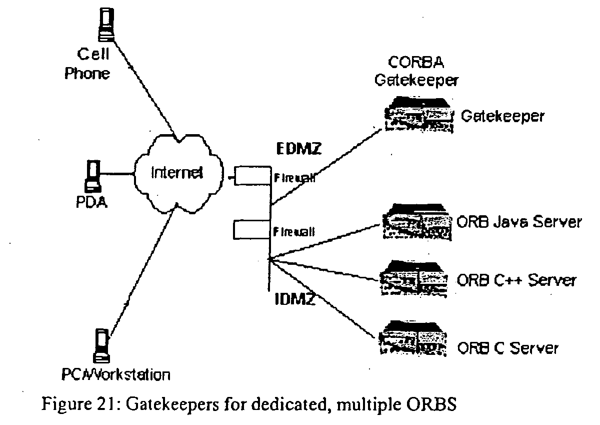

An alternative approach to boost performance is to build Java Native Interfaces (JNI) to speed up access and inter-application calls.

### Conclusion: Scaling Techniques, Nine Design Principles

The techniques discussed in this series address nine fundamental design principles, namely:
*1*. ***Locality*** *- Data-dependent routing - JTS. Location of data is taken into account when addressing distributed transactions.*
*2.* ***Efficiency*** *- Directory access router and replication - JNDI*. *Updates to master do not affect performance of LDAP data replica propagation.*
*3.* ***Modularity*** *- Building modular and de-coupled applications with presentation logic in Web components and business logic in EJB components, and therefore, paving the wayfor both vertical and horizontal scaling in multiple tiers.*
*4.* ***Distribution*** *- IPLB for distributed Web components - Applet*/*Servlet*/*JSP*. *Distributed Web components are load-balanced and redundantly available*.
*5.* ***Redundancy*** *- Redundant processes with distributed queues* - *JMS. Redundant messaging processes address guaranteed message delivery along with distributed queues.*
*6.* ***Parallelism*** *- Parallel DB - SQLJ. Parallel execution of transactions and embedded SQL in Java by multiple database nodes against the same database.*
*7.* ***Workload*** *- CARP and proxy chaining - Applet*/*Servlet*/*JSP. Workload is evenly distributed between chained proxies content.*
*8.* ***Sharing*** *- CM, RM and DRM - Certificates. Central certificate and registration authorities are shared for certification of a site, client, application components, and so on.*
*9.* ***Isolation*** *- Isolation of interfacing logic to non-Java application via Java IDL components and CORBA servers.*

It is the architect's role to identify bottlenecks - or potential bottlenecks - in the environment and apply the appropriate scaling technique to the application infrastructure to give a boost to the performance of the application.

The architect should also incorporate high availability, especially when introducing redundancy for scalability purposes. This recommended approach achieves two objectives, scalability and availability, with a single effort. All the techniques discussed in this series address both availability and scalability of the application infrastructure, in that they introduce redundancy in one form or another.

Based on your requirements, choose an appropriate technique when incorporating scaling into an application infrastructure service that supports a J2EE application.

### Annex B

### Maximizing uptime for J2EE Applications ■ Based on Application Infrastructure HA Techniques

### 1.0 Introduction

In any computing environment, especially in Dot-Com Environments (Application Service Provider, Network Service Provider, Internet Service Provider, Storage Service Provider, XSP, e-Commerce and e-Business environments), maximizing uptime and ensuring transparency of hardware/software failures for applications that are revenue generating, mission-critical and business-critical is a given non-functional requirement.

Java, being, more than a programming language, a Technology Platform addresses this issue via many techniques. The unique characteristic of Java as a programming language is its platform independence, which offers enormous value in terms of ensuring that web-facing applications can be accessed by any client device by anyone at anytime, from anywhere. Vendors and developers build their business, presentation and data logic in Java as EJB's, Java Server Pages, Java Stored Procedures, Servlets, Applets, etc., to a specific version of Java and do not have to face the hassles associated with developing client side user interfaces to many operating system flavors and versions. Similarly users can access and run the applications served by a heterogeneous platform over any type of network (Ethernet LAN, ATM WAN, Fiber Optic VAN or a Wireless MAN).

The client side presentation logic is executed in the back-end network and only rendered to multiple client devices and systems, ensuring transparency of failures to the client system or device, even with application component failures, application infrastructure failures, hardware failures or complete system failures, since the client to these server components is truly within the backend and completely managed within the network hosting the application, is made possible. The web components that run servlets and JSP's generate the user interface and are only rendered to the client systems.

This paper's objective is to identify multiple techniques with which one can architect J2EE™ solutions based running on application server platforms, to address this availability issues and maximize uptime of the application or the services offered even with hardware and software failures on the server side..

A typical J2EE Application runs the Servlets and JSP components on the web server, many such components could be cached by the web proxy server, EJB components are served by the Application Server, SQLJ-or- Java/Stored Procedure (embedded SQL statements in Java) components are running on the DB servers, authentication/authorization components running on the ldap server and the J2EE components signed and certified by the certificate server. If XML based inter application integration is used then these XML components are run on an EAI or B2B application integration servers (like Web methods). Using JMS if asynchronous transactions are executed by the application, then a messaging server is in use (like Tibco). Similarly if synchronous application transaction is run a transaction server is used (like Tuxedo). Each application infrastructure vendor extends support to J2EE, by adhering to its specifications.

Therefore, in order to ensure uptime for the J2EE™ application all application infrastructure solutions require to be designed to handle failures with the appropriate HA techniques. A J2EE™ application is prone to down time if any one of the application infrastructure solution acts as a Single Point of Failure, therefore in order to maximize the uptime of the J2EE™ application all application infrastructure solutions supporting the J2EE™ application has to incorporate redundancy via one technique or the other.

A simple example can illustrate the pervasive nature of availability in a J2EE™ Environment. An ASP built its data center with redundancy in every hardware and software component possible. The design included dual ISP's, redundant network access points, Wide area Load directors, redundant routers, HA firewalls, completely redundant HA systems, DR site, site to site replication, global clustering, etc. However their environment still went down for the duration of 6 hrs caused by a trivial and unpredicted issue. The content of the primary URL was changed with an advertisement banner (a file larger by a few KB's than the previous one), which forced a bug in the HTTP server to surface and causing it not to respond to URL lookups. The site was down purely due to the fact that there were no stringent testing policies when content was changed and no formal procedure to handle change management to the content. It was a people & process issue and not a technology issue that caused this downtime.

The most important part is not only to address fail-over techniques based on built-in and add-on solutions for the application infrastructure solutions, but also to address connection fail-over with synchronized state and session data, to make it seamless to the end-user.

This paper covers a sample High Availability (HA) design for a J2EE™ initiative. The HA architecture is designed to ensure application or rather business service, availability with failures in:
(a) Disks and Storage Subsystems
(b) Connections to the Storage Subsystems (SAN switches)
(c) Database Servers (Oracle & Sybase)
(d) The Sun Enterprise™ 10000 domains supporting the database servers
(e) Connectivity to the Database Servers
(f) Application Servers (iAS 6.0)
(g) The Sun Enterprise™ 10000 domains supporting the Application Servers
(h) Connectivity to the Application Servers
(i) Web Servers (iPlanet Web Server 4.x)
(j) The Sun Enterprise™ 420's supporting the web servers
(k) Connectivity to the Web Servers
(l) Directory Servers (iDS 4.1.x)
(m) The Sun Enterprise™ 420's supporting the Directory Servers
(n) Connectivity to the Directory Servers
(o) Authenticating Proxy Servers
(p) The Sun Enterprise 420's supporting the Proxy Servers
(q) Connectivity to the Proxy Servers
(r) B2Bi or EAI servers
(s) Connectivity to the Integration Servers
(t) The Sun Enterprise™ 420's supporting the Integration Servers

Different approaches and techniques associated with load balancing and fail-over will be utilized as part of this architecture to address availability issues at each layer. They are:
(a) Load Director (IPLB) at the web tier
(b) Web connection plug-in between the web and the application tier
(c) Application level clustering between the application servers in the application tier
(d) Redundant Application connectivity to Database Servers
(e) Replication/Multi-Master for the Directory Server
(f) Cache Access Routing Protocol (CARP) for the Proxy Server
(g) System level clustering at the database tier using VCS
(h) Database Disk Mirroring using LVM
(i) Split-DNS with primary and secondary for Domain Name Service
(j) Messaging Server redundancy
(k) Transaction Servers distribution
(l) Integration Server-Cluster Store/Repository

Additional HA factors such as redundant load balancing switches, redundant routers/switches that leverage protocols such as HSRP (hot standby routing protocol) & VRRP (virtual redundant routing protocol), redundant network access points, redundant SAN switches are assumed to be planned for deployment. The focus here in this document is the HA approaches and techniques adopted to address availability concerns in all tiers of the application infrastructure that hosts J2EE™ applications such as EBPP, CRM, SCM, ERP, etc.

### 1.1 An overview of the overall HA architecture

In order to understand the overall HA architecture, it is important to understand the logical flow of user connections and application execution, after the relevant authentication and authorization is completed successfully.

After successful domain name resolution, authentication and authorization, the Level 4-IPLB switch services the browser based client request. The switch balances the HTTP connection request load, by distributing the connections among multiple web servers (a sample server farm of Sun Enterprise™ 420R's). In situations where a web server is over loaded or is not available due to hardware or software failure, the IPLB switch excludes connectivity attempts to that web server and continues to forward the HTTP requests to the remaining live web servers. When the web server returns to normal operating status, the IPLB switch automatically re-establishes connectivity and load is balanced across all servers on the farm.

The web server farm accepts HTTP requests and handles the presentation logic. Each server is configured via the web plug-in so that it can communicate to the application servers and can handle multi-casting. Once a web server connects to an application server for an individual user session, it continues to maintain that session with the same application server if that application server is live (known as sticky load balancing).

State and session information is maintained between the application servers designated as primary sync server and backup sync server. All application logic execution is handled by the primary sync server or forwarded by the primary sync server to the backup server for execution based on load conditions at a given point in time. Figure I below provides an architecture overview from a HA perspective.

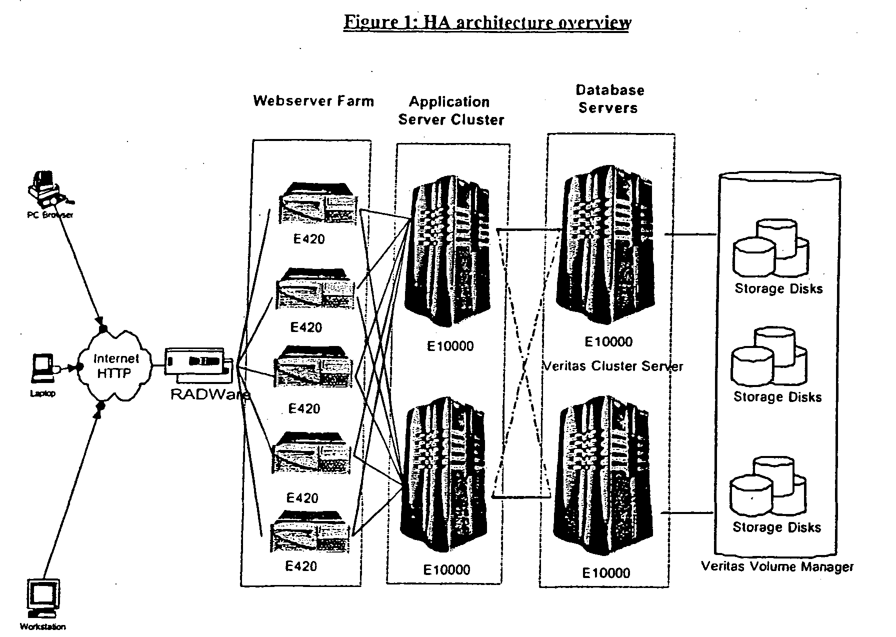

Both application servers access data from one database server that is designated as primary and active. In addition, the application servers maintain live connections to the backup/standby database server in a passive mode. The backup/standby database server handles any failure scenario involving the primary database server easily, since it can connect to the same disks, own the logical volume, and submit transactions to the same database. This is accomplished at the system level with software tools such as, Veritas Cluster Server and Volume Manager.

It is important to re-iterate that the application servers are configured to connect and access data from both database servers although under normal conditions, data is accessed from the primary/active database server only.

Both active and passive databases are residing in disks mirrored in a Storage Area Network using Volume Manager with redundant connectivity and I/O paths to the disks. Based on this HA architecture, the following describes the outcome of all possible failure scenarios:
- If a web server is lost- all connections are re-directed to the available server farm (transparent to the end user)
- If a application server is lost- all connections between the web servers to that application server is redirected to the next available application server. User activity is continued based on state and session information maintained by the application server (close to transparent to the end user)
- If a directory server is lost all LDAP requests are forwarded to another available directory server that has replicated data. If the master fails the backup takes over as master and accepts all write requests (transparent to the end user)
- If a database server is lost - all connections between the application server and the database server stall until the secondary/companion database server becomes primary and brings the database back online (generally not transparent to the end user)
- If a SAN switch, disk, disk controller, FC/AL switch, etc., fails - access to the data continues without disruption due to DMP, mirroring, dual SAN switch connection, etc. (transparent to the end user)
Note: To ensure transparent database fail-over in certain scenarios Parallel Database Servers or Replicated Database Servers, provide a better solution than then one discussed.

### 1.2 HA of the web server farm (Sun Enterprise™ 420Rs using IPLB)

The IPLB devices are being used in the HA architecture to load balance all http web servers. As a load balancing solution the IPLB tool allows for dynamic addition and removal of resources (http servers, proxy servers) in a manner that is totally transparent to the end user.

The scaling of the web server farm is relatively easily accomplished. With the proper configuration, devices can be taken off-line in a controlled fashion, and re-inserted into the mix gradually and with assurance that they will remain stable in the farm.

The IPLB solution also offers multiple and flexible load balancing "schemes" to be used within the server farm. An administrator may create multiple options to define how the load balance strategy decides which web server to select for the current user request.

In addition, the administrator may choose different schemes for different web server farms serviced by the same load balancing solution. This is required when different Web server farms have different application needs and requirements. Specifically this applies when the environment is designed with dedicated web server farms for separate application. However currently the approach is to share all web servers between all applications (shared infrastructure service as opposed to dedicated infrastructure service).

This load balancing method can also be defined to throttle traffic between devices based on user configurable settings. The administrator may configure the system so that the higher end; more powerful servers receive more user requests than less powerful equipment. This is important if different servers within the same server farm have different capabilities and if an administrator decides on deploying new hardware platforms (other than the Sun Enterprise™ 420R's) as web servers.

The IPLB devices can gather statistics from the web servers in the farm without requiring loading of proprietary software on the servers. If a server gets into trouble from a back end application or is running a CPU intensive process, it communicates to the IPLB that it is in trouble and can handle less than its normal share of the traffic load.

Operating systems like Solaris 8™ Operating Environment provide valuable information to authorized external agents. Any server with an SNMP daemon can provide server side statistics that can be used to communicate overall health to the IPLB. Figure 2 below depicts a simple IPLB technique. 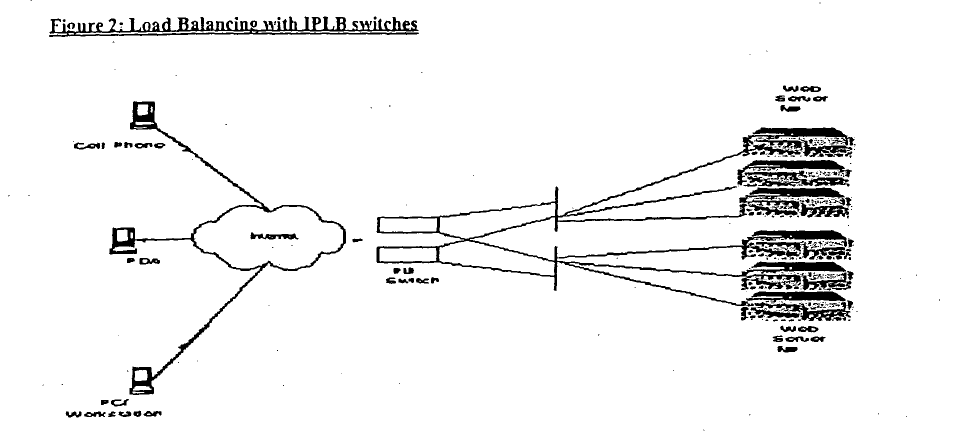 IPLB is typically deployed in two units in parallel. One unit is always active and one acts as a "hot spare." The IPLB device will compensate for down-stream failures of a switch or an intermediate server or database device. The load-balancing device can also handle state based protocols (such as Secure Socket Layer (SSL).

### 1.3 HA between the Web Server farm and the Application Servers

Each of the SUN ENTERPRISE 420R's running iPlanet Web Server is configured as a member of a web server farm and not as part of a web server cluster. The use of the IPLB product negates the need for enabling web server clustering to address load balancing HTTP traffic. However, the web connector plug-in is implemented and configu on each web server in order to connect and communicate with more than one application server.

The web connector plug-in directs users requests to applications on the iPlanet Application Server (iAS) machine. multiple-server enterprise, one can specify the default and alternate application server for each application. The def application server specified is the serverwhere the web connector connects and exchanges requests and other application information. Alternate servers need to be specified as well. When the load balancer plug-in of iAS does specify an alternate application server, application requests are sent only to this default server.

In cases where we use multiple iAS machines (or to be more precise domains) to support the J2EE™ applications, we must carefully choose how to configure the web server to forward requests to iAS. The available configuration options of the web connector plug-in are shown below. The configuration scenarios described in the following table will help to decide how best to configure the web connector plug-in:

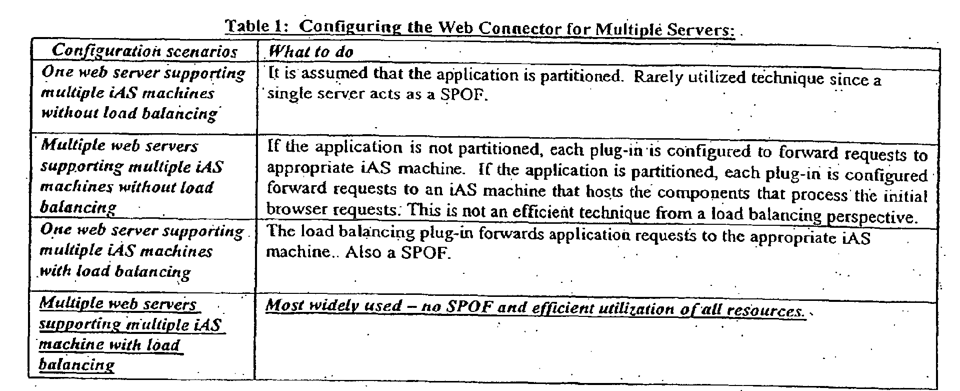

For a typical eCommerce/eBusiness Architecture the last approach, with "*multiple web servers supporting multiple iAS machines with load balancing*". In this case, each one of the web servers is running on a Sun Enterprise 420R and is configured to multi-cast between all the application server domains. The primary benefit of this approach is the efficient utilization of all resources with respect to providing protection against component failures. This approach is only feasible when every application deployed is not partitioned between multiple application servers, but is distributed in its entirety between all the application servers.

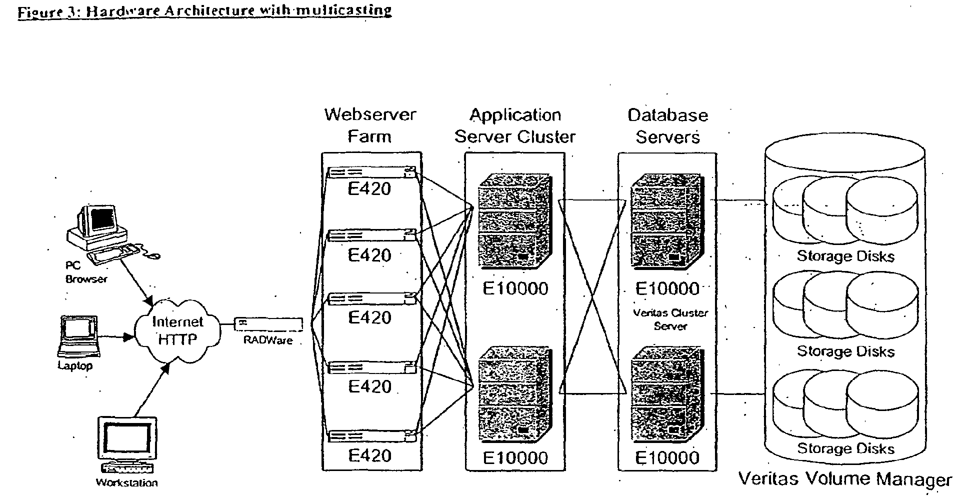

The figures (3& 4) show the difference between dedicated communication versus multi-cast communication between web and application server farms.

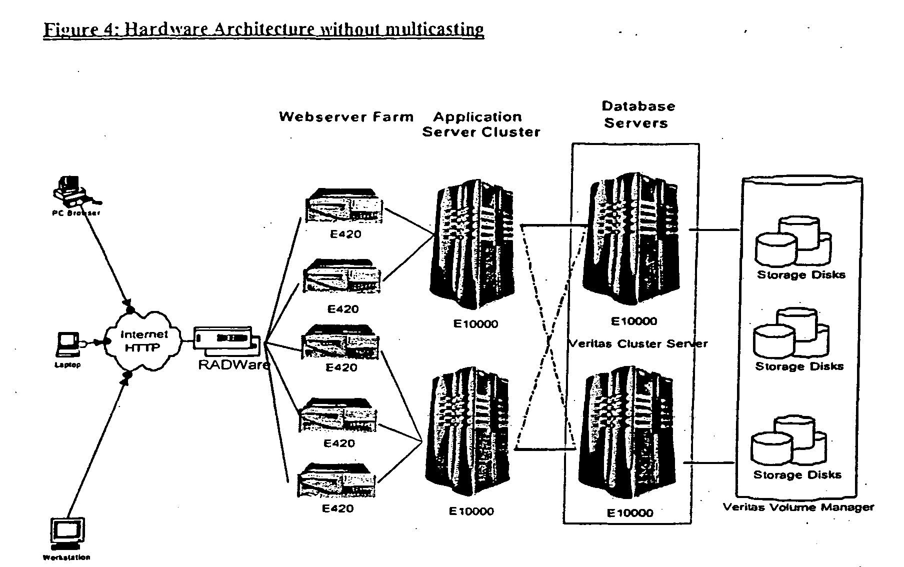

### 1.4 HA between the Application Servers (Sun Enterprise ™ 10000 domains):

It is possible to build application level clustering between multiple iAS machines. These server clusters can range from 2 to 12, where in a multi node application level clustering iAS server machines are designated as primary sync servers, backup sync servers, alternate sync servers, local servers, etc. In this case, all applications are going to be implemented on 2 or more Sun Enterprise ™ 10000 domains for iPlanet™ Application Server. One of these domains will act as the primary sync server (that one that gets started first) and the other as the backup sync server, without any additional backup sync servers, alternate sync servers or local servers. This simplifies the application level clustering maintained by iAS and removes all additional resource overhead caused by inter-application communication for state and session information synchronization.

Although the web connector plug-in is configured to multi-cast between the web server farm and the application server, initial user connections between the web server farm and the application server are established only via the primary sync application server. Under normal operating conditions, the primary sync application server considers load at that given point in time, and either executes the application logic required or forwards the request to the backup sync application server.

In the case where the backup sync server fails, the primary sync server executes application logic for all web server connections.

If the primary sync server fails, the back application sync server continues as the primary sync server. When the failed primary server comes online it is designated as the backup sync server, since there is a primary sync server already running.

Table 2 highlights the different configuration options available while deploying multiple application servers.

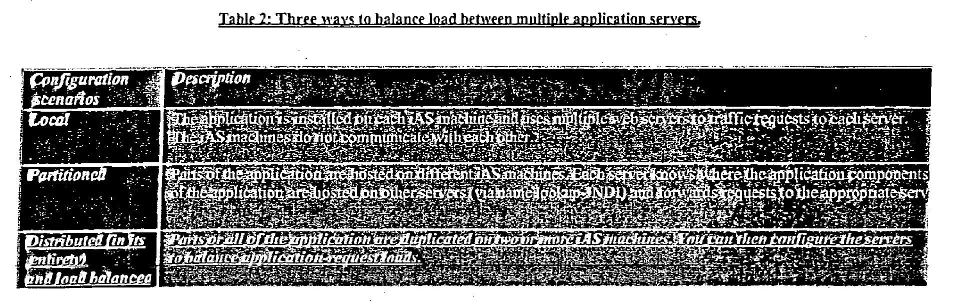

The third method of distributing the application in its entirety and load balanced is the most efficient and simple to achieve. Both the primary sync server and the backup sync server running on Sun Enterprise ™ 10000 domains host an application in its entirety and maintain/manage session/state information.

If an Enterprise plans to introduce more application servers in order to scale the application tier, it is very easy to add backup and alternate sync servers to the environment without any application partitioning.

It is a given that both the application servers are configured to connect to their respective primary/companion database servers (Oracle or Sybase)

See figure 5 on application level clustering maintained by iAS.

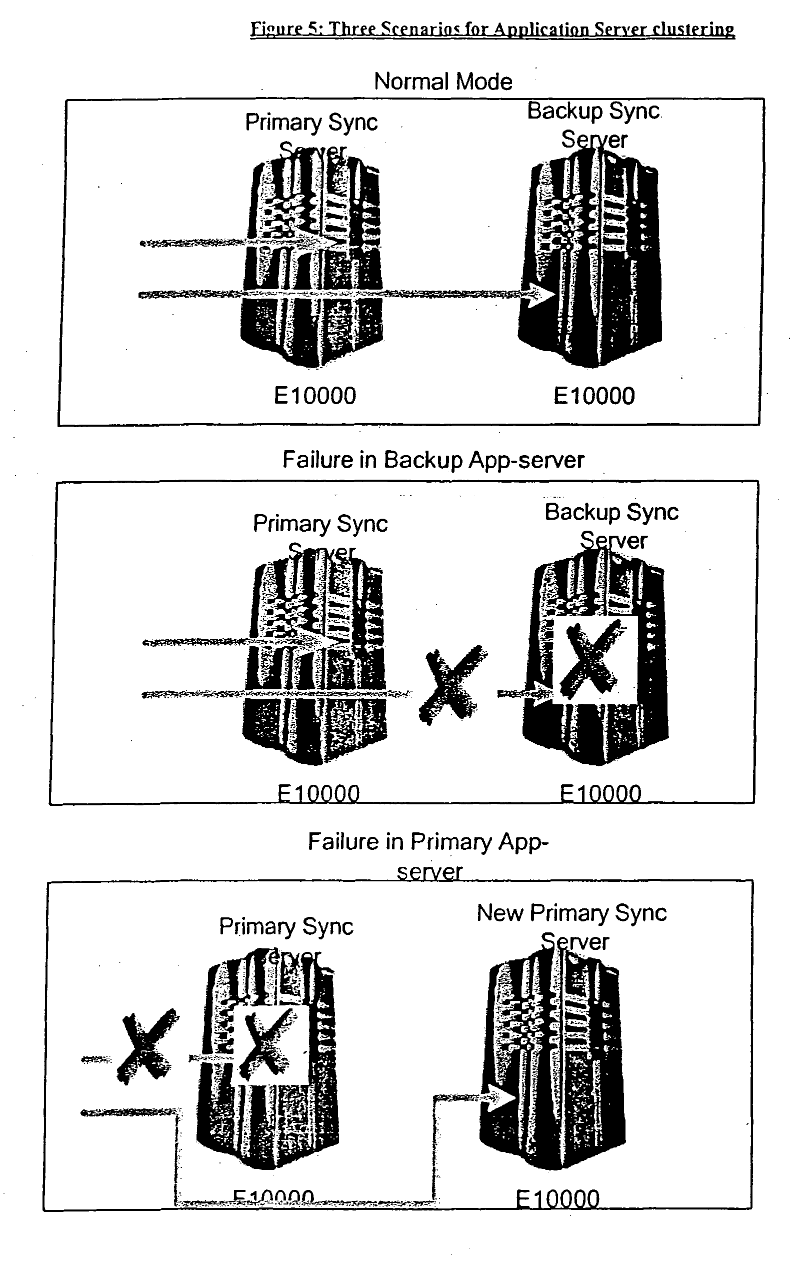

### 1.5 HA between the Application Server and Database Server domains

Assuming a total of 6 applications for the Enterprise eCommerce/eBusiness project. For each of these applications, the application tier is hosted and active on both the application server Sun Enterprise ™ 10000 domains. However, the database servers are only active on one Sun Enterprise ™ 10000 platform at a time (see figure 6 below). Additional complexities will be introduced by configuring n+1 clustering, and therefore, option one is recommended.

To address performance degradation issues during failure scenarios, the goal is to pair up the most heavily loaded database with the least loaded database supported by the same database platform (Oracle or Sybase).

In order to ensure the fastest fail-over possible, the following design is used: On a given Sun Enterprise ™ 10000 domain, a primary (for example EBPP application database) database as well as a secondary/companion (for example Customer Self Service application database) database, are up and running. The application servers are configured to connect to both the primary and secondary companion database servers. Both the primary and the secondary/companion server and the Sun Enterprise ™ 10000 domains they run on can connect and access the same disks/logical volumes and databases.

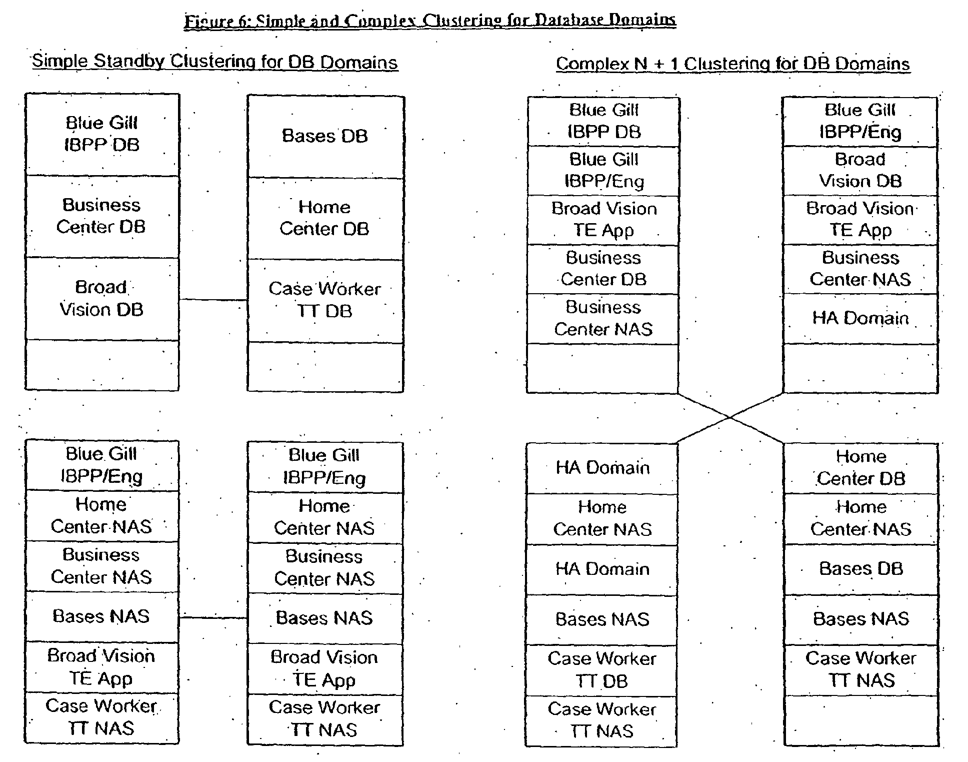

### 1.6 HA on the Database Servers (Sun Enterprise ™ 10000 domains)

When there is a failure with the primary database server, Veritas Cluster Server, via its heartbeat, (Ilttab/gabtab) both network heartbeat and disk heartbeat, realizes that the database server is down and the data is not accessible.

VCS via Volume Manager initiates the takeover of the disk group of the failed node to the secondary/companion node and brings the logical volumes on line. The database server (Oracle or Sybase) running on the secondary/companion server starts the database and brings it online, after appropriate rollbacks and roll forwards for transaction consistency. In the meantime the connectivity that is lost between the application servers and the failed database server is transferred to the secondary/companion database server (this connectivity is already established and in place between the application server and the database server).

Unlike the failures with the web servers and the application servers (where the fail-over is typically transparent) the database server's fail-over is typically visible to the end-user due to the time it takes for the fail-over process. Additional, times required to startup the database server, establish connectivity to the database server and the database disks, etc., are not required in this scenario. However the forced ownership of disk groups, volume startups and bringing the database online are the core tasks that add to the time to fail-over. Once the failed node is up and running fail-back procedures can be initiated to get the environment back to its original state.

In failure mode if there are performance degradation, since the same domain is supporting two databases, instead of one, that domain can be augmented with addition system boards (floater boards) to offer more horsepower to that domain via Dynamic Reconfiguration and Automatic Dynamic Reconfiguration. Figure 7 depicts a connection fail-over between an application server and a database server.

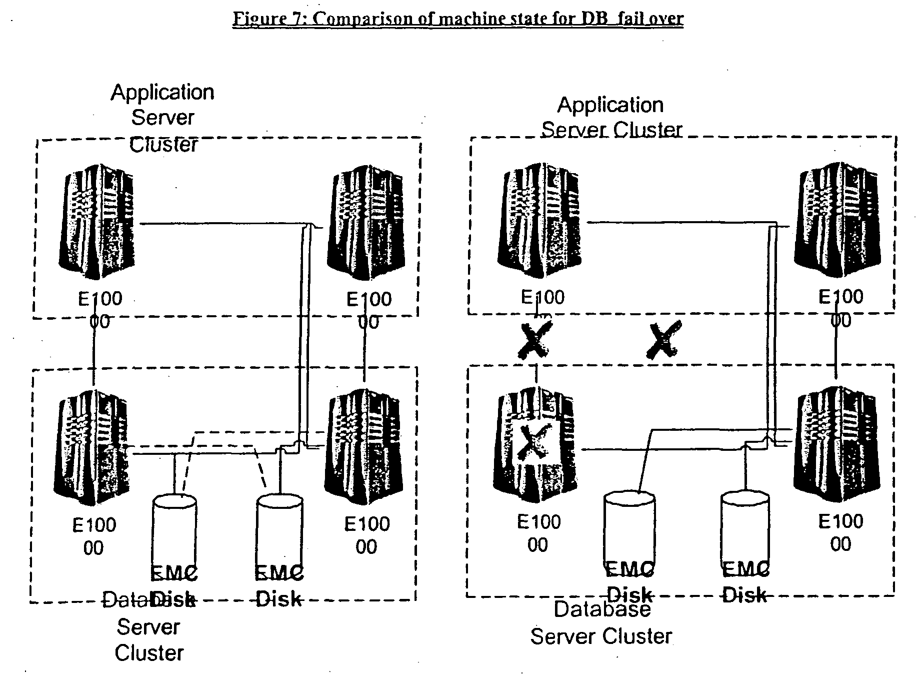

### 1.7 Integration Server (B2Bi and EAI Servers)

Due to the nature of the J2EE™ applications, wherein they extend existing enterprise applications to the Internet, both B2B application integration (integration of 2 or more application run between enterprises) and Enterprise Application integration (integration of 2 or more application run between enterprises) play a key role.

These integration servers typically support JTS, JMS and XML and in many cases CORBA. The deployment of these integration servers by themselves needs to be highly available in order to ensure high service uptimes. B2B application integration products (e.g., web methods B2Bi server) may be deployed in two scenarios; The most common scenario is where the B2Bi server-proxy is located in the DMZ that also applies certain security measures and then forwards requests to the B2Bi server in the IDMZ. In this scenario both the B2Bi proxy server and the B2Bi server can be deployed redundantly. The proxy implementation is more a connection manager and a simple authenticator/authorizer; therefore these proxies can be load balanced by external IP based load balancer. For the B2Bi server a cluster configuration is possible (application level clustering without external system level clustering software - such as Sun Cluster or Veritas Cluster) where a common data repository (cluster store and/or a cluster data repository) maintains all the relevant information about the B2Bi server configurations, applications incoming/outgoing data, and queue information (in most cases this store is a ldap compliant directory). An instance of the B2Bi server can be started on any node that can access this common cluster store/repository.

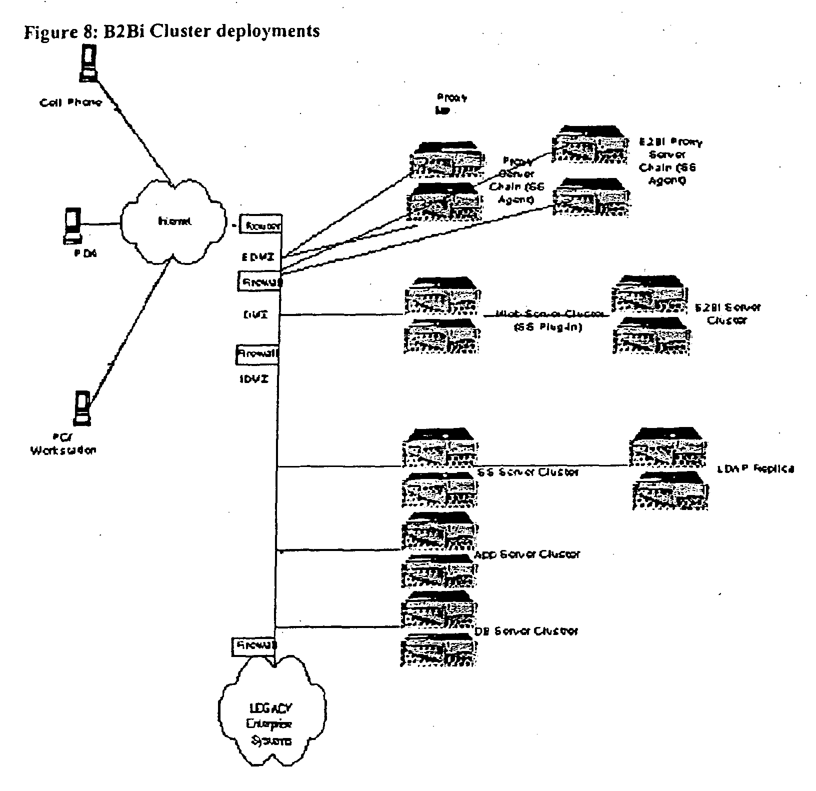

The B2Bi servers are facing outbound traffic to the Internet, whereas the EAI servers are facing outbound traffic towards the legacy environments, and therefore they typically get deployed along with the application servers in the IDMZ, without any touch points form the internet, i.e., only the application servers running java beans are allowed to communicate to these integration servers and traffic flowing out of these servers can only traverse towards the legacy environment and not towards the firewalls protecting this environment form the internet. Similar to the B2Bi server clusters an EAI server cluster can be deployed in the IDMZ. Once again this cluster configuration incorporates application level clustering without external system level clustering software - such as Sun Cluster or Veritas Cluster - where a common data repository (cluster store and/or a cluster data repository) maintains all the relevant information about the EAI server configurations, applications incoming/outgoing data, and queue information (in most cases this store is a ldap compliant directory). Both the B2Bi cluster depicted in figure 8 and EAI cluster depicted in figure 9 can be active-active or active-passive. Its also possible to add multiple nodes to these cluster configurations (6 to 12 nodes) since these are based on application level clustering techniques.

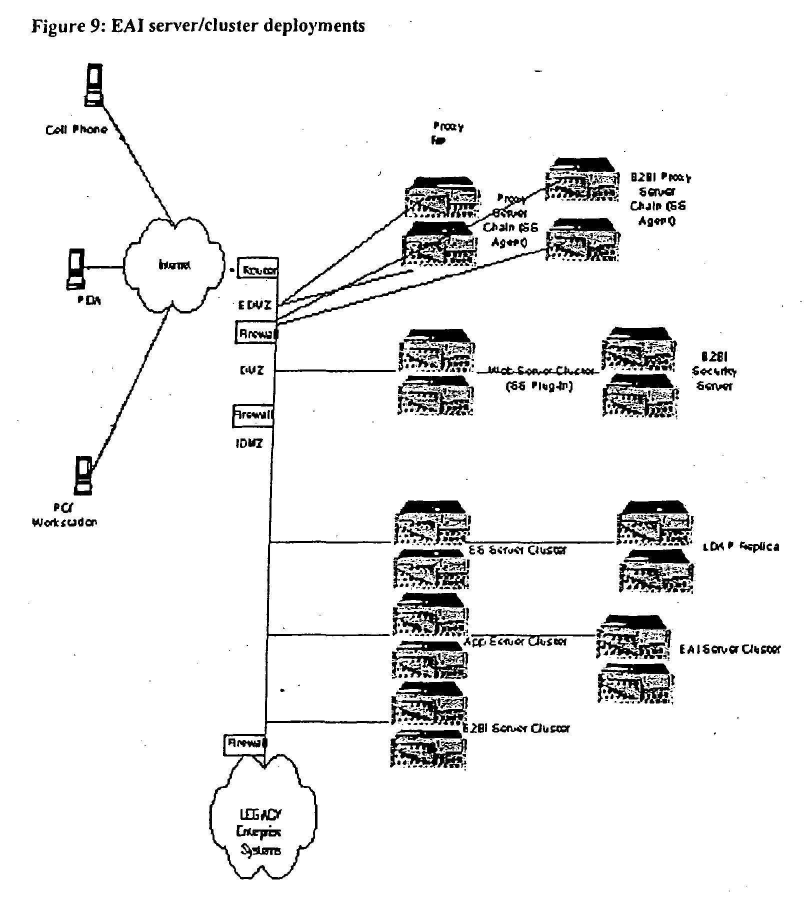

### 1.8 Storage Area Network

The foundation of an Enterprise's e-Commerce/eBusiness infrastructure is its Storage Platform based SAN solutions. Core features of this storage implementation includes:
- Centralization and consolidation of all storage within a storage network
- Dual HA SAN switches
- Redundant Storage Frames with a capacity of 8 TB each
- Primary boot disks for all Sun Enterprise 420's and Sun Enterprise ™ 10000 domains are located in this SAN (with local secondary boot disks)
- All File Systems are built on Veritas File Systems (including Database -File System)
- Veritas Volume Manager manages all volumes
- Veritas DMP is turned on - where as Alternate Pathing are turned off (due to issues in terms of conflicts and compatibility)
- Backups are accomplished within the SAN and are hence LAN free and Server free (non-intrusive)?
- Veritas Clustering is implemented on this SAN topology (as opposed to shared-nothing or shared architectures)
- Support for both switched fabric and arbitrated loop
- Hardware based RAID with a combination of Software based RAID

By isolating all storage resources to a separate layer, scalability of the storage platform for all eCommerce applications can is easily achieved. Additional storage systems and connection switches such as SANbox switches can be deployed as the need arises. At this point the proposed solution includes only two 16-port SANbox switches and two Storage Subsystems, and as already mentioned can be scaled progressively.

In situations where hardware failures are encountered on the SUN ENTERPRISE 420's and (to a lesser extent) on the Sun Enterprise ™ 10000 domains, which necessitate rebuilding or replacing systems, the SAN solution provides an elegant and practical recovery scheme. Since all web servers, proxy servers, applications servers and database servers are configured with boot disk (alternate or secondary boot disk) located on the SAN, once the hardware failure has been corrected or the hardware has been replaced, the server can be quickly and reliably brought back on line.

With a backup solution implemented on a storage node within the SAN, data is backed up media to media (disk-to-tape) without impacting resource consumption on the servers (database or application) and the network (LAN).

Backups are typically made from a snapshot of the volume to be backed as opposed to the actual volume being brought off-line for backup purposes. This SAN based backup solution ensures that the data, databases, file systems, operating systems, application binaries and executables, etc., are backed up with minimal intrusion to the application service being provided.

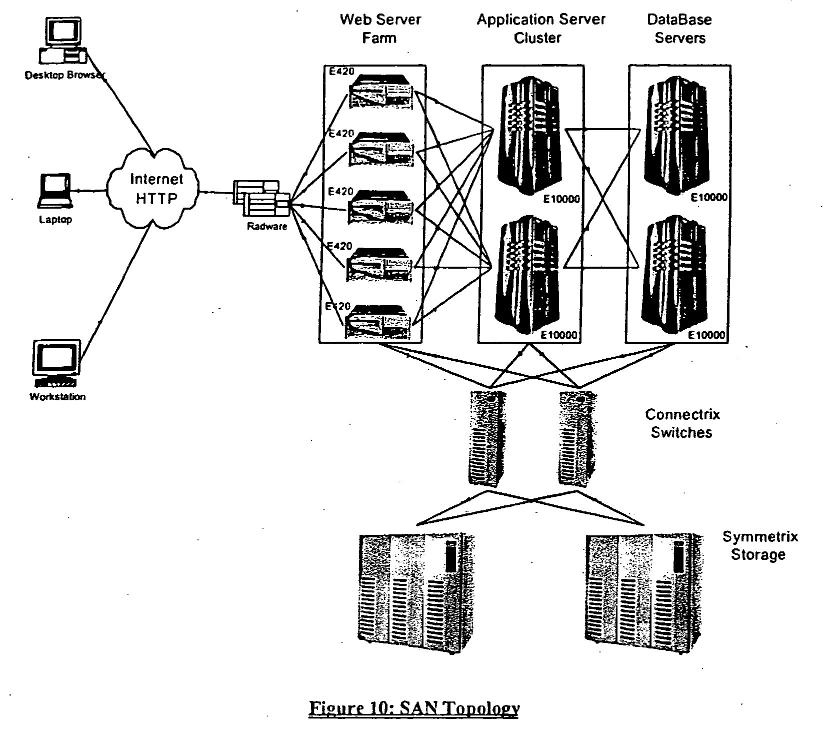

Figure 10 highlights the redundant connectivity between all nodes to a SAN

All databases within the SAN, can reside as Vxfs, as opposed to generic/raw partitions. Veritas Volume Manager manages these VxFS volumes for moving, resizing, mirroring striping, creating snapshots, etc

The volume manager based software RAID is further enhanced with hardware level RAID implementations within the Storage Sub Systems.

### 1.9 DNS, Proxy and LDAP

In section 1.1 there is an assumption about successful name resolution, authentication and authorization. Hence, in this sample HA design; redundancy plays a crucial role in successful name resolution, authentication and authorization. The sequence of events occur where the domain name is resolved first, and the authentication and authorization takes place after connections are established with a Proxy Server, with the user information residing in the directory server.

HA for the DNS server is typically achieved by introducing a secondary server or multiple secondary servers for both the internal and the external DNS Server (Split DNS Architecture). In case there is a failure with the primary the designated secondary takes over as the primary. (see figure 11 below).

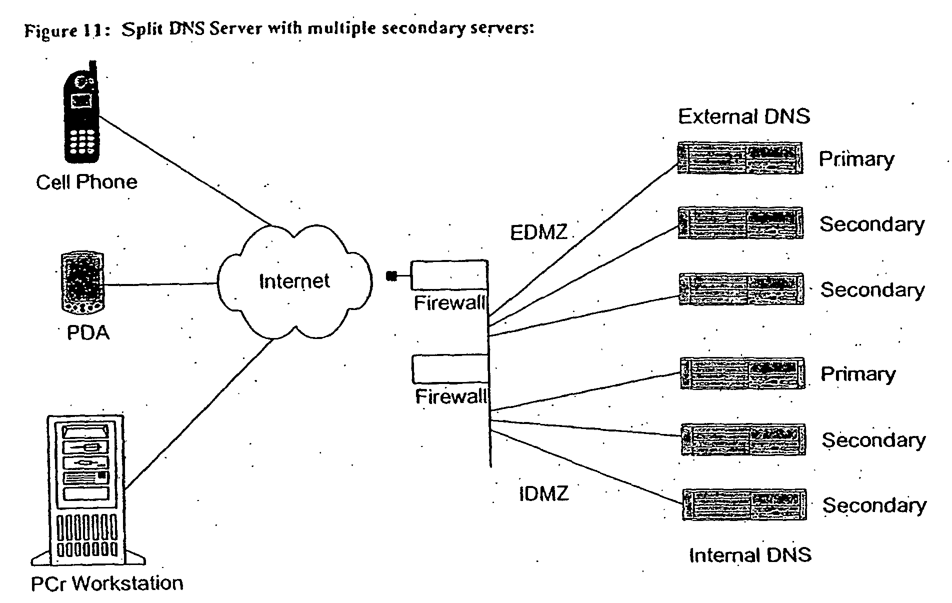

Once the domain name is successfully resolved for the user connection, the user connects to a proxy server in the EDMZ, which captures the user ID and password, prior to authenticating the user with the user information stored in the Directory Server. These proxy servers prevent the world from knowing the true IP addresses of the web server and the domain. Frequently accessed static web content is also cached extensively on these proxy servers. These proxy servers distributes caching via proxy arrays for automatic load balancing and fail over. A built in mechanism within theses Proxy Servers is the Cache Array Routing Protocol (CARP), which utilizes a deterministic algorithm for dividing client requests among multiple proxies.

The HA design for the Directory Servers typically includes a Directory Master (in the Enterprise Network) , that holds all the original LDAP entries, with a multi-master capability. This is the only LDAP Server that gets to manipulate the LDAP entries; all the replicas are purely run for read purposes. The Master replica is the only replica LDAP server that talks to the master and acts as the master in case of failures wit the master LDAP Server. This master replica also propagates the LDAP entries to all other replicas in the computing environment.

In case of failure in one of the LDAP replicas the Proxy Arrays connect to and obtain LDAP information from any other available replica its configured to talk to. (This is depicted in figure 12).

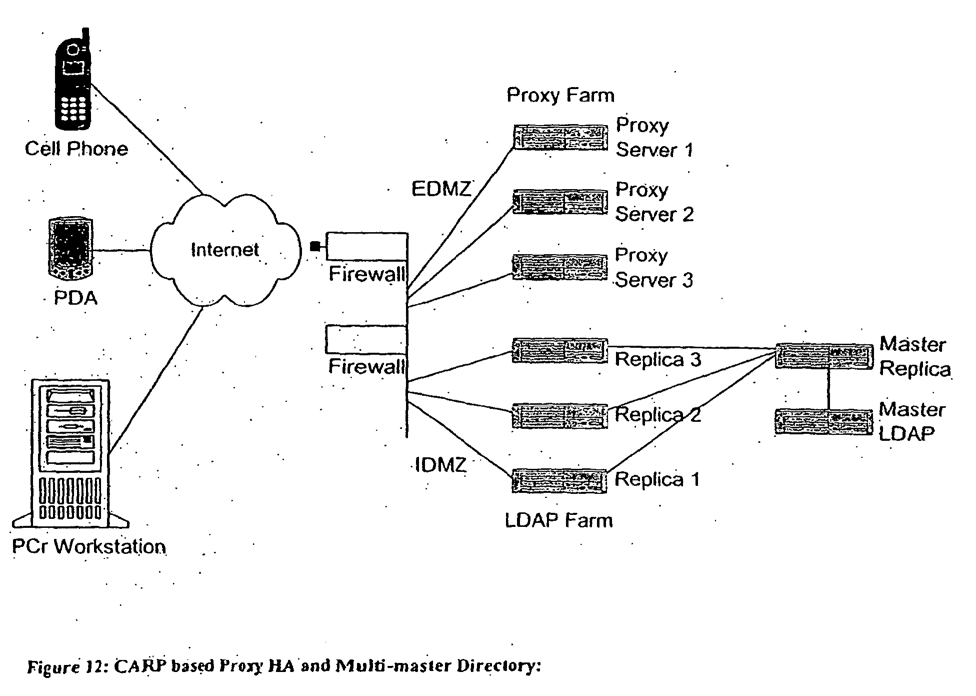

### 1.10 Messaging & Transaction Servers

JMS based Messaging Servers are capable of sending and receiving messages to and from Java and non-Java applications (within the same message domain) on any platform via both publish/subscribe and request/reply models. These systems are mission critical in nature since they form the foundation of message based Enterprise Application Integration as well as, Message based B2B integration. Application integration between multiple applications deployed within a single enterprise's network or between many enterprises and multiple networks is given common requirement for many eCommerce initiatives.

The availability of these systems based on Java Messaging Services are critical especially in enterprises where hundreds of applications need to be integrated seamlessly.

Messaging Systems typically utilizes a distributed architecture to eliminate bottlenecks and single points of failure. Applications require reliable message relaying, certified and transactional, as appropriate for each message exchange. Messaging can be synchronous or asynchronous, locally delivered or sent via a WAN or the Internet. Messages are in general self-describing and platform independent.

The two primary techniques used to address uptime for these messaging platforms include redundant processes and distributed queues with one-in-n delivery. When messages are sent form one application to another, two or more redundant messaging processes receive the message and distributed queues are built up at the same time.

However, in order to ensure that the message is not applied twice to the receiving application, there is a one-in-n delivery algorithm built into the messaging platform. This essentially ensures that one successful attempt is propagated to all redundant processes. (see figure 13).

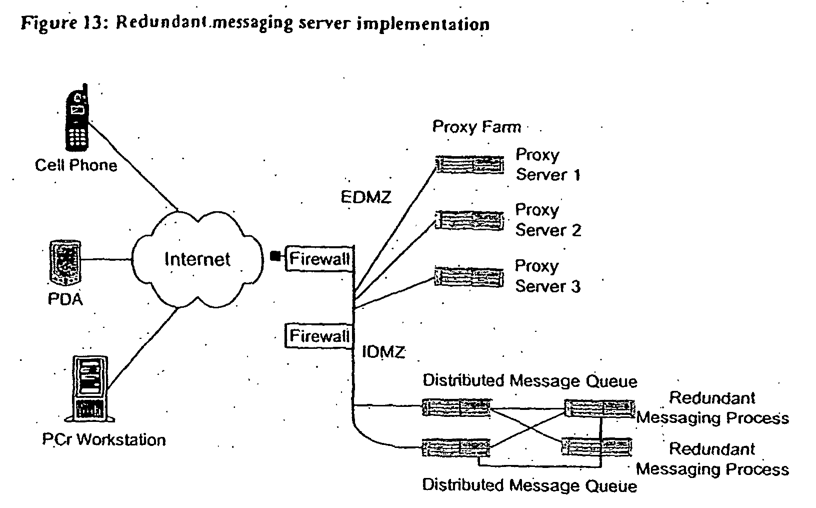

Transaction Servers, on the other hand, enables applications and application server to control the scope/duration of transactions and coordinate transaction completions across transaction managers. The availability of the Transaction servers are inherently built into these systems based on techniques such as Data Dependent Routing in conjunction with redundant servers. Data-Dependent Routing is a technique where a transaction service request is mapped to a specific server group (could be both physical and or logical) based on a value contained in a designated field within the data buffer. Redundant Transaction server groups are mapped to specific resource manager/database instances, and transaction request is routed to that specific service/resource manager combination. (see figure 14).

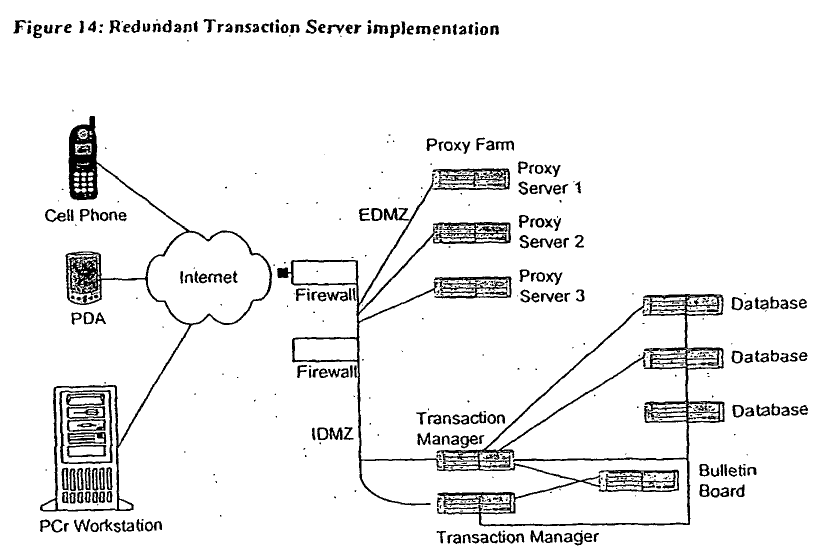

### 1.11 Conclusion

Through this HA design; availability is introduced at all tiers of the application infrastructure architecture. New applications introduced to the J2EE™ environment, if built on the same infrastructure can exploit the HA capabilities of the Application Infrastructure. The rule of thumb is to incorporate any built-in HA techniques offered by the application infrastructure solutions, first. Only when single-point of failures are detected even with these built-in capabilities, the system level clustering using products such as Sun Cluster or Veritas Cluster needs to be introduced. For, example, transaction servers identified in section 1.9 has a single point of failure in the form of a bulletin board. The system supporting the bulletin board can be offered redundantly with system level HA, such as Sun Cluster, which is external to the application infrastructure solution or with custom built scripts that would start the necessary bulletin-board processes with access to the same file system, in the case of a failure. Also it is extremely important to ensure seamless connection fail-over when an application infrastructure fails. Since all the client side presentation logic is executed at the back-end, if you as a consumer is shopping on a online bookstore and place 6 books on the basket and do not check-out/purchase, before your laptop crashes, the next time you login the state of your previous connection is still maintained and the 6 books picked earlier is still part of you basket that can be checked out. This seamless ness is applicable to failures in the back-end infrastructure too, when redundant basic services do not face any single-point of failures.

This paper only identifies commonly used techniques and approaches to incorporating HA in an architecture- however there are other cases that are not discussed here. For example figure 15 depicts a different set of techniques and approaches to incorporating HA in an Architecture. This variation exists since the set of application infrastructure used for this J2EE™ application includes, Apache for the web server, Tomcat for the JSP/Servlet engine, Borland for the EJB tier and Oracle PDB for the db tier. This goes to show that the application infrastructure solutions put use actually drive the HA architecture. The techniques used here include;
- A Cisco Local Director provides front-end load balancing and fail-over of HTTP requests
- Load-balancing and fail-over of servlet connections from the web server to Tomcat is provided by the Apache mod_jserv module
- Load-balancing and fail-over of EJB connections from Tomcat to the EJB Container is provided by the Naming Service
- The Oracle Connection Manager provides fail-over of JDBC connections from either Tomcat or the EJB Container
- Load balancing and fail-over is provided by using Oracle Parallel Server on the target database (OPS with Sun Cluster).

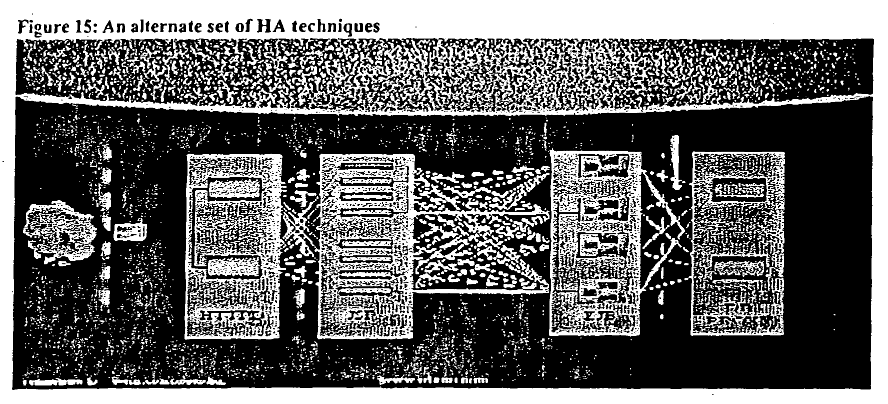

Its also possible to build an HA Architecture based on a external clustering solution such as Sun Cluster or Veritas Cluster with agents for web servers, db servers, nfs servers, dns servers, integration server, and so on.

### Annex C

### Securing J2EE™ based Web Applications and Web Services ■ Based on Application Infrastructure Security Techniques

### 1.0 Introduction

Security is the paramount issue for many Java™ 2 Platform, Enterprise Edition (J2EE™) applications, purely because what was (business services) traditionally offered within closed networks (LAN, WAN or VAN) is extended and offered via the Internet by the J2EE™ initiative. To start with, whats most imp ortant to understand is the pervasive nature of security, in terms of;
a) Application Security (protection domains within and between applications, application level intrusion detection/deployment descriptors, JAD, etc.)
b) Application Infrastructure Security (PKI, Certificates, SSL, Ldap, S-Http, etc.)
c) Network Security (Firewalls, DMZ, VLAN, VPN, NID, etc.)
d) Compute and Storage Security (OS hardening, zoning, etc.).

Attacks are generally characterized as privacy attacks, communication attacks and system attacks. In many cases security drives the overall architecture more than any other capability. A highly sensitive financial application, for example, built on J2EE ™ Technology has to ensure that: attacks such as; forgery, unauthorized usage and masquerading (all three constitute privacy attacks); spoofing, sniffing and replays (all three constitute communication attacks); viruses, denial of service and deletion of data (all three constitute system attacks) is simply impossible to achieve by a hackers.

A J2EE™ Technology based application in most cases is extending a specific functionality offered internally within an enterprise network to the Internet. These applications could be a customer facing application, an employee portal or a supply chain management application; nevertheless, it is extending an enterprises legacy environment to the Internet. Therefore the entire deployment of the application infrastructure could be within an overall DMZ - a zone between the legacy environment and the Internet (IDMZ+DMZ+EDMZ).

J2EE™ Technology, being, more than a programming language, but a Technology Platform addresses these security issues via many techniques. The unique characteristic of J2EE™ Technology as a programming language is its support to multiple security techniques at the application infrastructure layer, by lending and blending itself with security extensions, such as, Java Cryptography Extensions (JCE), Java Secure Socket Extensions (JSSE), Java Authentication and Authorization Service (JAAS), Java Byte Code Verifier (JBCV), Java Security Manager (JSM), Java Access Control (JAC), Java Application Descriptor (JAD), etc. All these extensions and security services directly translates to application infrastructure with built-in security techniques. Java Cryptography Extensions supports, encryption and decryption of data, messages, code, transactions, etc., right at the origination and destination points. This capability also offers application level VPN (virtual private network) as opposed to network level VPN (virtual private network) - firewall to firewall or VPN switch to VPN switch.

Additional security capabilities of J2EE™ Technology, includes support for deployment descriptors in the application platform and establishment of protection domains within application code. Deployment descriptors are portable property sheets for EJBTM Components in the form of an XML document stored in ldap and accessed via JNDI, which allows for transaction controls for methods and sets up an access control lists. Protection domains describe trusted J2EE™ components within an application and between applications.
Essentially, stating which JSP™/Servlets can access which EJB™ components, which EJB™ components can access specific data access objects, etc.
This techniques (deployment descriptors) built-in to a J2EE ™ application server offers security within the "virtual application layer", however, many such security techniques offered by other application infrastructure solutions ensure end-to-end security in a J2EE ™ environment.

This paper attempts to provide an analysis of the different techniques that can be adopted to address security for existing designs and new designs for basic services such as e-mail, directory, web, proxy, application, database, transaction, messaging, etc. Business services such as an employee portal or an online electronic store, etc., which are built based on Java Technologies such as JSP, Servlets, EJB™ components, etc., are expected to leverage the extensions made to the application infrastructure and act as a more secure application, primarily due to the multi-tiered nature of these application infrastructure. For example, if an application such as an financial exchange is facing issues and potential loopholes associated with the integrity of transactions, special anomaly checks can be built in through hashing algorithms prior to and after a transaction is packaged and shipped over the network using a messaging platform. If there are concerns about the identity of the users of an application offered over the internet for an exclusive intelligence community, mutual identity verification techniques offered by a third part certificate system can be augmented with one-time password generation over a application level VPN establishment.

### 1.1 An overview of the overall J2EE Application Infrastructure

A typical J2EE Application runs the Servlets and JSP components on the web server, many such components could be cached by the web proxy server, EJB components are served by the Application Server, SQLJ-or- Java/Stored Procedure (embedded SQL statements in Java) components are running on the DB servers, authentication/authorization components running on the ldap server and the J2EE components signed and certified by the certificate server. If XML based inter application integration is used then these XML components are run on an EAI or B2B application integration servers (like Web methods). Using JMS if asynchronous transactions are executed by the application, then a messaging server is in use (like Tibco).
Similarly if synchronous application transaction is run a transaction server is used (like Tuxedo). Each application infrastructure vendor extends support to J2EE™ by adhering to its specifications.

The basic infrastructure services that make up a typical dot.com environment with their respective J2EE™ Technology security components include:
- **Directory Server (JAAS)**
-
- **Proxy Server (JSSE)**
-
- **Portal Server (JSSE/JAAS)**
-
- **Web Server (JSSE/JCE)**
-
- **Application Server (JSM/JAC)**
-
- **Messaging Server (JMD/JDS)**
-
- **Transaction Server (JMD/JDS)**
-
- **Certificate Server (JCE)**
-
- **CORBA Server (CSSS)**

Not all dot.com environments are expected to have an implementation of all these basic service, it can be all of these services or in many cases a combination of these services.
- **Directory Server ― *Java Authentication & Authorization Service***
- **Proxy, Server ― *Protocol tunneling and reverse proxies***
- **Mail Server - *Mail proxy and SSL***
- **Web Server - *Web proxy and SSL***
- **Application Server - *Protection Domains and Deployment Descriptors***
- **Transaction Server *- Streaming Transactions over SSL, and integrity validation*/*verification.***
- **Messaging Server *- Passing of digital certificates and signed*/*encrypted messages***
- **Certificate Server - *mutual identity verification*/*validation and digital certs***
- **B2bi Servers *(web services integration servers) SOAP handlers and UDDI pointers***

### 2.0 Web, Portal & Proxy Servers (JCE & JSSE)

A typical deployment of a J2EE application without severe security requirements in an enterprise will look like the figure below..

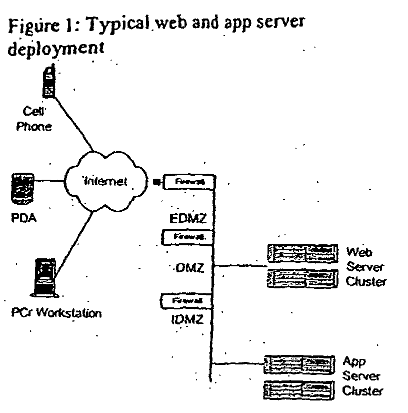

The application components deployed in the application server located in the IDMZ and the web components deployed in the web server located in the EDMZ. This deployment is very applicable for applications were the web components deployed in the web server (JSP/Servlets) are acting more as a gateway, fronting business logic that requires more protection. In certain cases the presentation logic executed by a set of web components may also be deployed in the application servers- in this scenario, if the presentation logic also requires protection. 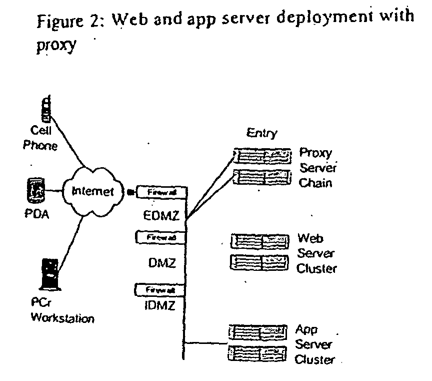 In cases where the J2EE™ application requires more stringent security, both the web components and the application components are protected by a web proxy, that access the web servers. There is no true deployment of any components on the proxy server (components may be cached) and location transparency is maintained. In this third scenario, where a J2EE application is accessed via a portal server the deployment may replace the proxy server, and combine the web and application components to a web-application server cluster.

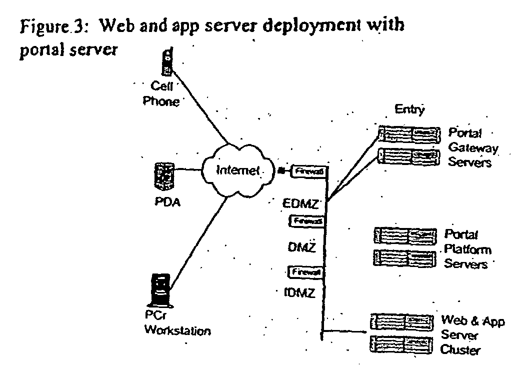

Additional functionality offered by a web proxy server can be replaced with the portal deployment of a portal gateway and a portal platform server. This combination of a portal gateway/platform may provide secure access to multiple J2EE™ applications running on multiple web/app servers. In certain cases even with the portal deployment a web proxy server may be leveraged to offload encryption & decryption workload to a dedicated server or servers, as depicted in the following figure:

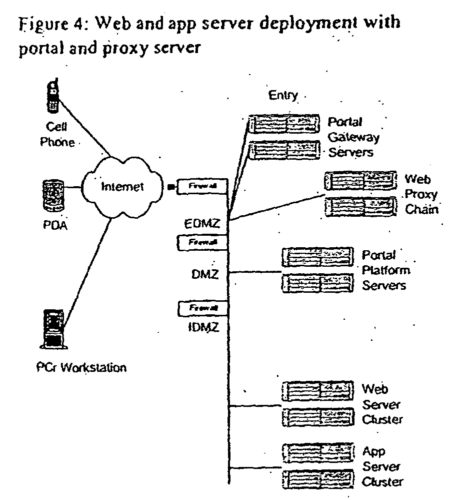

### 3.0 Mail Server - Mail proxies and mail virus scanning.

In many J2EE™ implementations the architecture may call for JavaMail™ API usage. This requires the deployment of a mail server in conjunction with the rest of the application infrastructure solutions. This application infrastructure supporting JavaMail™ API is crucial and requires addressing security, just as any other application infrastructure. Therefore a simple mail server deployment may involve a mail proxy in the DMZ with a Mail Store in the DMZ.

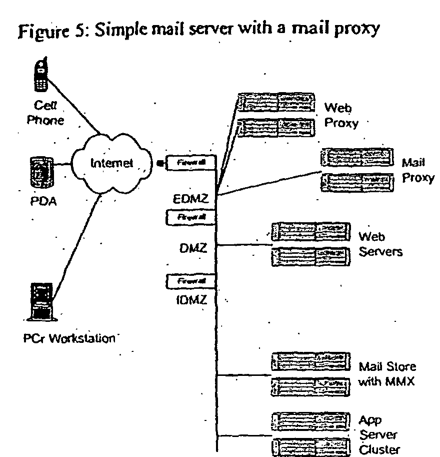

Additional security techniques are applied to the mail server implementation with a virus detection and a secure mail access protocol at the EDMZ as depicted below.

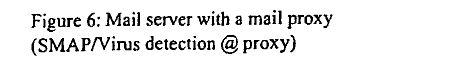

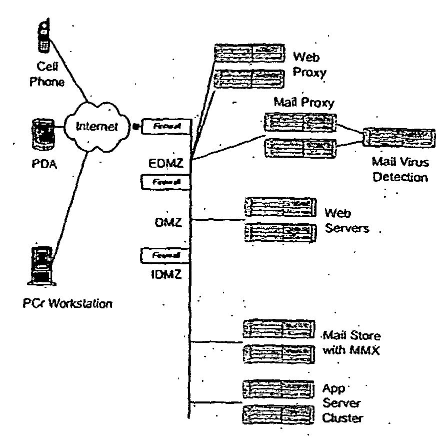

This helps ensure that virus does not infect the mail store or other mail attacks, in turn, ensuring that the J2EE™ applications environment is protected.

### 4.0 A pplication & Security Server:

Application Servers play a very significant role in today's dot com environment. J2EE based application server platforms offer application level security via pre-defined protection domains, deployment descriptors, signed and encrypted components, etc. Typically these application servers are deployed along with a security server, a server that hosts the security policies for one or more J2EE™ applications.

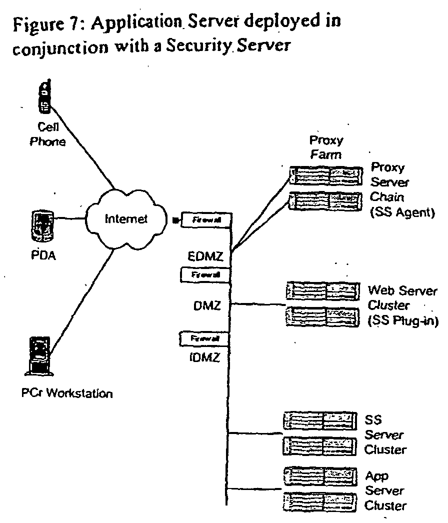

These security servers (e.g., Netegrity Site minder) typically store certain security components in an ldap server. These ldap servers may be replica-instances of a master running locally on the security server or on dedicated ldap replica servers in the DMZ, as depicted in the figure below.

The security server works in conjunction with the application server to introduce the concept of permission and policy so as to enable the J2EE™ platform to offer fine-grain, highly configurable, flexible and extensible access control. This access control can be specified for applets, servlets, JSP, java applications and EJB™ components, within and between different J2EE™ applications.

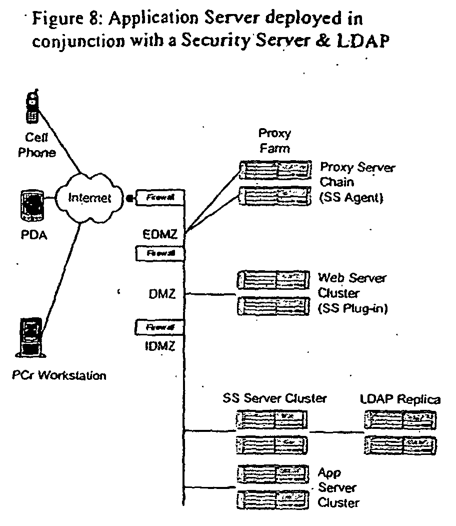

### 5.0 Integration Server (B2Bi and EAI Servers)

Due to the nature of the J2EE™ applications, wherein they extend existing enterprise applications to the Internet, both B2B application integration (integration of 2 or more application run between enterprises) and Enterprise Application integration (integration of 2 or more application run between enterprises) play a key role. These integration servers typically support SOAP, JTS, JMS and XML and in many cases CORBA. The deployment of these applications by themselves need to be secure in order to ensure application level security measures are not jeopardized. B2B application integration products (e.g., web methods B2Bi server), may be deployed in two scenarios; The most common scenario is where the B2Bi proxy is located in the DMZ that also applies certain security measures and then forwards requests to the B2Bi server in the IDMZ. The B2Bi server is also referred to as SOAP handlers from a web services standpoint.

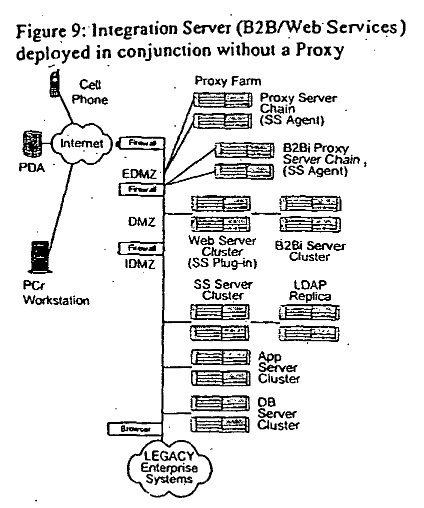

In some cases where this type of deployment poses certain security threats, the B2Bi proxy is implemented in the EDMZ with a B2Bi security serve in the DMZ followed by a B2Bi server in the IDMZ. This is considered as the safest deployment option. In certain rare cases a B2Bi server is deployed in the EDMZ where the B2B application being integrated are not sensitive to security requirements.

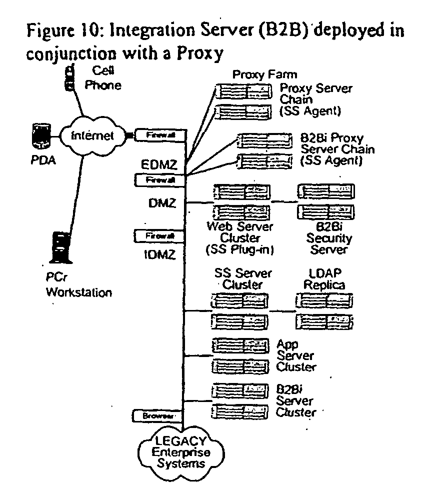

The B2Bi servers are facing outbound traffic to the Internet, whereas the EAI servers are facing outbound traffic towards the legacy environments, and therefore they typically get deployed along with the application servers in the IDMZ, without any touch points form the internet, i.e., only the application servers running java beans are allowed to communicate to these integration servers and traffic flowing out of these servers can only traverse towards the legacy environment and not the firewalls protecting this environment form the internet.

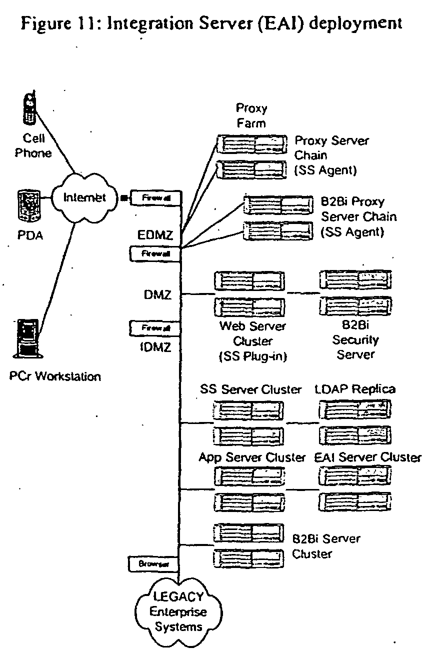

### 6.0 Directory Server and Authentication Server (as Authentication & Authorization Server)

LDAP Servers typically store user-id, passwords and any common information shared by many applications. Unlike the Security Server that discussed earlier, there are also security servers that perform just the role of authenticating users and providing them access to one or more applications (does not cover what functionality can be accessed within an application via protection domains or between applications). These combinations of ldap and security servers that are used to provide access to a network are deployed in the IDMZ. This security server could actually be the very same server that is accessed by the application servers as a security policyholder.

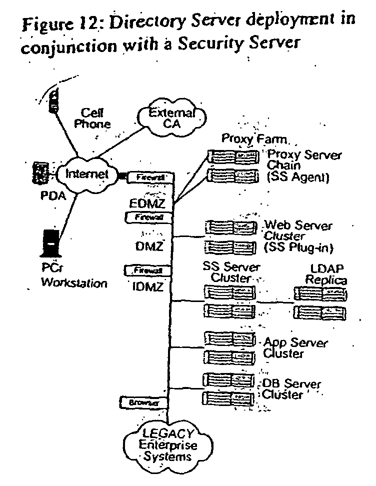

In many other, when warranted, scenarios this functional difference between the security server as a authentication and authorization server and a security policy holder might be isolated to its own dedicates servers in different zone. The authentication and authorization server along with ldap replicas with the required data in the DMZ and the security policy server with its required ldap data in the IDMZ, as depicted in the next figure;

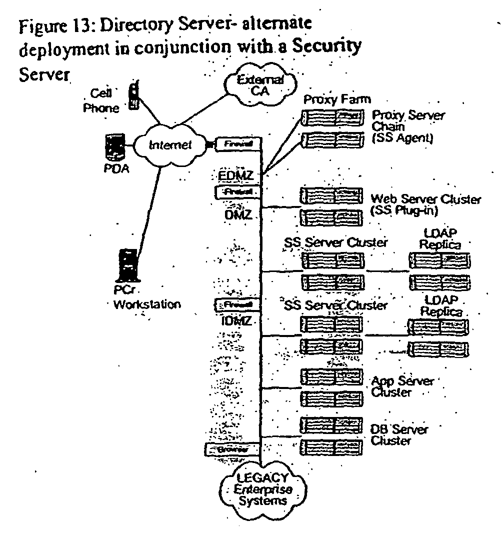

The web proxy that accepts initial http connections establishes s-http connections with the client (after client and site certificate validation by a CA) to accept user-id and password. This user-id password (encrypted) is passed by the web proxy-plug-in to the web-server security agent, back to the security server with SSO capability, that authenticates the user and authorizes access to a specific URL hosted by the web server (from where applications can be accessed). This second approach terminates user connection prior to reaching the IDMZ if authentication fails, however the prior scenario, does not. Additionally the workload is distributed between the 2 security servers.

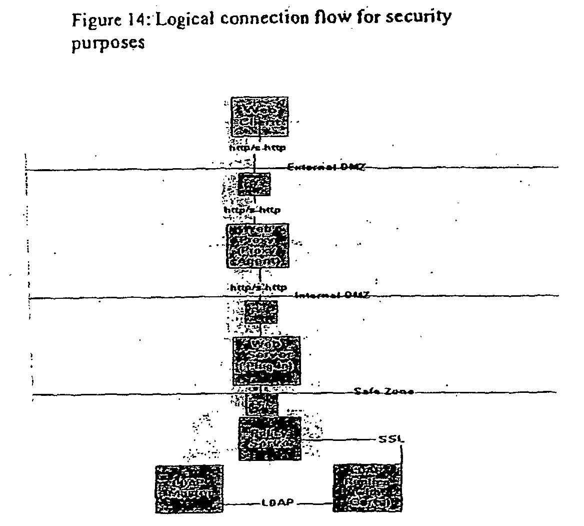

### 7.0 Messaging Server & Transaction Servers

Similar to the EAI Servers the messaging servers (JMS) and transaction servers (JTS) are typically accessed by the application servers in the IDMZ, and the out bound traffic from these application infrastructure solution is flowing towards the firewall protecting the legacy environment as opposed to the firewalls protecting the J2EE™ environment from the Internet.

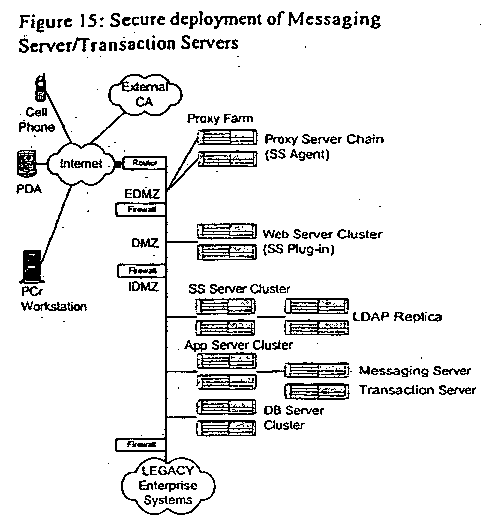

Therefore these basic services are not accessed by any external touch points from the internet and can only be accessed by the code running with the application server in the IDMZ. These nodes are marked by the IDMZ firewalls so that any traffic originating from them are only flowing internally to the enterprises back-end network. The legacy environment may have a receiving end in the form of a messaging gateway that accepts these requests and routes it to the appropriate enterprises application.

### 8.0 CORBA & LDAP Gateways

In certain rare cases the CORBA server that is placed in a J2EE™ environment that integrates with non J2EE™ applications via JavaIDL (interface definition language), might be doing so over the Internet. In such cases a CORBA gatekeeper is deployed at the DMZ.

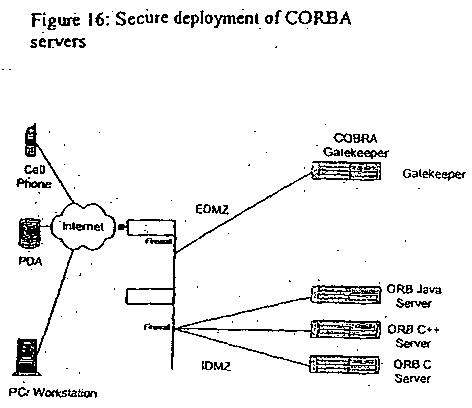

Similarly in certain rare cases where two ldap schemas are accessed by a J2EE™ application and one is residing locally where the other might be residing in a different LAN, and accessed over the Internet a LDAP gateway/router is deployed in the DMZ. This is more common when deploying web services where the ldap proxy is referred to as "UDDI" pointers, which is a ldap proxy that points to public or private UDDI registry for the applications to interact.

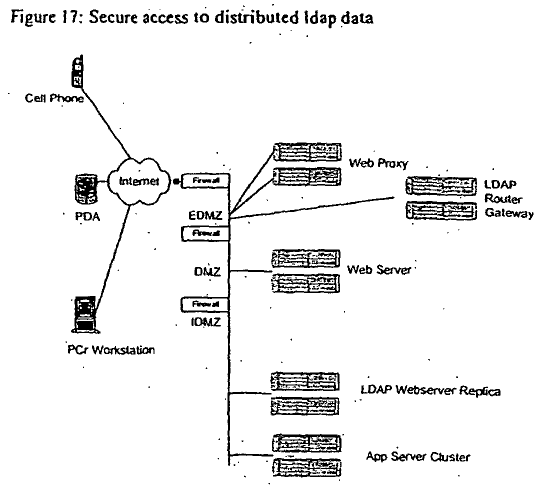

### 9.0 Certificate Server

Certificate Management System, comprising of a primary certificate authority, registration authority and data recovery authority and in some cases a secondary certificate authority, play a very vital role to ensuring the identity of the user community, individual e-business site and their respective partner sites. Certificate Servers are very critical for J2EE and XML based applications, specifically, in the financial space. Component level security is achieved via digital signatures of Java and XML components. Application level security and intrusion detection can be achieved via certified components and through that transaction integrity is maintained. Typically the certificate authority for J2EE applications are outsourced to Certificate Authorities such as Verisign, Entrust, Identrus, etc.

In those unique cases where the CA is hosted in the same environment as the J2EE™ application the Certificate Management Server can be secured through a simple and successful approach of isolating sensitive data and restricting access to the same. The CMS can be functionally partitioned into a RM (registration manager), a CM (certificate manager) and a DM (data store/data recovery manager).

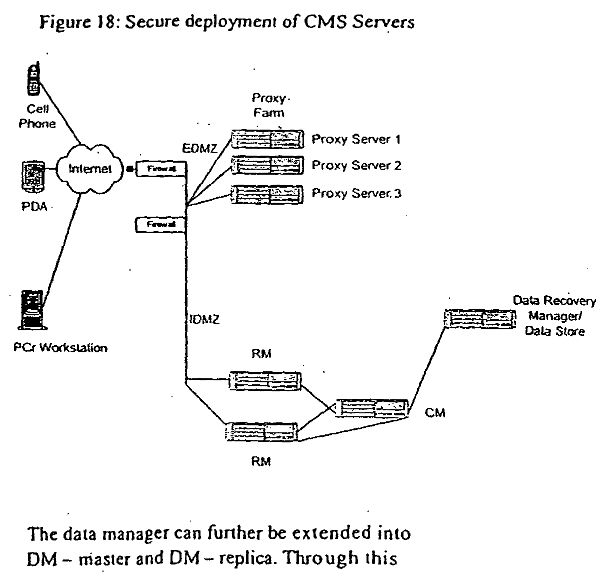

The data manager can further be extended into DM - master and DM - replica. Through this approach the master data store is isolated to a highly secure zone and access to this data is restricted to those nodes that acts as the RM and CM. Even if the data from the DM master is replicated to replicas the only source that can me manipulated or changed is located in the safe zone. Typical deployments of the CM, RM and DM are in the safe zone. The firewall is defined with a rule that states the specific nodes that access the DM and in some cases there could be a separate firewall between the CM and/or RM and the DM.

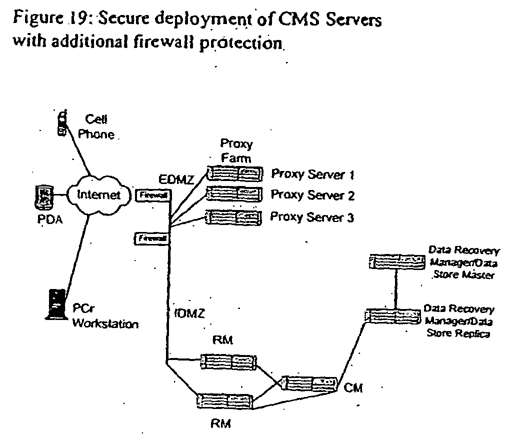

### 10.0 Conclusion

Once all the application infrastructure solutions are identified for J2EE™ technology architecture and their respective deployment within the network is solidified, the final item that needs to be accomplished is to identify the exact protocols between these servers. From one perspective these servers are tuned to perform a specialized task in an efficient manner and therefore they tend to be called a db server appliance, and ldap server appliance, and so on. These boxes or appliances are then locked up (OS tightening and modification of network services) to talk only those protocols that are expected from the specified nodes. For example, if a B2Bi server is talking XML and accepts incoming connections from the app server and send outgoing connections to the B2Bi proxy server, that is all it can do, as depicted in Figure 20.

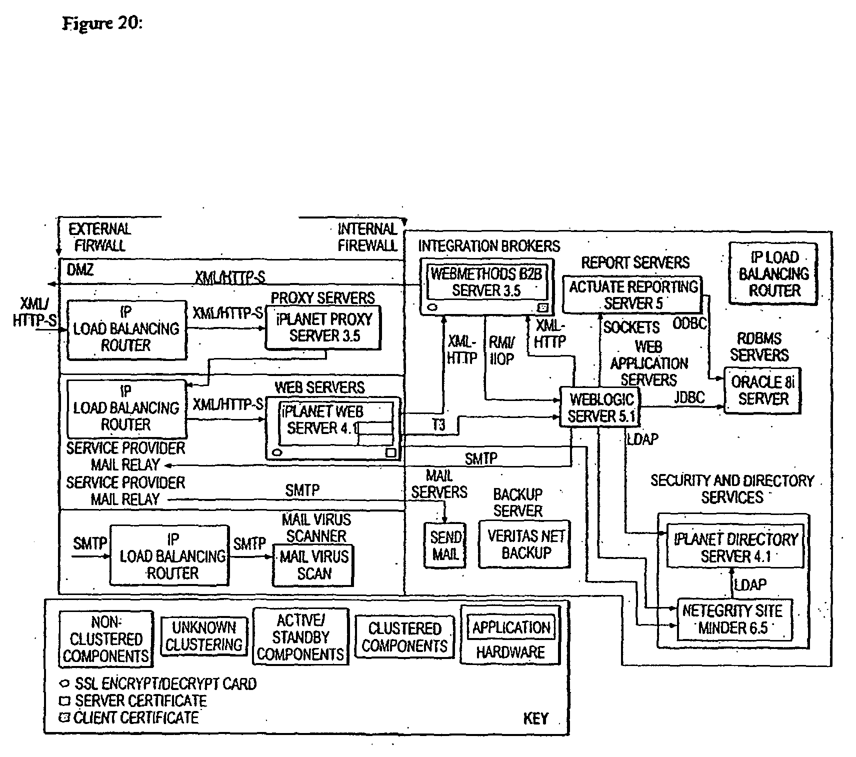

## Claims

1. A method for deploying a container alignment environment including service containers distributed across resources in the environment that provides one or more services to a consumer, the method including:
defining one or more macro-level service patterns representing predetermined resource configurations in the environment;
defining, based on the defined one or more macro-level patterns, one or more micro-level service patterns representing additional resource configurations within a corresponding macro-level service pattern;
defining one or more application service metrics associated with an application service container distributed across the resources;
defining one or more system service metrics associated with a system service container distributed across the resources;
defining one or more container rules that initiate an action based on a detected event by at least one of the application service container and the system service container; and
providing the one or more services to the consumer, such that the one or more container rules are used to maintain a predetermined service level for the one or more services.

2. The method of claim 1, wherein defining the micro-level service patterns is automatically performed by a container alignment engine that is distributed across one or more of the resources included in the environment.

3. The method of claim 1, wherein defining one or more container rules includes:
storing the one or more container rules in a database that is accessed by a container alignment engine configured to align the application and system service containers while providing the one or more services to the consumer.

4. The method of claim 3, wherein the container alignment engine is configured to align the application and system service containers by adjusting at least one of dependencies between the application and system service containers, scaling characteristics, availability characteristics, and security characteristics associated with a resource that hosts at least one of the application and system service containers.

5. The method of claim 1, wherein defining one or more macro-level service patterns includes:
defining the one or more macro-level service patterns based on a type of service provided by one or more of the resources in the environment.

6. The method of claim 1, wherein the application service metrics are associated with one or more application service attributes corresponding to a type of service hosted by the application service container.

7. The method of claim 6, wherein the system service metrics are associated with one or more system service attributes corresponding to one or more of the application service attributes.

8. The method of claim 1, further including:
determining one or more alignment scenarios for the system service and application service containers.

9. The method of claim 8, wherein the one or more alignment scenarios includes at least one of aligning a single application service container to a single system service container, aligning multiple application service containers to a single system service container, aligning a single application service container to multiple system service containers, and aligning multiple application service containers to multiple system service containers.

10. The method of claim 1, wherein defining the one or more container rules includes:
defining the one or more container rules based on at least one of a service level agreement associated with a service and a business goal provided to the environment from an external source.

11. The method of claim 1, wherein the application service and system service containers are service containers associated with an open network architecture.

12. The method of claim 1, wherein the application service container is a service container associated with a Sun ONE architecture.

13. The method of claim 1, wherein the system service container is a service container provided by an operating system.

14. The method of claim 13, wherein the operating system is a Solaris operating system.

15. The method of claim 13, wherein the operating system is deployed on a distributed platform operating in an N1 architecture.

16. A method for aligning service containers in an open network environment, the method comprising:
receiving first event data from an application service container providing application services during runtime of a web service;
receiving second event data from a system service container providing system services during runtime of the web service; and
dynamically aligning the system and application services such that a predetermined service level associated with the web service is met during runtime based on at least one of the first and second event data.

17. The method of claim 16, wherein receiving first event data from the application service container includes:
detecting an application service event associated with a metric corresponding to the application service container; and
reporting the application service event to a repository.

18. The method of claim 16, wherein receiving second event data from the system service container includes:
detecting a system service event associated with a metric corresponding to the system service container; and
reporting the system service event to a repository.

19. The method of claim 16, wherein dynamically aligning the system and application services includes:
applying one or more container rules that direct the system service container to perform a system service based on at least one of the first and second event data.

20. The method of claim 19, wherein applying the one or more container rules includes:
adjusting, by the system service container, a performance of one or more resources supported by the application service container.

21. The method of claim 20, wherein adjusting the performance of the one or more resources includes at least one of changing a processing capability of the one or more resources, changing a storage capability of the one or more resources, changing a network capability of the one or more resources, and changing an input/output capability of the one or more resources.

22. The method of claim 19, wherein applying the one or more container rules includes:
realigning the system service container with one or more alternate application service containers.

23. The method of claim 18, wherein the metric is associated with a threshold level corresponding to a resource attribute defined for the system service container.

24. The method of claim 23, wherein the system service event is associated with the threshold level being compromised during runtime of the web service.

25. The method of claim 16, wherein the predetermined service level corresponds to at least one of scalability, availability, and security service levels provided by at least one of the application and system service containers.

26. The method of claim 25, wherein the scalability service level is associated with at least one of load balancing, data partitioning, data replication, resource replication, and routing services.

27. The method of claim 25, wherein the availability service level is associated with service levels that maximize uptime of one or more resources that provide the web service.

28. The method of claim 25, wherein the availability service level is associated with at least one of replication, failover, fault-tolerant configuration, and multi-casting services.

29. The method of claim 25, wherein the security service level is associated with at least one of firewall, authentication, authorization, messaging, and virus scanning services.

30. The method of claim 16, wherein the application service container supports a resource that provides the web service.

31. The method of claim 30, wherein the resource is one of an application server, calendar server, content server, caching server, messaging server, transaction server, application server, web server, B2B server, EAI server, web proxy server, database server, reporting server, directory server, security server, mail server, mobile application server, portal server, CORBA server, SOAP server, and a media server.

32. The method of claim 16, wherein the application service container is multiple application service containers distributed across multiple resources included in the environment.

33. The method of claim 16, wherein the system service container is distributed across multiple resources included in the environment such that the system service container acts as a virtual computing resource using capabilities associated with the multiple resources to dynamically maintain the predetermined service level.

34. The method of claim 16, wherein dynamically aligning the system and application services is performed by a container alignment engine that is distributed among one or more resources hosting the application and system service containers.

35. A method for dynamically aligning service containers in a system environment including resources that provides a service to a consumer, wherein each resource includes an application service container that provides application services associated with the resource, and the system environment includes a system service container corresponding to a set of the application service containers, the method comprising:
detecting, by an application service container in the set, a first event corresponding to a metric associated with the application service container;
detecting, by the system service container, a second event corresponding to a metric associated with the system service container;
reporting the first and second events to a repository; and
performing an alignment process including the steps of:
accessing the first and second events reported to the repository,
determining a container rule corresponding to at least one of the first and second events, and
applying an action based on the container rule, wherein the action includes aligning a system service provided by the system service container with an application service provided by the application service container to ensure the service meets a predetermined service level to the consumer.

36. A system for aligning service containers in an open net environment that provides a service to a consumer, the system comprising:
a set of resources distributed across the environment and configured to provide the service based on a request from the consumer, wherein each resource in the set includes an application service container that provides application services associated with the service;
a system service container distributed across the set of resources that runs at least one of the application service containers; and
a container alignment engine distributed across the set of resources configured to monitor event data provided by each of the application service containers and system service container and, based on the event data, execute a container rule that aligns the system service container with a second set of the application service containers to meet a predetermined service level associated with the service.

37. A resource included in an environment that provides a web service to a consumer, the resource comprising:
a memory including:
an application service container including one or more components used to provide application services associated with the web service;
a system service container including one or more components used to provide system services associated with the application services; and
a container alignment engine configured to access a repository including event data provided by at least one of the application service container and the system service container, and toexecute a container rule based on the event data that initiates an action that modifies an association between the system service container and the application service container; and
a CPU configured to execute the container alignment engine to align the system service container and the system service container based on the initiated action.

38. The system of claim 37, wherein the container alignment engine is part of a distributed container alignment engine running in at least a second resource included in the environment.

39. The system of claim 37, wherein the system service container is associated with a second system service container included in a memory of a second resource included in the environment.

40. The system of claim 37, wherein the application service container operates with at a second container alignment engine included in a memory of a second resource in the environment.

41. The system of claim 37, wherein the container alignment engine modifies the association between the system and application service containers by removing the association between the application and service containers.

42. The system of claim 41, wherein the container alignment engine associates the system service container with a second application service container included in a second resource.

43. The system of claim 37, wherein the container alignment engine expands the system service container to a second resource to increase a performance characteristic for the web service provided by the system service container through the resources.

44. The system of claim 43, wherein the performance characteristic includes at least one of a processing, storage, data transfer control, and security capability.

45. The method of claim 37, wherein the system service container provides a first level of resource capability using the resource, and the initiated action associates the system service container with a second resource in the environment to change the resource capability to a second level.

46. The system of claim 45, wherein the second level of resource capability includes at least one of an increase in processing capabilities, a decrease in processing capabilities, an increase in storage space, a decrease in storage space, an increase in network communication capability, and a decrease in network communication capability.

47. The system of claim 37, wherein the resource includes a first number of CPUs and wherein the initiated action associates the system service container with a second resource including a second number of CPUs, such that the system service container increases the number of CPUs used to support the application service container.

48. The system of claim 37, wherein the application service container is configured to report the event data to the repository based on a detected trigger associated with a predefined application service metric.

49. The system of claim 48, wherein the system service container is configured to report the event data to the repository based on a detected trigger associated with a predefined system service metric.

50. The system of claim 37, wherein the container rule is updated through a container alignment manager that makes the updated container rule available to the resource during runtime of the web service.

51. A method for receiving a web service from an environment including resources that provide the service, the method performed by a client operated by a user comprising:
requesting the web service from the environment; and
receiving the web service such that a customized service is provided based on context information associated with at least one of the client and user, wherein the environment provides the web service such that a predetermined service level is maintained while the client receives the customized web service by continuously aligning one or more system service containers with one or more application level containers running in one or more resources within the environment.

52. A system for deploying a container alignment environment including service containers distributed across resources in the environment that provides one or more services to a consumer, the system including:
means for defining one or more macro-level service patterns representing predetermined resource configurations in the environment;
means for defining, based on the defined one or more macro-level patterns, one or more micro-level service patterns representing additional resource configurations within a corresponding macro-level service pattern;
means for defining one or more application service metrics associated with an application service container distributed across the resources;
means for defining one or more system service metrics associated with a system service container distributed across the resources;
means for defining one or more container rules that initiate an action based on a detected event by at least one of the application service container and the system service container; and
means for providing the one or more services to the consumer, such that the one or more container rules are used to maintain a predetermined service level for the one or more services.

53. The system of claim 52, wherein the means for defining the micro-level service patterns is automatically performed by a container alignment engine that is distributed across one or more of the resources included in the environment.

54. The system of claim 52, wherein the means for defining one or more container rules includes:
means for storing the one or more container rules in a database that is accessed by a container alignment engine configured to align the application and system service containers while providing the one or more services to the consumer.

55. The system of claim 54, wherein the container alignment engine is configured to align the application and system service containers by adjusting at least one of dependencies between the application and system service containers, scaling characteristics, availability characteristics, and security characteristics associated with a resource that hosts at least one of the application and system service containers.

56. The system of claim 52, wherein the means for defining one or more macro-level service patterns includes:
means for defining the one or more macro-level service patterns based on a type of service provided by one or more of the resources in the environment.

57. The system of claim 52, wherein the application service metrics are associated with one or more application service attributes corresponding to a type of service hosted by the application service container.

58. The system of claim 57, wherein the system service metrics are associated with one or more system service attributes corresponding to one or more of the application service attributes.

59. The system of claim 52, further including:
means for determining one or more alignment scenarios for the system service and application service containers.

60. The system of claim 59, wherein the one or more alignment scenarios includes at least one of aligning a single application service container to a single system service container, aligning multiple application service containers to a single system service container, aligning a single application service container to multiple system service containers, and aligning multiple application service containers to multiple system service containers.

61. The system of claim 52, wherein the means for defining the one or more container rules includes:
means for defining the one or more container rules based on at least one of a service level agreement associated with a service and a business goal provided to the environment from an external source.

62. The system of claim 52, wherein the application service and system service containers are service containers associated with an open network architecture.

63. The system of claim 52, wherein the application service container is a service container associated with a Sun ONE architecture.

64. The system of claim 52, wherein the system service container is a service container provided by an operating system.

65. The system of claim 64, wherein the operating system is a Solaris operating system.

66. The system of claim 64, wherein the operating system is deployed on a distributed platform operating in an N1 architecture.

67. A system for aligning service containers in an open network environment, the system comprising:
means for receiving first event data from an application service container providing application services during runtime of a web service;
means for receiving second event data from a system service container providing system services during runtime of the web service; and
means for dynamically aligning the system and application services such that a predetermined service level associated with the web service is met during runtime based on at least one of the first and second event data.

68. The system of claim 67, wherein the means for receiving first event data from the application service container includes:
means for detecting an application service event associated with a metric corresponding to the application service container; and
means for reporting the application service event to a repository.

69. The system of claim 67, wherein the means for receiving second event data from the system service container includes:
means for detecting a system service event associated with a metric corresponding to the system service container; and
means for reporting the system service event to a repository.

70. The system of claim 67, wherein the means for dynamically aligning the system and application services includes:
means for applying one or more container rules that direct the system service container to perform a system service based on at least one of the first and second event data.

71. The system of claim 70, wherein the means for applying the one or more container rules includes:
means for adjusting, by the system service container, a performance of one or more resources supported by the application service container.

72. The system of claim 71, wherein the means for adjusting the performance of the one or more resources includes at least one of means for changing a processing capability of the one or more resources, means for changing a storage capability of the one or more resources, means for changing a network capability of the one or more resources, and means for changing an input/output capability of the one or more resources.

73. The system of claim 71, wherein the means for applying the one or more container rules includes:
means for realigning the system service container with one or more alternate application service containers.

74. The system of claim 69, wherein the metric is associated with a threshold level corresponding to a resource attribute defined for the system service container.

75. The system of claim 74, wherein the system service event is associated with the threshold level being compromised during runtime of the web service.

76. The system of claim 67, wherein the predetermined service level corresponds to at least one of scalability, availability, and security service levels provided by at least one of the application and system service containers.

77. The system of claim 76, wherein the scalability service level is associated with at least one of load balancing, data partitioning, data replication, resource replication, and routing services.

78. The system of claim 76, wherein the availability service level is associated with service levels that maximize uptime of one or more resources that provide the web service.

79. The system of claim 76, wherein the availability service level is associated with at least one of replication, failover, fault-tolerant configuration, and multi-casting services.

80. The system of claim 76, wherein the security service level is associated with at least one of firewall, authentication, authorization, messaging, and virus scanning services.

81. The system of claim 76, wherein the application service container supports a resource that provides the web service.

82. The system of claim 81, wherein the resource is one of an application server, calendar server, content server, caching server, messaging server, transaction server, application server, web server, B2B server, EAI server, web proxy server, database server, reporting server, directory server, security server, mail server, mobile application server, portal server, CORBA server, SOAP server, and a media server.

83. The system of claim 67, wherein the application service container is multiple application service containers distributed across multiple resources included in the environment.

84. The system of claim 67, wherein the system service container is distributed across multiple resources included in the environment such that the system service container acts as a virtual computing resource using capabilities associated with the multiple resources to dynamically maintain the predetermined service level.

85. The system of claim 67, wherein dynamically aligning the system and application services is performed by a container alignment engine that is distributed among one or more resources hosting the application and system service containers.

86. A system for dynamically aligning service containers in a system environment including resources that provides a service to a consumer, wherein each resource includes an application service container that provides application services associated with the resource, and the system environment includes a system service container corresponding to a set of the application service containers, the system comprising:
means for detecting, by an application service container in the set, a first event corresponding to a metric associated with the application service container;
means for detecting, by the system service container, a second event corresponding to a metric associated with the system service container;
means for reporting the first and second events to a repository; and
means for performing an alignment process including:
means for accessing the first and second events reported to the repository,
means for determining a container rule corresponding to at least one of the first and second events, and
means for applying an action based on the container rule, wherein the action includes aligning a system service provided by the system service container with an application service provided by the application service container to ensure the service meets a predetermined service level to the consumer.

87. A client system operated by a user configured to receive a web service from an environment including resources that provide the service, the client system comprising:
means for requesting the web service from the environment; and
means for receiving the web service such that a customized service is provided based on context information associated with at least one of the client and user, wherein the environment provides the web service such that a predetermined service level is maintained while the client receives the customized web service by continuously aligning one or more system service containers with one or more application level containers running in one or more resources within the environment.

88. A computer-readable medium including instructions for performing a method, when executed by a processor, for deploying a container alignment environment including service containers distributed across resources in the environment that provides one or more services to a consumer, the method including:
defining one or more macro-level service patterns representing predetermined resource configurations in the environment;
defining, based on the defined one or more macro-level patterns, one or more micro-level service patterns representing additional resource configurations within a corresponding macro-level service pattern;
defining one or more application service metrics associated with an application service container distributed across the resources;
defining one or more system service metrics associated with a system service container distributed across the resources;
defining one or more container rules that initiate an action based on a detected event by at least one of the application service container and the system service container; and
providing the one or more services to the consumer, such that the one or more container rules are used to maintain a predetermined service level for the one or more services.

89. A computer-readable medium including instructions for performing a method, when executed by a processor, for aligning service containers in an open network environment, the method comprising:
receiving first event data from an application service container providing application services during runtime of a web service;
receiving second event data from a system service container providing system services during runtime of the web service; and
dynamically aligning the system and application services such that a predetermined service level associated with the web service is met during runtime based on at least one of the first and second event data.

90. A computer-readable medium including instructions for performing a method, when executed by a processor, for receiving a web service from an environment including resources that provide the service, the method performed by a client operated by a user comprising:
requesting the web service from the environment; and
receiving the web service such that a customized service is provided based on context information associated with at least one of the client and user, wherein the environment provides the web service such that a predetermined service level is maintained while the client receives the customized web service by continuously aligning one or more system service containers with one or more application level containers running in one or more resources within the environment.
